(19) Europäisches Patentamt / European Patent Office / Office européen des brevets

(11) **EP 3 507 292 B1**

(12) **FASCICULE DE BREVET EUROPEEN**

(45) Date de publication et mention de la délivrance du brevet:
**09.12.2020 Bulletin 2020/50**

(21) Numéro de dépôt: **17746145.6**

(22) Date de dépôt: **07.08.2017**

(51) Int Cl.:
***C07F 7/18*** *(2006.01)*

(86) Numéro de dépôt international:
**PCT/EP2017/069914**

(87) Numéro de publication internationale:
**WO 2018/041543 (08.03.2018 Gazette 2018/10)**

(54) **UTILISATION DE FORMIATES SILYLÉS COMME ÉQUIVALENTS D'HYDROSILANES**

VERWENDUNG VON SILYLIERTEN FORMIATEN ALS HYDROSILANÄQUIVALENTEN

USE OF SILYLATED FORMIATES AS HYDROSILANE EQUIVALENTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.08.2016 FR 1658098**

(43) Date de publication de la demande:
**10.07.2019 Bulletin 2019/28**

(73) Titulaire: **Commissariat à l'Énergie Atomique et aux Énergies Alternatives**
**75015 Paris (FR)**

(72) Inventeurs:
- **CHAUVIER, Clément**
  **75015 Paris (FR)**
- **CANTAT, Thibault**
  **92130 Issy Les Moulineaux (FR)**
- **GODOU, Timothé**
  **91400 Orsay (FR)**

(74) Mandataire: **Gevers & Orès**
**Immeuble le Palatin 2**
**3 Cours du Triangle**
**CS 80165**
**92939 Paris La Défense Cedex (FR)**

(56) Documents cités:
- **MARTIN OESTREICH: "Transfer Hydrosilylation", ANGEWANDTE CHEMIE INTERNATIONAL EDITION, vol. 55, no. 2, 24 novembre 2015 (2015-11-24), pages 494-499, XP055346270, DE ISSN: 1433-7851, DOI: 10.1002/anie.201508879**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 507 292 B1

Printed by Jouve, 75001 PARIS (FR)

## Description

La présente invention concerne un procédé de préparation de composés organiques de formule (I) par réaction entre un formiate silylé de formule (II) et un composé organique en présence d'un catalyseur et éventuellement d'un additif.

L'invention concerne également l'utilisation du procédé de préparation de composés organiques de formule (I) pour la préparation de réactifs pour la chimie fine et pour la chimie lourde ainsi que dans la fabrication de vitamines, de produits pharmaceutiques, de colles, de fibres acryliques, de cuirs synthétiques, de pesticides.

Les hydrosilanes, c'est-à-dire les composés organiques comportant au moins une liaison silicium-hydrogène (Si-H) sont largement utilisés dans divers secteurs industriels pour la réduction, la fonctionnalisation et/ou la protection de fonctions organiques insaturées (liaisons C=C ; C=O ; C=N...) par hydrosilylation. Cette classe de réaction chimique possède en effet l'avantage d'induire, en une seule étape, le transfert d'un hydrure ($H^-$) et du silicium à un substrat organique. Cette dernière caractéristique est mise à profit notamment dans l'industrie des silicones pour la synthèse de silanes fonctionnalisés, la synthèse d'élastomères ou encore pour le couplage de silanes ou de siloxanes à des polymères organiques par hydrosilylation de fonctions alcène. De plus, l'hydrosilylation de liaisons C=O est une méthode courante de chimie organique pour la réduction des aldéhydes et des cétones.

Cependant, les procédés industriels employés à l'heure actuelle pour la préparation des hydrosilanes reposent exclusivement sur des voies de synthèse très énergivores impliquant une manipulation du degré d'oxydation du silicium (L. Rösch, P. John, R. Reitmeier, in Ullmann's Encyclopedia of Industrial Chemistry, Wiley-VCH Verlag GmbH & Co. KGaA, 2000). La Figure 1 représente ainsi les principales voies d'accès aux hydrosilanes et chlorosilanes dits « de base » comme, par exemple, le trichlorosilane ($HSiCl_3$) et divers méthylchlorosilanes ($Me_xSiCl_{4-x;}$ $MeHSiCl_2$ ou $Me_2HSiCl$). La préparation de ces derniers débute par une même étape, la réduction carbothermique de la silice $SiO_2$ ou de silicates $SiO_4^{4-}$ (sources naturelles de silicium) à très haute température (1900°C). La réduction carbothermique de la silice $SiO_2$ ou de silicates $SiO_4^{4-}$ fait passer le degré d'oxydation formel du silicium de +IV à 0 et ceci justifie les conditions très dures employées pour la synthèse du silicium métal ($Si^{(0)}$). Ce dernier est ensuite réoxydé en présence de chlorométhane ($CH_3Cl$) par le procédé Müller-Rochow à des températures de l'ordre de 200 à 300°C ou par l'acide chlorhydrique (HCl) à 300°C pour donner le trichlorosilane. Il apparaît ainsi que l'obtention des silanes de base, à partir desquels tous les dérivés organiques du silicium sont obtenus par fonctionnalisation (étape 3 de la Figure 1), repose sur une séquence réactionnelle énergétiquement défavorable de par la manipulation redox du silicium selon : Si(+IV) $\rightarrow$ Si(0) $\rightarrow$ Si(+IV).

D'après ce qui précède, il est évident que des procédés neutres d'un point de vue redox pour le silicium dans lesquels le degré d'oxydation +IV de silicium est maintenu et qui ne seraient pas basés sur la réduction carbothermique de la silice mais qui permettraient d'accéder aux hydrosilanes à partir de celle-ci, amélioreraient grandement les voies traditionnelles précitées. Des recherches sont actuellement menées en ce sens non pas pour l'accès aux hydrosilanes mais aux chlorosilanes et plus précisément à $SiCl_4$ directement à partir de la silice. En effet, il est connu depuis les années 50 que la silice $SiO_2$ peut être fonctionnalisée directement en présence d'alcool et de bases pour donner des orthosilicates de formule $Si(OR)_4$ qui sont très usités dans la chimie sol-gel (a) A. Boudin, G. Cerveau, C. Chuit, R. J. P. Corriu, C. Reye, Organometallics 1988, 7, 1165-1171; b) R. M. Laine, K. Y. Blohowiak, T. R. Robinson, M. L. Hoppe, P. Nardi, J. Kampf, J. Uhm, Nature 1991, 353, 642-644; c) L. N. Lewis, F. J. Schattenmann, T. M. Jordan, J. C. Carnahan, W. P. Flanagan, R. J. Wroczynski, J. P. Lemmon, J. M. Anostario, M. A. Othon, Inorganic Chemistry 2002, 41, 2608-2615). Il a également été montré récemment que ces silicates (notamment $Si(OCH_3)_4$) peuvent être convertis avec de très bon rendements en tétrachlorosilane $SiCl_4$ en présence d'acide chlorhydrique (J. M. Roberts, D. V. Eldred, D. E. Katsoulis, Industrial & Engineering Chemistry Research 2016, 55, 1813-1818). A l'instar du trichlorosilane $HSiCl_3$, le tétrachlorosilane peut ensuite subir une ou plusieurs fonctionnalisations avec des réactifs de Grignard pour donner les chlorosilanes de spécialité ($R_xSiCl_{4-x}$). Il est ainsi possible d'obtenir les chlorosilanes à partir de la silice sans avoir recours à une étape couteuse de réduction.

Néanmoins, la formation d'un hydrosilane à partir d'un chlorosilane est également une étape coûteuse en énergie puisqu'elle est basée sur l'utilisation d'hydrures du groupe principal tels que $LIAlH_4$ (H. Gilman, R. K. Ingham, A. G. Smith, The Journal of Organic Chemistry 1953, 18, 1743-1749). Or, celui-ci est obtenu par l'intermédiaire de procédés énergivores, le plus souvent à haute température à partir du trichlorure d'aluminium $AlCl_3$ et de l'hydrure alcalin LiH, lui-même produit industriellement par réaction entre le lithium métallique fondu et de l'hydrogène moléculaire $H_2$ à hautes températures et pressions. Par ailleurs, la très grande réactivité de $LIAlH_4$ en présence d'eau et la génération de sels d'aluminium en quantité stœchiométrique font de celui-ci un mauvais candidat pour une utilisation à grande échelle.

M. Oestreich (Angewandte Chemie International Edition, 2015, vol. 55, no. 2, pages 494-499) a décrit divers cyclohexa-1,4-dienes (1,4-CHDN) substitués utilisés dans des hydrosilylations par transfert (par voie radicalaire et par voie ionique). Dans ces réactions d'hydrosilylation par transfert, les 1,4-CHDN jouent le rôle de précurseurs d'hydrosilanes.

Il n'existe donc pas à l'heure actuelle de procédés satisfaisants d'un point de vue énergétique et environnemental

pour la préparation des hydrosilanes indispensables aux réactions d'hydrosilylation. La Figure 2 résume ainsi les problèmes précités à savoir le passage par le silicium métal (section 1), ou l'alternative neutre qui nécessite l'utilisation de $LIAlH_4$ (section 2).

Une solution aux problèmes rencontrés pour la préparation des hydrosilanes peut consister à remplacer les hydrosilanes par des composés « équivalents d'hydrosilane » capables de transférer, en une seule étape, un hydrure ($H^-$) et du silicium à un composé organique saturé ou insaturé, au moins aussi efficacement que les hydrosilanes, et dont la préparation est simple, non polluant et économique notamment d'un point de vue énergétique et environmental.

L'utilisation des composés équivalents d'hydrosilane est particulièrement avantageuse car elle :

a) évite les manipulations redox sur le silicium pour former les Si-H et Si-Cl, et surtout
b) évite l'utilisation d'hydrures tels que $LiAlH_4$ pour former les Si-H à partir des Si-Cl.

Des équivalents d'hydrosilanes, notamment des dérivés silylés du cyclohexa-1,4-diène (1,4-CHDN), dans des réactions d'hydrosilylation par transfert et de couplage déshydrogénant par transfert ont été rapportés.

1. Hydrosilylation par transfert radicalaire d'alcènes, d'alcynes et de carbonyles.

Historiquement, le terme d'hydrosilylation par transfert (*transfer hydrosilylation* en anglais) a été employé pour la première fois par Studer & coll. à partir du début des années 2000 dans le cadre d'études portant sur le remplacement des hydrures d'étain toxiques tel que l'hydrure de tributylétain $Bu_3SnH$, en chimie radicalaire (S. Amrein, A. Timmermann, A. Studer, Organic Letters 2001, 3, 2357-2360). Plus précisément, ce groupe de recherche a pu montrer que des cyclohexa-1,4-diène (1,4-CHDN) substitués en position 2 par des groupements silyles permettent d'effectuer des réactions de déshalogénation, de désoxygénation ou encore de cyclisation radicalaire qui sont typiques des hydrures d'étain. Au cours de ces études, le groupe de recherche a également mis au jour un processus inattendu : en présence d'accepteurs de radicaux tels qu'un alcène ou un alcyne et d'un initiateur (par exemple l'AIBN, 2,2'-Azobis(2-methylpropionitrile)), les produits obtenus par réaction avec les 1,4-CHDN silylés sont des produits d'hydrosilylation radicalaire. N'ayant pas utilisé d'hydrosilane, le processus est ainsi appelé hydrosilylation par transfert. L'intérêt de cette méthodologie réside en ce qu'elle permet de contourner un problème bien connu en chimie radicalaire d'hydrosilylation, à savoir, la difficulté de l'activation de la liaison Si-H dont l'énergie de dissociation de liaison ou BDE est de 90 $kcal.mol^{-1}$. La liaison Si-H est en effet remplacée par le groupement 1,4-CHDN qui possède des hydrogènes facilement activables présentant une énergie de dissociation de liaison ou BDE C-H de 78 $kcal.mol^{-1}$ en position 2.

L'hydrosilylation par transfert radicalaire a par la suite été explorée avec un grand nombre de substrats différents comme illustrée en Figure 3 (S. Amrein, A. Studer, Helvetica Chimica Acta 2002, 85, 3559-3574).

Par ailleurs, l'hydrosilylation par transfert a pu être combiné à des cyclisations radicalaires (S. Amrein, A. Timmermann, A. Studer, Organic Letters 2001, 3, 2357-2360) et ces réactions permettent spécifiquement l'utilisation de 1,4-CHDN portant des groupements silylés non encombrés tels que le triméthylsilyle (TMS) dans **9.**

Il a enfin été montré que des aldéhydes non aromatiques tels que le cyclohexanal **(11)** ou encore des cétones telles que la cyclohexanone peuvent être réduits par les 1,4-CHDN dans des conditions relativement dures.

2. Hydrosilylation par transfert ionique d'alcènes, d'alcynes, de carbonyles et d'imines.

Par analogie avec les travaux précités, le groupe de Oestreich a récemment développé une chimie ionique d'hydrosilylation basés sur les mêmes 1,4-CHDN silylés. Contrairement à Studer & coll., les travaux d'Oestreich & coll. sont réellement centrés sur la capacité des 1,4-CHDN à jouer le rôle de précurseurs d'hydrosilanes notamment gazeux tels que le triméthylsilane ($Me_3SiH$) (A. Simonneau, M. Oestreich, Angewandte Chemie Int. Ed. 2013, 52, 11905-11907) ou le silane ($SiH_4$) (A. Simonneau, M. Oestreich, Nature chemistry 2015, 7, 816-822). Ceci se comprend bien d'un point de vue mécanistique car le procédé d'Oestreich implique la libération des hydrosilanes *in situ* dans le milieu réactionnel à partir des 1,4-CHDN silylés. Ce comportement des 1,4-CHDN silylés n'est pas observé dans la chimie radicalaire de Studer & coll. Cet aspect de la chimie d'Oestreich, à savoir, la libération des hydrosilanes gazeux à partir de précurseurs liquides ou solides a notamment fait l'objet de la demande internationale WO 2015036309.

Dans Angewandte Chemie Int. Ed. 2013, 52, 11905-11907, Oestreich & coll. ont montré que divers 1,4-CHDN substitués par des groupements triméthylsilyle **(13),** triéthylsilyle **(14)** ou encore triisopropylsilyle **(15)** sont capables de libérer les hydrosilanes correspondant en présence d'un catalyseur acide de Lewis très fort, le tris(pentafluorophényl)borane ($B(C_6F_5)_3$ ou BCF). Les auteurs ont ainsi pu montrer que **13,** un liquide dans les conditions normales de pression et température (CNPT), entraîne la libération du silane gazeux $Me_3SiH$ ainsi que du benzène. La même expérience conduite en rajoutant un alcène dans le milieu réactionnel, par exemple le 1-méthylcyclohexène **16** conduit au produit d'hydrosilation **17** (Figure 4). Le précurseur de triethylsilane, $Et_3SiH$ **(14)** permet aussi l'hydrosilylation par transfert d'alcènes, mais les réactions sont plus lentes qu'avec **13.** Le 1,4-CHDN **15** dans lequel le groupe silylé est très encombré

ne peut transférer ce dernier à un substrat organique et seule la libération du silane en solution est observée.

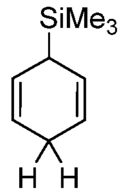
13

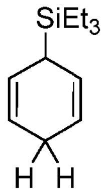
14

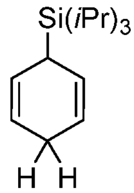
15

Outre les alcènes, le groupe d'Oestreich a également montré dans une publication récente que des alcynes non terminaux tels que le diphénylacétylène **(18),** des cétones (acétophénone **20)** ou encore des imines encombrées **(22)** pouvaient subir une hydrosilylation par transfert avec **13** comme donneur d'hydrosilane (S. Keess, A. Simonneau, M. Oestreich, Organometallics 2015, 34, 790-799). Du fait des propriétés coordinantes des cétones ou des imines (complexation $\sigma$ avec le catalyseur acide de Lewis), les réactions avec celles-ci se font dans le benzène, à plus haute température que pour les alcènes et les alcynes (Figure 5).

3. Couplage déshydrogénant par transfert : synthèse d'alcool silylés.

Le catalyseur employé dans les réactions d'hydrosilylation par transfert, catalyse en réalité deux réactions successives que sont la libération de l'hydrosilane à partir des 1,4-CHDN silylés puis l'hydrosilylation directe de fonctions insaturées. En se basant sur ce schéma mécanistique, le groupe d'Oestreich a ainsi pu montrer que d'autres réactions typiques des hydrosilanes et catalysées par $B(C_6F_5)_3$ pouvait être effectuées en transfert à partir du précurseur silylé **13** avec la génération d'un gaz comme unique sous-produit de réaction.

En utilisant **13** comme précurseur de l'hydrosilane gazeux $Me_3SiH$, en présence du catalyseur boré $B(C_6F_5)_3$, l'octanol **(24)** est silylé avec un rendement de 89% et seuls du benzène et de l'hydrogène sont obtenus comme sous-produits de la réaction (A. Simonneau, J. Friebel, M. Oestreich, European Journal of Organic Chemistry 2014, 2014, 2077-2083). Toutefois, dans ce protocole, les alcools sont en fait ajoutés après le catalyseur et le précurseur d'hydrosilane de manière à minimiser la désactivation du catalyseur par complexation (forte) avec l'alcool et permettre ainsi la libération de l'hydrosilane avant l'ajout de l'alcool (Figure 6).

Toutes les réactions de transfert d'hydrosilane mentionnées ci-dessus reposent sur l'utilisation des 1,4-CHDN silylés. La synthèse de ces derniers, quel que soit leur degré de substitution, s'effectue en premier lieu par déprotonation des 1,4-CHDN en position bis-allylique (position 2) par une base forte (*p*Ka > 40) telle que le *tert*-butyllithium (*t*-BuLi) ou le *sec*-butyllithium (*s*-BuLi) en présence d'un additif comme la TMEDA (tétraméthyléthylènediamine) à basse température (typiquement -78°C). L'organolithien obtenu dans cette étape est ensuite mis en réaction avec un chlorosilane (par exemple le chlorotriméthysilane) pour donner les 1,4-CHDN silylés tels que **13.** D'autres étapes peuvent être nécessaires si des 1,4-CHDN silylés davantage substitués sont désirés.

Par ailleurs, toutes les réactions de transfert libèrent des composés aromatiques comme le benzène lorsque **13** est employé, le toluène (à partir de **9** ; Figure 3) ou le diméthoxytoluène (à partir de **1** ; Figure 3). Outre le problème de toxicité que peut représenter la manipulation de ces composés (par exemple, le benzène est un cancérogène avéré), leur recyclage en 1,4-CHDN par rupture de leur aromaticité requiert l'utilisation de réactifs au contenu énergétique très élevé. La réaction de Birch est en effet la méthode de choix pour effectuer ce type de transformation, mais celle-ci repose sur l'utilisation de métaux alcalins tels que le sodium, dans l'ammoniaque liquide à basse température et ceci pose à la fois des problèmes de sécurité (les métaux alcalins sont très réactifs, notamment avec l'eau) et de coûts.

Cet état de l'art révèle que l'ensemble des systèmes connus à l'heure actuelle pour promouvoir des réactions de transfert d'hydrosilanes (en hydrosilylation ionique ou radicalaire et en couplage déshydrogénant) repose sur les cyclohexa-1,4-diènes silylés. Bien que ces derniers puissent être engagés dans des réactions avec une grande variété de substrats organiques (alcènes, alcynes, carbonyles, alcools...) et peuvent servir ainsi d'équivalent synthétique d'hydrosilanes, leurs préparations à partir des composés aromatiques correspondant nécessitent des procédés coûteux en énergie. A l'instar du recyclage évoqué dans le paragraphe précédent, les 1,4-CHDN précurseurs des 1,4-CHDN silylés sont en effet obtenus dans les mêmes conditions dures à partir de composés aromatiques issus de la pétrochimie. Ces réactions de transfert de silanes sont donc exclusivement basées sur des ressources fossiles limitées et sujettes à des fluctuations économiques. En conséquence, l'utilisation des 1,4-CHDN silylés permet bien de s'affranchir des manipulations redox du silicium puisque ceux-ci sont obtenus à partir des chlorosilanes, mais ne fait que déplacer le problème de l'utilisation de réactifs énergivores. En effet, au lieu d'utiliser $LlAlH_4$, Studer et Oestreich se basent sur les cyclohexa-1,4-diènes fossiles et par voie de conséquence, également hauts en énergie. Ces constatations démontrent que les 1,4-CHDN silylés ne peuvent constituer une alternative satisfaisante et durable d'un point de vue énergétique et environnemental, aux hydrosilanes indispensables aux réactions d'hydrosilylation.

Il existe donc un réel besoin de composés équivalents d'hydrosilane capables de transférer, en une seule étape, un hydrure ($H^-$) et du silicium à un composé organique saturé ou insaturé, au moins aussi efficacement que les hydrosilanes, et dont la préparation est simple et économique notamment d'un point de vue énergétique et environmental.

Il existe également un réel besoin de composés comme équivalents d'hydrosilanes comme définis ci-dessus, pouvant remplacer les hydrosilanes dans des réactions

- d'hydrosilylation de fonctions organiques insaturées telles que les alcènes, les alcynes, les nitriles, les aldéhydes, les cétones, les imines, les acides carboxyliques, les amides, les esters, et
- de couplage déshydrogénant, par exemple, avec un alcool ou une amine.

Il existe, en outre, un réel besoin de composés tels que définis ci-dessus comme équivalents d'hydrosilanes et pouvant les remplacer, lesdits composés

- ayant un contenu énergétique moins élevé que les réactifs énergivores de l'état de la technique, et/ou
- étant renouvelables et/ou durables et/ou plus économiques et/ou moins polluants que les réactifs de l'état de la technique ; et/ou
- étant peu chers et faciles à manipuler ; et/ou
- pouvant être préparés et utilisés dans des conditions plus douces.

La présente invention a précisément pour but de répondre à ces besoins en fournissant un procédé de préparation de composés de formule (I)

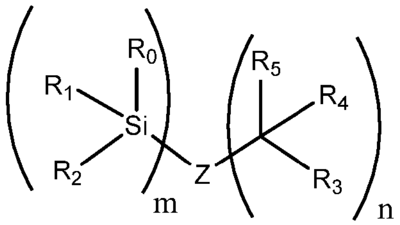

(I)

dans laquelle

- $R_0$, $R_1$ et $R_2$, indépendamment les uns des autres, sont choisis dans le groupe formé par un groupe alcoxy, un groupe aryloxy, un groupe alkyle, un groupe carboxyle, un groupe alcényle, un groupe alcynyle, un groupe aryle, un groupe hétéroaryle, un groupe hétérocyclique, un groupe silyle, un groupe siloxy, lesdits groupes alkyle, alcényle, alcynyle, aryle, hétéroaryle, alcoxy, aryloxy, silyle, siloxy ou hétérocyclique étant éventuellement substitués, ou $R_0$ et $R_1$ ensemble avec l'atome de silicium auquel ils sont liés, forment un hétéorcycle silylé éventuellement substitué et $R_2$ est tel que défini ci-dessus ;

- n=0 ou 1 ;

- m=0 ou 1 ;

- lorsque n=0 et m=1, Z est choisi dans le groupe formé par $-NR_3R_4$ avec

  - $R_3$ et $R_4$ indépendamment l'un de l'autre, choisis dans le groupe formé par un atome d'hydrogène, un groupe alkyle, un groupe halogénoalkyle, un groupe alcényle, un groupe alcynyle, un groupe silyle, un groupe aryle, un groupe hétéroaryle, un groupe hétérocyclique, lesdits groupes alkyle, alcényle, alcynyle, aryle, hétéroaryle, silyle, ou hétérocyclique étant éventuellement substitués, ou
  - $R_3$ et $R_4$, pris ensemble avec l'atome d'azote auquel ils sont liés, forment un hétérocycle éventuellement substitué ;

- lorsque n=m=1,

  - $R_3$, $R_4$ et $R_5$, indépendamment les uns des autres, sont choisis dans le groupe formé par un atome d'hydrogène, un groupe alkyle, un groupe halogénoalkyle, un groupe alcényle, un groupe alcényle cyclique, un groupe alcynyle, un groupe silyle, un groupe aryle, un groupe hétéroaryle, un groupe hétérocyclique, lesdits groupes alkyle, alcényle, alcynyle, aryle, hétéroaryle, silyle, ou hétérocyclique étant éventuellement substitués, ou

- $R_3$, $R_4$ et $R_5$ ensemble avec l'atome de carbone auquel ils sont liés, forment un aryle éventuellement substitué, ou
- $R_3$ et $R_4$ ensemble avec l'atome de carbone auquel ils sont liés, forment un alkyle cyclique éventuellement substitué et $R_5$ est tel que défini ci-dessus, ou
- $R_3$ et $R_4$ ensemble avec l'atome de carbone auquel ils sont liés, forment un alcényle cyclique éventuellement substitué et $R_5$ est tel que défini ci-dessus, ou
- $R_3$, $R_4$ et $R_5$ ensemble avec l'atome de carbone auquel ils sont liés, forment un alcényle cyclique, et
- Z est choisi dans le groupe formé par

  ◦ X ou Y tels que définis ci-dessous,
  ◦ Z et $R_5$ ensemble avec l'atome de carbone auquel ils sont liés, forment un groupe

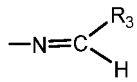

avec $R_3$ tel que défini ci-dessus, ou

  ◦ Z et $R_5$ ensemble avec l'atome de carbone auquel ils sont liés, forment un groupe

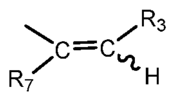

avec $R_7$ étant choisi dans le groupe formé par un atome d'hydrogène, un groupe alkyle ou un groupe aryle, lesdits groupes alkyle et aryle étant éventuellement substitués, et $R_3$ étant tel que définis ci-dessus ;

- lorsque n=1 et m=0, Z est choisi dans le groupe formé par $-NR_9R_{10}$ avec

- $R_9$ et $R_{10}$ représentent, indépendamment l'un de l'autre, un atome d'hydrogène, un groupe alkyle, un groupe alcényle, un groupe alcynyle, un groupe aryle, un groupe hétéroaryle, un groupe hétérocyclique, un groupe silyle, lesdits groupes alkyle, alcényle, alcynyle, aryle, hétéroaryle, hétérocyclique, silyle étant éventuellement substitués, ou
- $R_9$ et $R_{10}$, pris ensemble avec l'atome d'azote auquel ils sont liés, forment un hétérocycle éventuellement substitué, et
- $R_3$, $R_4$ et $R_5$ tels que définis ci-dessus ;

caractérisé en ce que l'on fait réagir un formiate silylé de formule (II)

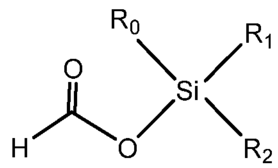

(II)

dans laquelle $R_0$, $R_1$ et $R_2$ sont tels que définis ci-dessus, avec un composé organique de formule (III), (IV), (V), (VI), (VII), (VIII) ou (IX)

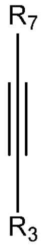 ou 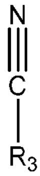 ou 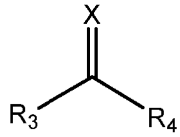 ou 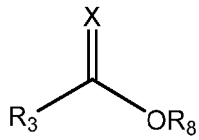

(III) (IV) (V) (VI)

ou

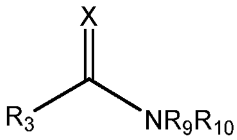 ou 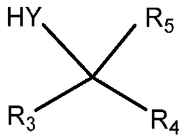 ou 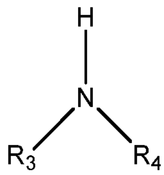

(VII) (VIII) (IX)

dans laquelle

- $R_3$, $R_4$, $R_5$ $R_9$ et $R_{10}$ sont tels que définis ci-dessus ;
- $R_7$ est choisi dans le groupe formé par un atome d'hydrogène, un groupe alkyle, ou un groupe aryle, lesdits groupes alkyle et aryle étant éventuellement substitués ;
- $R_8$ est choisi dans le groupe formé par un atome d'hydrogène, un groupe alkyle, un groupe alcényle, un groupe alcynyle, un groupe aryle, un groupe hétéroaryle, un groupe hétérocyclique, lesdits groupes alkyle, alcényle, alcynyle, aryle, hétéroaryle, hétérocyclique étant éventuellement substitués ;
- X est choisi dans le groupe formé par
  - un atome d'oxygène,
  - un groupe $CR_aR_b$ avec $R_a$ et $R_b$ représentant, indépendamment l'un de l'autre, un atome d'hydrogène, un groupe alkyle, un groupe aryle, un groupe hétéroaryle, un groupe silyle, ou un groupe hétérocyclique, lesdits groupes alkyle, aryle, hétéroaryle, silyle, hétérocyclique étant éventuellement substitués, ou
  - un groupe $NR_6$ avec $R_6$ représentant un atome d'hydrogène, un groupe alkyle, un groupe silyle, un groupe aryle, lesdits groupes alkyle, silyle ou aryle étant éventuellement substitués ;
- Y est choisi dans un groupe formé par un atome d'oxygène ou un atome de soufre ;

en présence d'un catalyseur et éventuellement d'un additif.

L'utilisation des formiates silylés de formule (II) en replacement des hydrosilanes dans diverses réactions chimiques connues pour être caractéristiques de ces derniers comme par exemple l'hydrosilylation et/ou le couplage déshydrogénant, a pour conséquence directe la disparition des problèmes liés à la préparation des hydrosilanes notamment les manipulations redox sur le silicium pour former les Si-H et Si-Cl et l'utilisation d'hydrures tels que $LiAlH_4$ pour former les Si-H à partir des Si-Cl. En effet, les formiates silylés peuvent être obtenus par une chaîne de réactions neutre d'un point de vue redox (Si (+IV) maintenu) à partir des chlorosilanes. La synthèse des formiates silylés se fait en l'absence de $LIAlH_4$ et très simplement à partir de chlorosilanes et d'acide formique ($HCO_2H$) qui est une matière première renouvelable, en présence d'un catalyseur et éventuellement d'une base comme schématisée en Figure 7.

L'acide formique, contrairement à $LiAlH_4$, est formé dans des conditions douces par électro-réduction du $CO_2$ à $2e^-$ (A. S. Agarwal, Y. Zhai, D. Hill, N. Sridhar, ChemSusChem 2011, 4, 1301-1310) ou par hydrogénation catalytique du $CO_2$, ce qui a pour double conséquence de réintégrer le $CO_2$ dans une chaîne de valeur ajoutée et de diminuer grandement la demande énergétique du présent procédé en comparaison avec les procédés utilisant $LiAlH_4$.

Les formiates silylés peuvent remplacer les hydrosilanes dans des réactions d'hydrosilylation de fonctions

insaturées et/ou encore dans des couplages déshydrogénants, par exemple entre un alcool et un silane. Ces réactions avec les différentes classes d'amides sont illustrées dans la Figure 9. D'un point de vue terminologique, les réactions avec les formiates silylés peuvent être considérées comme une « hydrosilylation par transfert » ou encore un « couplage déshydrogénant par transfert » pour montrer que les produits d'hydrosilylation ou de couplage sont formés sans utilisation formelle d'hydrosilanes. Ce vocabulaire est en accord avec la distinction, bien connue de l'homme du métier, entre hydrogénation (utilisation d'hydrogène H2) et hydrogénation par transfert (utilisation de donneurs d'hydrogène à la place de H2). Dans le procédé de l'invention, les formiates silylés peuvent donc être considérés comme des « donneurs d'hydrosilane ».

Ainsi, les formiates silylés de formule (II) sont utilisés comme équivalents d'hydrosilanes dans des réactions d'hydrosilylation de fonctions organiques insaturées et/ou de couplage déshydrogénant. Comme indiquées précédemment, les formiates silylés peuvent être obtenus par réaction entre l'acide formique, généré par hydrogénation ou par électro-réduction à $2e^-$ du $CO_2$ et un chlorosilane préparé à partir de la silice par une séquence réactionnelle neutre d'un point de vue redox pour le silicium.

Le procédé de l'invention permet donc de rendre la chimie des hydrosilanes plus économique et moins polluante en substituant ces derniers par des équivalents renouvelables sans altérer la gamme de produits typiquement accessibles à partir des hydrosilanes. Certains avantages du procédé de l'invention sont les suivants :

- Le présent procédé se base sur l'acide formique plutôt que sur des composés à haut contenu énergétique tel que les hydrures d'aluminium déjà mentionnés comme sources d'hydrures. Ceci a pour conséquence de diminuer grandement la demande énergétique pour effectuer des réactions typiques des hydrosilanes, et d'intégrer le $CO_2$, déchet ultime de tout procédé chimique, dans une chaîne de valeur ajoutée. A *contrario,* les 1,4-CHDN silylés sont obtenus dans des conditions dures (c.f. réaction de Birch) à partir de composés aromatiques issus de la pétrochimie.
- La synthèse des formiates silylé est d'une grande simplicité opérationnelle puisqu'il s'agit de mélanger le chlorosilane avec l'acide formique, éventuellement en présence d'une base pour piéger l'acide chlorhydrique (HCl) libéré par la réaction. La synthèse des 1,4-CHDN silylés requiert l'utilisation de bases très fortes comme le s-BuLi dans des conditions cryogéniques (-78°C), ce qui implique des précautions particulières. Par ailleurs, l'acide formique étant un liquide non toxique en solution diluée (concentration inférieure à 85 % massique dans l'eau), il est de fait un réactif bénin contrairement aux hydrures d'aluminium ou à certains dérivés aromatiques précurseurs des 1,4-CHDN.
- Le $CO_2$ libéré dans les réactions de transfert à partir des formiates silylés est recyclable par les procédés d'électro-réduction ou d'hydrogénation du $CO_2$ précités.
- Dans les réactions par transfert ioniques développées par Oestreich & coll., les hydrosilanes sont libérés dans le milieu réactionnel à partir des 1,4-CHDN silylés et du catalyseur $B(C_6F_5)_3$, même dans les cas où le transfert ne s'effectue pas. Ceci peut poser des problèmes de sécurité lorsque les hydrosilanes en question sont toxiques et/ou gazeux comme le triméthylsilane ($Me_3SiH$). Ce comportement n'est pas observé avec les formiates silylés car les hydrosilanes ne sont jamais libérés directement dans le milieu. Il s'agit alors réellement d'un transfert d'hydrosilane.
- Dans le couplage déshydrogénant par transfert mis au point par Oestreich, les alcools doivent être rajoutés plus de 30 minutes après le catalyseur et le 1,4-CHDN pour éviter la désactivation du catalyseur. Cette démarche rajoute une lourdeur expérimentale qui ne sera pas observée avec le procédé de l'invention qui met en œuvre les formiates silylés.
- Dans l'hydrosilylation radicalaire par transfert développée par Studer & coll., la réaction est limitée à un petit nombre de carbonyles, par exemples les aldéhydes aromatiques qui possèdent une grande importance industrielle, notamment pour la parfumerie, sont inactifs. Avec le procédé de l'invention, un nombre très important d'aldéhydes, mais également de cétones, d'acides carboxyliques, d'esters, d'amide, d'imines d'alcènes, d'alcynes, de nitriles, pourra subir l'hydrosilylation par transfert avec les formiates silylés comme illustré dans la Figure 8.

Le procédé de l'invention permet également le couplage déshydrogénant des composés comme, par exemple, les alcools et les amines comme montré en Figure 8.

Ainsi, dans le procédé de l'invention, les composés organiques (III) à (IX) peuvent donc subir l'hydrosilylation par transfert ou le couplage déshydrogénant par transfert. Pour l'hydrosilylation, il s'agit de composés organiques présentant au moins une insaturation, comme par exemple, les aldéhydes, les cétones, les imines, les acides carboxyliques, les esters, les amides, les nitriles, les alcènes et les alcynes. Pour le couplage déshydrogénant, il s'agit de composés organiques présentant au moins une liaison O-H, N-H, ou S-H tels que les alcools (primaires, secondaires et tertiaires), les thiols (primaires, secondaires et tertiaires) ou les amines (primaires et secondaires).

Le procédé de l'invention permet l'hydrosilylation et/ou le couplage déshydrogénant des composés organiques avec de bons voire excellents rendements et une très bonne sélectivité. Dans certains cas, à la suite du procédé de l'invention, outre le produit désiré, le seul sous produit obtenu est le $CO_2$.

Dans le cadre de la présente invention, par « hydrosilylation », on entend l'addition d'une fonction hydrogénosilane (Si-H) sur un composé organique insaturé.

Le « couplage déshydrogénant » signifie la formation d'une liaison silicium-hétéroatome (O, N ou S) accompagnée de la libération d'hydrogène moléculaire $H_2$.

Au sens de la présente invention un groupe « alkyle » désigne un radical carboné linéaire, ramifié ou cyclique, saturé, éventuellement substitué, comprenant 1 à 20 atomes de carbone. A titre d'alkyle saturé, linéaire ou ramifié, on peut citer par exemple les radicaux méthyle, éthyle, propyle, butyle, pentyle, hexyle, heptyle, octyle, nonyle, décyle, undécyle, dodécanyle et leurs isomères ramifiés. Le groupe alkyle peut comprendre par exemple 1 à 12 atomes de carbone.Dans le cadre de l'invention le groupe alkyle cyclique peut être mono- ou polycyclique et comporter 3 à 20 atomes de carbone. Comme alkyle cyclique, on peut citer les radicaux cyclopropyle, cyclobutyle, cyclopentyle, cyclohexyle, cycloheptyle, cyclooctyle, bicylco[2,1,1] hexyle, bicyclo[2,2,1] heptyle, adamantyle.

Par « alcényle » ou « alcynyle », on entend un radical carboné insaturé linéaire, ramifié ou cyclique, éventuellement substitué, ledit radical carboné insaturé comprenant 2 à 20 atomes de carbone et au moins une double (alcényle) et/ou au moins une triple liaison (alcynyle). Les groupes alcényle et alcynyle peuvent comprendre par exemple 2 à 16 atomes de carbone. A ce titre, on peut citer, par exemple, les radicaux éthylényle, propylényle, butényle, pentényle, hexényle, heptényle, octényle acétylényle, propynyle, butynyle, pentynyle, hexynyle, et leurs isomères ramifiés. Dans le cadre de l'invention le groupe alcényle cyclique peut être mono- ou polycyclique et comporter 3 à 20 atomes de carbone et au moins une double liaison. Comme alcényle cycliques, on peut citer par exemple le cyclopentényle, le cyclohexényle, le 2,3,4,7,8,9,11,12,14,15,16,17-dodécahydro-1H-cyclopenta[a]phénanthrényle.

Les groupes alkyle, alcényle, alcynyle peuvent être éventuellement substitués par un ou plusieurs groupes hydroxyle ; un ou plusieurs groupes alcoxy ; un ou plusieurs groupes alkyle ; un ou plusieurs groupes thioalcoxy ; un ou plusieurs groupes carboxyle ($-OC(O)R_{14}$) ; un ou plusieurs groupes acyle ($-C(O)R_{13}$) ; un ou plusieurs groupes aryloxy ; un ou plusieurs groupes aryle ; un ou plusieurs groupes thioaryloxy ; un ou plusieurs groupes siloxy ; un ou plusieurs atomes d'halogène choisis parmi les atomes de fluor, chlore, brome ou iode ; un ou plusieurs groupes nitro ($-NO_2$) ; un ou plusieurs groupes nitrile (-CN) ; avec les groupes alcoxy, thioalcoxy, aryloxy, thioaryloxy, carboxyle, acyle, alkyle et siloxy tels que définis dans le cadre de la présente invention.

Le terme « aryle » désigne de manière générale un substituant aromatique cyclique comportant de 6 à 20 atomes de carbone, par exemple de 6 à 10 atomes de carbone. Dans le cadre de l'invention le groupe aryle peut être mono- ou polycyclique. A titre indicatif, on peut citer les groupes phényle, benzyle et naphtyle. Le groupe aryle peut être éventuellement substitué par un ou plusieurs groupes hydroxyle ; un ou plusieurs groupes amino ; un ou plusieurs groupes alcoxy ; un ou plusieurs groupes aryloxy ; un ou plusieurs groupes thioaryloxy (-S-aryle) ; un ou plusieurs groupes siloxy ; un ou plusieurs atomes d'halogène choisis parmi les atomes de fluor, chlore, brome et iode ; un ou plusieurs groupes nitro ($-NO_2$) ; un ou plusieurs groupes nitrile (-CN) ; un ou plusieurs groupes alkyle ; un ou plusieurs groupes thioalcoxy (-S-alkyle) ; un ou plusieurs groupes carboxyle ($-OC(O)R_{14}$) ; un ou plusieurs groupes acyle ($-C(O)R_{13}$) ; un ou plusieurs groupes aryloxy ; avec les groupes alcoxy, thioalcoxy, aryloxy, thioaryloxy, carboxyle, acyle, alkyle et siloxy tels que définis dans le cadre de la présente invention.

Le terme « hétéroaryle » désigne de manière générale un substituant aromatique mono- ou polycyclique comportant de 5 à 12 membres dont au moins 2 atomes de carbone, et au moins un hétéroatome choisi parmi l'azote, l'oxygène, le bore, le silicium, le phosphore ou le soufre. Le groupe hétéroaryle peut être mono- ou poly- cyclique. A titre indicatif, on peut citer les groupes furyle, benzofuranyle, pyrrolyle, indolyle, isoindolyle, azaindolyle, thiényle, benzothiényle, pyridyle, quinolinyle, isoquinolyle, imidazolyle, benzimidazolyle, pyrazolyle, oxazolyle, isoxazolyle, benzoxazolyle, thiazolyle, benzothiazolyle, isothiazolyle, pyridazinyle, pyrimidilyle, pyrazinyle, triazinyle, cinnolinyle, phtalazinyle, quinazolinyle. Le groupe hétéroaryle peut être éventuellement substitué par un ou plusieurs groupes hydroxyle ; un ou plusieurs groupes alcoxy ; un ou plusieurs groupes thioaryloxy ; un ou plusieurs groupes siloxy ; un ou plusieurs atomes d'halogène choisis parmi les atomes de fluor, chlore, brome et iode ; un ou plusieurs groupes nitro ($-NO_2$), un ou plusieurs groupes nitrile (-CN), un ou plusieurs groupes aryle, un ou plusieurs groupes alkyle, un ou plusieurs groupes thioalcoxy ; un ou plusieurs groupes carboxyle ; un ou plusieurs groupes acyle ; avec les groupes alcoxy, thioalcoxy, aryloxy, thioaryloxy, carboxyle ($-OC(O)R_{14}$), acyle ($-C(O)R_{13}$),alkyle et siloxy tels que définis dans le cadre de la présente invention.

Le terme « hétérocycle ou hétérocyclique » désigne de manière générale un substituant mono- ou polycyclique, comportant de 5 à 10 membres, saturé ou insaturé, contenant de 1 à 4 hétéroatomes choisis indépendamment l'un de l'autre, parmi l'azote, l'oxygène, le silicium, le phosphore ou le soufre. A titre indicatif, on peut citer les substituants morpholinyle, pipéridinyle, pipérazinyle, pyrrolidinyle, imidazolidinyle, imidazolinyle, pyrazolidinyle, tétrahydrofuranyle, tétrahydropyranyle, thianyle, oxazolidinyle, isoxazolidinyle, thiazolidinyle, isothiazolidinyle. L'hétérocycle peut être éventuellement substitué par un ou plusieurs groupes alkyle ; un ou plusieurs groupes alcoxy ; un ou plusieurs groupes aryloxy, un ou plusieurs groupe thioalcoxy ; un ou plusieurs groupes aryle ; un ou plusieurs groupes thioaryloxy ; un ou plusieurs atomes d'halogène choisis parmi les atomes de fluor, chlore, brome et iode ; un ou plusieurs groupes nitro ($-NO_2$) ; un ou plusieurs groupes nitrile (-CN) ; un ou plusieurs groupes siloxy ; un ou plusieurs groupes carboxyle ($-OC(O)R_{14}$), un ou plusieurs groupes acyle ($-C(O)R_{13}$), avec les groupes alcoxy, thioalcoxy, aryloxy, thioaryloxy, carboxyle, acyle, alkyle et siloxy tels que définis dans le cadre de la présente invention.

Au sens de l'invention, par « hétérocycle silylé », on entend un substituant mono- ou polycyclique, comportant

de 5 à 15 membres, saturé ou insaturé, contenant au moins un atome de silicium et éventuellement au moins un autre hétéroatome choisi parmi l'azote, l'oxygène ou le soufre. Ledit hétérocycle silylé peut être éventuellement substitué par un ou plusieurs groupes hydroxyle ; un ou plusieurs groupes alcoxy ; un ou plusieurs groupes aryloxy ; un ou plusieurs groupes thioaryloxy ; un ou plusieurs groupes siloxy ; un ou plusieurs atomes d'halogène choisis parmi les atomes de fluor, chlore, brome et iode ; un ou plusieurs groupes nitro ($-NO_2$) ; un ou plusieurs groupes nitrile (-CN) ; un ou plusieurs groupes alkyle ; un ou plusieurs groupe aryle ; un ou plusieurs groupe thioalcoxy ; un ou plusieurs groupes carboxyle ; un ou plusieurs groupes acyle ; avec les groupes alcoxy, thioalcoxy, aryloxy, thioaryloxy, carboxyle ($-OC(O)R_{14}$), acyle ($-C(O)R_{13}$), alkyle et siloxy tels que définis dans le cadre de la présente invention.

Parmi les hétérocycles silylés, on peut citer par exemple, le 1-méthyl-1-silacyclo-3-pentène ou le 1-méthyl -2,3,4,5-tétraphényl-1-silacyclopentadiène, suivant les formules ci-dessous.

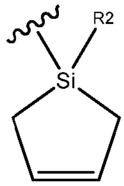

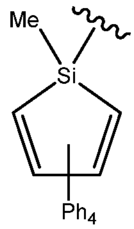

On peut encore citer, par exemple, le 2-méthyl-1,2-oxasilinane, le 1-phényl-1-silacyclohexane, le 1-sila-bicyclo[2.2.1]heptane et le 1-méthyl-1-silacyclopentane répondant aux formules ci-dessous.

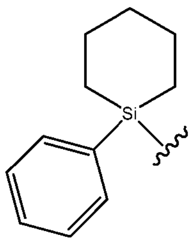

1-phenyl-1-silacyclohexane

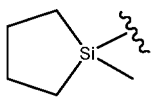

1-methyl-1-silacyclopentane

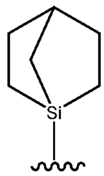

1-sila-bicyclo[2.2.1]heptane

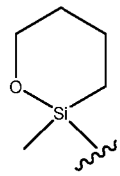

2-methyl-1,2-oxasilinane

Le terme « alcoxy » signifie un groupe alkyle tel que défini ci-dessus, lié par un atome d'oxygène (-O-alkyle). A ce titre, on peut citer, les groupes méthoxy, éthoxy propoxy, isopropoxy, tert-butoxy ou benzyloxy ($PhCH_2-O-$).

Le terme « aryloxy » signifie un groupe aryle tel que défini ci-dessus, lié par un atome d'oxygène (-O-aryle). A titre indicatif, on peut citer le phénoxy (Ph-O-), le naphtalènoxy ou l'anthracènoxy.

Le terme « thioalcoxy » signifie un groupe alkyle tel que défini ci-dessus, lié par un atome de soufre (-S-alkyle). A titre indicatif, on peut citer le thiométhoxy ($-SCH_3$), le thioéthoxy ($-SCH_2CH_3$), le thiobenzyloxy ($PhCH_2S-$).

Le terme « thioaryloxy » signifie un groupe aryle tel que défini ci-dessus, lié par un atome de soufre (-S-aryle). A titre indicatif, on peut citer le thiophénoxy (PhS-), le thionaphtalènoxy ou le thioanthracènoxy.

Le groupe « halogénoalkyle » signifie un groupe alkyle tel que défini ci-dessus dans lequel un ou plusieurs atomes d'hydrogène sont substitués par un ou plusieurs atomes d'halogène lesdits atomes d'halogènes étant choisis indépendamment les uns des autres, dans le groupe formé par les atomes de fluor, chlore, brome ou iode. A titre d'exemple de groupe halogénoalkyle, on peut citer par exemple $-CF_3$, $-CCl_3$, $-CHCl_2$, $-CH_2Cl$.

Par groupe « amino », on entend un groupe de formule $-NR^9R^{10}$, dans laquelle :

- $R_9$ et $R_{10}$ représentent, indépendamment l'un de l'autre, un atome d'hydrogène, un groupe alkyle, un groupe alcényle, un groupe alcynyle, un groupe aryle, un groupe hétéroaryle, un groupe hétérocyclique, un groupe silyle, avec les groupes alkyle, alcényle, alcynyle, aryle, hétéroaryle, hétérocyclique, silyle, éventuellement substitués tels que définis dans le cadre de la présente invention ; ou
- $R_9$ et $R_{10}$, pris ensemble avec l'atome d'azote auquel ils sont liés, forment un hétérocycle éventuellement substitué tel que défini dans le cadre de la présente invention.

A ce titre, on peut citer, par exemple, le diéthylamino ($-NEt_2$), diphénylamino ($-NPh_2$), le méthyléthylamino (-NMeEt), le bis(triméthylsilyl)amino ($-N(SiCH_3)_2$).

Par atome d'halogène, on entend un atome choisi parmi les atomes de fluor, chlore, brome et iode.

Le groupe « carboxyle » désigne un groupe de formule $-OC(O)R_{14}$ dans lequel :

- $R_{14}$ est choisi parmi : un atome d'hydrogène, un groupe alkyle, un groupe alcényle, un groupe alcynyle, groupe aryle, un groupe hétéroaryle, un groupe hétérocyclique, avec les groupes alkyle, alcényle, alcynyle, aryle, hétéroaryle, hétérocyclique, éventuellement substitués tels que définis dans le cadre de la présente invention. Plus particulièrement, $R_{14}$ est choisi parmi un atome d'hydrogène, un groupe alkyle, ou un groupe aryle, lesdits groupes alkyle ou aryle. A ce titre, on peut citer, par exemple, le formiate (-OC(O)H), l'acétate ($-OC(O)CH_3$), le pivalate (-OC(O)*t*Bu). De préférence, le groupe carboxyle est le formiate (-OC(O)H).

Le groupe « acyle » désigne un groupe de formule ($-C(O)R_{13}$), dans lequel :

- $R_{13}$ est choisi parmi : un atome d'hydrogène, un groupe alkyle, un groupe alcényle, un groupe alcynyle, un groupe aryle, un groupe hétéroaryle, un groupe hétérocyclique, un groupe silyle, un groupe siloxy, un groupe amino, un atome d'halogène avec les groupes alkyle, alcényle, alcynyle, aryle, hétéroaryle, hétérocyclique et amino tels que définis dans le cadre de la présente invention. A ce titre, on peut citer, par exemple, le formyle (-C(O)H), l'acétyle ($-C(O)CH_3$), le pivaloyle (-OC(O)*t*Bu).

Par groupe « silyle », on entend un groupe de formule [-Si(Y')3] dans lequel chaque Y', indépendamment l'un de l'autre, est choisi parmi un ou plusieurs groupes alkyle ; un ou plusieurs groupes alcoxy ; un ou plusieurs groupes aryloxy ; un ou plusieurs groupes aryle ; un ou plusieurs groupes siloxy ; avec les groupes alkyle, alcoxy, aryloxy, aryle et siloxy tels que définis dans le cadre de la présente invention. A ce titre on peut citer, par exemple, le triméthylsilyle (TMS), le triéthylsilyle (TES), le *tert*-butyldiphénylsilyle (TBDPS), le *tert*-butyldiméthylsilyle (TBS/TBDMS), le triisopropylsilyle (TIPS), le tri(triméthylsilyl)silyle ou $((CH_3)_3Si)_3Si$- (TTMS), le tri(*tert*-butyl)silyle ou $((CH_3)_3C)_3Si$-.

Par groupe « siloxy », on entend un groupe silyle, tel que défini ci-dessus, lié par un atome d'oxygène ($-O-Si(Y')_3$) avec Y' tel que défini ci-dessus. A ce titre on peut citer, par exemple, le triméthylsiloxy $-OSi(CH_3)_3$, le triéthylsiloxy $-OSi(CH_2CH_3)_3$, le *tert*-butyldiphénylsiloxy -OSi(*t*$BuPh_2)_3$.

Dans un **premier** mode de réalisation de l'invention, lorsque n=0 et m=l

- le composé organique est de formule (IX), et
- dans le composé de formule (I), Z est choisi dans le groupe formé par $-NR_3R_4$,

avec

- $R_3$ et $R_4$ indépendamment l'un de l'autre, choisis dans le groupe formé par un atome d'hydrogène, un groupe alkyle, un groupe halogénoalkyle, un groupe alcényle, un groupe alcynyle, un groupe silyle, un groupe aryle, un groupe hétéroaryle, un groupe hétérocyclique, lesdits groupes alkyle, alcényle, alcynyle, aryle, hétéroaryle, silyle, ou hétérocyclique étant éventuellement substitués.

Dans ce premier mode de réalisation, $R_3$ et $R_4$ indépendamment l'un de l'autre, sont choisis dans le groupe formé par

- un atome d'hydrogène ;
- un groupe alkyle comportant 1 à 12 atomes de carbone choisi dans le groupe formé par méthyle, éthyle, propyle, butyle, pentyle, hexyle, heptyle et leurs isomères ramifiés ; ou
- un groupe aryle comportant 6 à 10 atomes de carbone, par exemple, le phényle, le benzyle, lesdits groupes alkyle et aryle, étant éventuellement substitués.

Dans ce mode de réalisation, de préférence, Z est $-NHR_3$ avec $R_3$ représentant heptyle et ses isomères ramifiés.

Dans un **deuxième** mode de réalisation de l'invention, lorsque n=0 et m=l

- le composé organique est de formule (IX), et
- dans le composé de formule (I), Z est choisi dans le groupe formé par $-NR_3R_4$, avec $R_3$ et $R_4$, pris ensemble avec l'atome d'azote auquel ils sont liés, forment un hétérocycle éventuellement substitué.

Dans ce deuxième mode de réalisation, $R_3$ et $R_4$, pris ensemble avec l'atome d'azote auquel ils sont liés, forment un hétérocycle saturé comportant 5 à 10 membres choisi dans le groupe formé par morpholinyle, pipéridinyle, pipérazinyle, pyrrolidinyle, imidazolidinyle, imidazolinyle, pyrazolidinyle, tétrahydrofuranyle, tétrahydropyranyle, thianyle.

Dans ce mode de réalisation, de préférence, Z est un morpholinyle.

Dans un **troisième** mode de réalisation de l'invention, lorsque n=m=1,

- le composé organique est de formule (III), et
- dans le composé de formule (I), Z et $R_5$, ensemble avec l'atome de carbone auquel ils sont liés forment un groupe

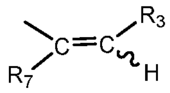

avec

- $R_3$ choisi dans le groupe formé par un atome d'hydrogène, un groupe alkyle, un groupe silyle, un groupe aryle, un groupe hétéroaryle, un groupe hétérocyclique, lesdits groupes alkyle, aryle, hétéroaryle, silyle, ou hétérocyclique étant éventuellement substitués,
- $R_7$ choisi dans le groupe formé par un atome d'hydrogène, un groupe alkyle, un groupe aryle, lesdits groupes alkyle et aryle étant éventuellement substitués. Dans ce troisième mode de réalisation,
- $R_3$ et $R_7$, indépendamment l'un de l'autre, sont choisis dans le groupe formé par un atome d'hydrogène ; un groupe alkyle comportant 1 à 12 atomes de carbone choisi dans le groupe formé par méthyle, éthyle, propyle, butyle, pentyle, hexyle, heptyle et leurs isomères ramifiés ; ou un groupe aryle comportant 6 à 10 atomes de carbone choisi dans le groupe formé par le phényle, le benzyle lesdits groupes alkyle et aryle étant éventuellement substitués.

Dans un **quatrième** mode de réalisation de l'invention, lorsque n=m=1,

- le composé organique est de formule (IV), et
- dans le composé de formule (I), Z et $R_5$ ensemble avec l'atome de carbone auquel ils sont liés, forment un groupe

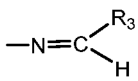

avec

- $R_3$ étant choisi dans le groupe formé par un atome d'hydrogène, un groupe alkyle, un groupe halogénoalkyle, un groupe alcényle, un groupe alcényle cyclique, un groupe alcynyle, un groupe silyle, un groupe aryle, un groupe hétéroaryle, un groupe hétérocyclique, lesdits groupes alkyle, alcényle, alcynyle, aryle, hétéroaryle, silyle, ou hétérocyclique étant éventuellement substitués.

Dans ce quatrième mode de réalisation,

- $R_3$ est choisi dans le groupe formé par un groupe alkyle comportant 1 à 12 atomes de carbone choisi dans le groupe formé par méthyle, éthyle, propyle, butyle, pentyle, hexyle, heptyle et leurs isomères ramifiés ; ou un groupe aryle comportant 6 à 10 atomes de carbone, par exemple, le phényle, le benzyle ou le tolyle, lesdits groupes alkyle et aryle, étant éventuellement substitués.

Selon un **cinquième** mode de réalisation de l'invention, lorsque n=m=1,

- le composé organique est de formule (V), et
- dans le composé de formule (I), Z est X et X représente un atome d'oxygène, avec
  - $R_5$ choisi dans le groupe formé par un atome d'hydrogène, et
  - $R_3$ et $R_4$, indépendamment l'un de l'autre, sont choisis dans le groupe formé par un atome d'hydrogène, un groupe alkyle, un groupe halogénoalkyle, un groupe alcényle, un groupe alcényle cyclique, un groupe alcynyle, un groupe aryle, un groupe hétéroaryle, un groupe hétérocyclique, lesdits groupes alkyle, alcényle, alcynyle, aryle, hétéroaryle ou hétérocyclique étant éventuellement substitués.

Dans ce cinquième mode de réalisation de l'invention,

- $R_5$ est choisi dans le groupe formé par un atome d'hydrogène, et
- $R_3$ et $R_4$, indépendamment l'un de l'autre, sont choisis dans le groupe formé par
  - un atome d'hydrogène,
  - un groupe alkyle comportant 1 à 12 atomes de carbone choisi dans le groupe formé par méthyle, éthyle,

propyle, butyle, pentyle, hexyle, heptyle et leurs isomères ramifiés,

◦ un groupe halogénoalkyle choisi dans le groupe formé par $-CF_3$, $-CCl_3$, $-CHCl_2$, $-CH_2Cl$,

◦ un groupe alcényle comportant 2 à 16 atomes de carbone choisi dans le groupe formé par éthylényle, propylényle, butényle, pentényle, hexényle, heptényle,

◦ un groupe alcényle cyclique comportant 2 à 16 atomes de carbone choisi dans le groupe formé par cyclopentényle ou cyclohexényle,

◦ un groupe aryle comportant 6 à 10 atomes de carbone choisi dans le groupe formé par phényle, naphtyle, benzyle, tolyle,

◦ un groupe hétéroaryle comportant 5 à 12 membres dont au moins 2 atomes de carbone et au moins un hétéroatome choisi parmi l'azote, l'oxygène, le soufre, le groupe hétéroaryle étant choisi dans le groupe formé par furyle, thiényle, pyrrolyle, pyridyle,

lesdits groupes alkyle, alcényle, alcényle cyclique, aryle, ou hétéroaryle étant éventuellement substitués.

Dans ce mode de réalisation, de préférence,

- $R_5$ est choisi dans le groupe formé par un atome d'hydrogène, et
- $R_3$ et $R_4$, indépendamment l'un de l'autre, sont choisis dans le groupe formé par

  ◦ un atome d'hydrogène,

  ◦ un groupe alkyle choisi dans le groupe formé par heptyle et ses isomères ramifiés,

  ◦ un groupe halogénoalkyle choisi dans le groupe formé par $-CF_3$,

  ◦ un groupe alcényle choisi dans le groupe formé par éthylényle éventuellement substitué par un ou deux groupes phényle, un ou deux groupes méthyle,

  ◦ un groupe alcényle cyclique choisi dans le groupe formé par cyclohexényle,

  ◦ un groupe aryle choisi dans le groupe formé par phényle éventuellement substitué par un ou plusieurs atomes de chlore ou de bore, un ou plusieurs groupes méthoxy, un ou plusieurs thiométhoxy ($-SCH_3$), un ou plusieurs groupe méthyle ou tert-butyle, un ou plusieurs groupes $-C(O)CH_3$, un ou plusieurs groupes $-OC(O)CH_3$, un ou plusieurs groupes nitrile, un ou plusieurs groupes nitro, un ou plusieurs groupes diméthylamino, ou

  ◦ un groupe hétéroaryle choisi dans le groupe formé par furyle, thiényle, pyrrolyle, pyridyle.

Selon un **sixième** mode de réalisation de l'invention, lorsque n=m=1,

- le composé organique est de formule (V), et
- dans le composé de formule (I), Z est X et X représente un atome d'oxygène, avec

  - $R_5$ choisi dans le groupe formé par un atome d'hydrogène, et
  - $R_3$ et $R_4$ ensemble avec l'atome de carbone auquel ils sont liés, forment un alkyle cyclique comportant 3 à 20 atomes de carbone, ledit alkyl cyclique étant éventuellement substitué.

Dans ce sixième mode de réalisation,

- $R_5$ est choisi dans le groupe formé par un atome d'hydrogène, et
- $R_3$ et $R_4$ ensemble avec l'atome de carbone auquel ils sont liés, forment un alkyle cyclique choisi dans le groupe formé par cyclopropyle, cyclobutyle, cyclopentyle, cyclohexyle, cycloheptyle, cyclooctyle, bicyclo[2,1,1] hexyle, bicyclo[2,2,1] heptyle, adamantyle, ledit alkyle cyclique étant éventuellement substitué.

Selon un **septième** mode de réalisation de l'invention, lorsque n=m=1,

- le composé organique est de formule (V), et
- dans le composé de formule (I), Z est X et X représente un groupe CRaRb avec

  - $R_a$ et $R_b$ représentant, indépendamment l'un de l'autre, un atome d'hydrogène, un groupe alkyle, un groupe aryle, un groupe hétéroaryle, un groupe silyle, ou un groupe hétérocyclique, lesdits groupes alkyle, aryle, hétéroaryle, silyle, hétérocyclique étant éventuellement substitués, et
  - $R_5$ est choisi dans le groupe formé par un atome d'hydrogène, et
  - $R_3$ et $R_4$, indépendamment l'un de l'autre, sont choisis dans le groupe formé par un atome d'hydrogène, un groupe alkyle, un groupe aryle, un groupe hétéroaryle, groupe silyle, ou un groupe hétérocyclique, lesdits

groupes alkyle, aryle, hétéroaryle, silyle, ou hétérocyclique étant éventuellement substitués.

Dans ce septième mode de réalisation,

- $R_a$ et $R_b$ représentant, indépendamment l'un de l'autre,
  - ◦ un atome d'hydrogène,
  - ◦ un groupe alkyle comportant 1 à 12 atomes de carbone choisi dans le groupe formé par méthyle, éthyle, propyle, butyle, pentyle, hexyle, heptyle et leurs isomères ramifiés,
  - ◦ un groupe aryle comportant 6 à 10 atomes de carbone choisi dans le groupe formé par phényle ou benzyle,
  - ◦ un groupe hétéroaryle comportant 5 à 12 membres dont au moins 2 atomes de carbone et au moins un hétéroatome choisi parmi l'azote, l'oxygène, le soufre, le groupe hétéroaryle étant choisi dans le groupe formé par furyle, thiényle, pyrrolyle, pyridyle,
  - ◦ un groupe hétérocyclique saturé comportant 5 à 10 membres choisi dans le groupe formé par morpholinyle, pipéridinyle, pipérazinyle, pyrrolidinyle, imidazolidinyle, imidazolinyle, pyrazolidinyle, tétrahydrofuranyle, tétrahydropyranyle, thianyle,

  lesdits groupes alkyle, aryle, hétéroaryle, ou hétérocyclique étant éventuellement substitués.

Selon un **huitième** mode de réalisation de l'invention, lorsque n=m=1,

- le composé organique est de formule (V), et
- dans le composé de formule (I), Z est X et X représente un groupe $CR_aR_b$ avec
  - • $R_a$ et $R_b$ représentant, indépendamment l'un de l'autre, un atome d'hydrogène, un groupe alkyle, un groupe aryle, un groupe hétéroaryle, un groupe silyle, ou un groupe hétérocyclique, lesdits groupes alkyle, aryle, hétéroaryle, silyle, hétérocyclique étant éventuellement substitués, et
  - • $R_5$ est choisi dans le groupe formé par un atome d'hydrogène,
  - • $R_3$ et $R_4$ ensemble avec l'atome de carbone auquel ils sont liés, forment un alkyle cyclique éventuellement substitué, ou
  - • $R_3$ et $R_4$ ensemble avec l'atome de carbone auquel ils sont liés, forment un alcényle cyclique éventuellement substitué,

  lesdits groupes alkyle cyclique et alcényle cyclique étant éventuellement substitués.

Dans ce huitième mode de réalisation,

- $R_a$ et $R_b$ représentant, indépendamment l'un de l'autre,
  - ◦ un atome d'hydrogène,
  - ◦ un groupe alkyle comportant 1 à 12 atomes de carbone choisi dans le groupe formé par méthyle, éthyle, propyle, butyle, pentyle, hexyle, heptyle et leurs isomères ramifiés,
  - ◦ un groupe aryle comportant 6 à 10 atomes de carbone choisi dans le groupe formé par phényle ou benzyle,
  - ◦ un groupe hétéroaryle comportant 5 à 12 membres dont au moins 2 atomes de carbone et au moins un hétéroatome choisi parmi l'azote, l'oxygène, le soufre, le groupe hétéroaryle étant choisi dans le groupe formé par furyle, thiényle, pyrrolyle, pyridyle,
  - ◦ un groupe hétérocyclique saturé comportant 5 à 10 membres choisi dans le groupe formé par morpholinyle, pipéridinyle, pipérazinyle, pyrrolidinyle, imidazolidinyle, imidazolinyle, pyrazolidinyle, tétrahydrofuranyle, tétrahydropyranyle, thianyle,

  lesdits groupes alkyle, aryle, hétéroaryle, ou hétérocyclique étant éventuellement substitués ; et
- $R_3$ et $R_4$ ensemble avec l'atome de carbone auquel ils sont liés, forment un alkyle cyclique comportant 1 à 12 atomes de carbone choisis le groupe formé par cyclopentyle, cyclohexyle, ou
- $R_3$ et $R_4$ ensemble avec l'atome de carbone auquel ils sont liés, forment un alcényle cyclique choisi dans le groupe formé par cyclopentényle, cyclohexènyle, lesdits groupes alkyle cyclique et alcényle cyclique étant éventuellement substitués.

Selon un **neuvième** mode de réalisation de l'invention, lorsque n=m=1,

- le composé organique est de formule (V), et
- dans le composé de formule (I), Z est X et X représente un groupe $NR_6$ avec

  - $R_6$ représentant un atome d'hydrogène, un groupe alkyle, un groupe silyle, un groupe aryle, lesdits groupes alkyle, silyle ou aryle étant éventuellement substitués, et
  - $R_5$ est choisi dans le groupe formé par un atome d'hydrogène, et
  - $R_3$ et $R_4$, indépendamment l'un de l'autre, sont choisis dans le groupe formé par un atome d'hydrogène, un groupe alkyle, un groupe aryle, ou un groupe silyle, lesdits groupes alkyle, aryle ou silyle, étant éventuellement substitués.

Dans ce neuvième mode de réalisation de l'invention,

- $R_6$ représente

  ◦ un atome d'hydrogène,
  ◦ un groupe alkyle comportant 1 à 12 atomes de carbone choisi dans le groupe formé par méthyle, éthyle, propyle, butyle, pentyle, hexyle, heptyle et leurs isomères ramifiés,
  ◦ un groupe aryle comportant 6 à 10 atomes de carbone, par exemple, le phényle, le benzyle, lesdits groupes alkyle et aryle étant éventuellement substitués, et

- $R_5$ est choisi dans le groupe formé par un atome d'hydrogène, et
- $R_3$ et $R_4$, indépendamment l'un de l'autre, sont choisis dans le groupe formé par

  ◦ un atome d'hydrogène,
  ◦ un groupe alkyle comportant 1 à 12 atomes de carbone choisi dans le groupe formé par méthyle, éthyle, propyle, butyle, pentyle, hexyle, heptyle et leurs isomères ramifiés,
  ◦ un groupe aryle comportant 6 à 10 atomes de carbone, choisi dans le groupe formé par le phényle, le benzyle,

lesdits groupes alkyle et aryle, étant éventuellement substitués.

Dans ce mode de réalisation, de préférence,

- $R_6$ représente un groupe méthyle
- $R_5$ est choisi dans le groupe formé par un atome d'hydrogène, et
- $R_3$ et $R_4$, indépendamment l'un de l'autre, sont choisis dans le groupe formé par

  ◦ un atome d'hydrogène,
  ◦ un groupe aryle comportant 6 à 10 atomes de carbone, choisi dans le groupe formé par le phényle, le benzyle,

lesdits groupes alkyle et aryle étant éventuellement substitués.

Selon un **dixième** mode de réalisation de l'invention, lorsque n=m=1,

- le composé organique est de formule (VI), et
- dans le composé de formule (I), Z est X et X représente un atome d'oxygène avec

  - $R_8$ choisi dans le groupe formé par un atome d'hydrogène, un groupe alkyle, un groupe alcényle, un groupe alcynyle, un groupe aryle, un groupe silyle, un groupe hétéroaryle, un groupe hétérocyclique, lesdits groupes alkyle, alcényle, alcynyle, aryle, hétéroaryle, hétérocyclique étant éventuellement substitués, et
  - $R_3$ est choisi dans le groupe formé par un atome d'hydrogène, un groupe hydroxyle, un groupe alkyle, un groupe halogénoalkyle, un groupe alcényle, un groupe alcynyle, un groupe aryle, un groupe hétéroaryle, un groupe hétérocyclique, lesdits groupes alkyle, alcényle, alcynyle, aryle, hétéroaryle, ou hétérocyclique étant éventuellement substitués, et
  - $R_4$ et $R_5$, indépendamment l'un de l'autre, représentent un atome d'hydrogène.

Dans ce dixième mode de réalisation de l'invention,

- $R_8$ est choisi dans le groupe formé par

◦ un atome d'hydrogène,
◦ un groupe alkyle comportant 1 à 12 atomes de carbone choisi dans le groupe formé par méthyle, éthyle, propyle, butyle, pentyle, hexyle, heptyle et leurs isomères ramifiés, ou
◦ un groupe aryle comportant 6 à 10 atomes de carbone choisi dans le groupe formé par le phényle, le benzyle,

lesdits groupes alkyle ou aryle étant éventuellement substitué, et

- $R_3$ est choisi dans le groupe formé par

◦ un atome d'hydrogène,
◦ un groupe alkyle comportant 1 à 12 atomes de carbone choisi dans le groupe formé par méthyle, éthyle, propyle, butyle, pentyle, hexyle, heptyle et leurs isomères ramifiés,
◦ un groupe aryle comportant 6 à 10 atomes de carbone, choisi dans le groupe formé par le phényle, le benzyle,

lesdits groupes alkyle et aryle, étant éventuellement substitués, et

- $R_4$ et $R_5$ indépendamment l'un de l'autre, représentent un atome d'hydrogène.

Selon un **onzième** mode de réalisation de l'invention, lorsque n=1 et m=0,

- le composé organique est de formule (VII) avec X représentant un atome d'oxygène, et
- dans le composé de formule (I), Z est choisi dans le groupe formé par $-NR_9R_{10}$ avec

  - $R_9$ et $R_{10}$, indépendamment l'un de l'autre, sont choisis dans le groupe formé par un atome d'hydrogène, un groupe alkyle, un groupe alcényle, un groupe alcynyle, un groupe aryle, un groupe hétéroaryle, un groupe hétérocyclique, un groupe silyle, avec les groupes alkyle, alcényle, alcynyle, aryle, hétéroaryle, hétérocyclique, silyle, étant éventuellement substitués ; et
  - $R_3$ est choisi dans le groupe formé par un atome d'hydrogène, un groupe alkyle, un groupe halogénoalkyle, un groupe alcényle, un groupe alcynyle, un groupe aryle, un groupe hétéroaryle, un groupe hétérocyclique, lesdits groupes alkyle, alcényle, alcynyle, aryle, hétéroaryle, ou hétérocyclique étant éventuellement substitués ;
  - $R_4$ et $R_5$, indépendamment l'un de l'autre, représentent un atome d'hydrogène.

Dans ce onzième mode de réalisation de l'invention,

- $R_9$ et $R_{10}$, indépendamment l'un de l'autre, sont choisis dans le groupe formé par

◦ un atome d'hydrogène,
◦ un groupe alkyle comportant 1 à 12 atomes de carbone choisi dans le groupe formé par méthyle, éthyle, propyle, butyle, pentyle, hexyle, heptyle et leurs isomères ramifiés,
◦ un groupe aryle comportant 6 à 10 atomes de carbone choisi dans le groupe formé par le phényle, le benzyle,

lesdits groupes alkyle ou aryle étant éventuellement substitué, et

- $R_3$ est choisi dans le groupe formé par

◦ un atome d'hydrogène,
◦ un groupe alkyle comportant 1 à 12 atomes de carbone choisi dans le groupe formé par méthyle, éthyle, propyle, butyle, pentyle, hexyle, heptyle et leurs isomères ramifiés,
◦ un groupe aryle comportant 6 à 10 atomes de carbone, choisi dans le groupe formé par le phényle, le benzyle,

lesdits groupes alkyle et aryle, étant éventuellement substitués, et

- $R_4$ et $R_5$, indépendamment l'un de l'autre, représentent un atome d'hydrogène.

Selon un **douzième** mode de réalisation de l'invention, lorsque n=1 et m=0,

- le composé organique est de formule (VII) avec X représentant un atome d'oxygène, et
- dans le composé de formule (I), Z est choisi dans le groupe formé par $-NR_9R_{10}$ avec

  - $R_9$ et $R_{10}$, pris ensemble avec l'atome d'azote auquel ils sont liés, forment un hétérocycle éventuellement substitué, et
  - $R_3$ est choisi dans le groupe formé par un atome d'hydrogène un groupe alkyle, un groupe halogénoalkyle, un

groupe alcényle, un groupe alcynyle, un groupe aryle, un groupe hétéroaryle, un groupe hétérocyclique, lesdits groupes alkyle, alcényle, alcynyle, aryle, hétéroaryle, ou hétérocyclique étant éventuellement substitués, et

- $R_4$ et $R_5$, indépendamment l'un de l'autre, représentent un atome d'hydrogène.

Dans ce douzième mode de réalisation de l'invention,

- $R_9$ et $R_{10}$, pris ensemble avec l'atome d'azote auquel ils sont liés, forment un hétérocycle comportant 5 à 10 membres, saturé ou insaturé, choisi dans le groupe formé par pipéridinyle, pipérazinyle, pyrrolidinyle, imidazolidinyle, imidazolinyle, ledit groupe hétérocyclique étant éventuellement substitué, et
- $R_3$ est choisi dans le groupe formé par

    ◦ un atome d'hydrogène,
    ◦ un groupe alkyle comportant 1 à 12 atomes de carbone choisi dans le groupe formé par méthyle, éthyle, propyle, butyle, pentyle, hexyle, heptyle et leurs isomères ramifiés,
    ◦ un groupe aryle comportant 6 à 10 atomes de carbone, choisi dans le groupe formé par le phényle, le benzyle,

  lesdits groupes alkyle et aryle, étant éventuellement substitués, et
- $R_4$ et $R_5$, indépendamment l'un de l'autre, représentent un atome d'hydrogène.

Selon un **treizième** mode de réalisation, lorsque n=m=1,

- le composé organique est de formule (VIII), et
- dans le composé de formule (I), Z est Y et Y représente un atome d'oxygène avec $R_3$, $R_4$ et $R_5$, indépendamment les uns des autres, sont choisis dans le groupe formé par

    ◦ un atome d'hydrogène,
    ◦ un groupe alkyle comportant 1 à 12 atomes de carbone choisi dans le groupe formé par méthyle, éthyle, propyle, butyle, pentyle, hexyle, heptyle et leurs isomères ramifiés, ledit groupe alkyle étant éventuellement substitué par

        ▪ un ou plusieurs groupes hydroxy,
        ▪ un ou plusieurs groupes alcoxy dont le radical alkyle comporte 1 à 12 atomes de carbone choisi dans le groupe formé par méthoxy, éthoxy, propyloxy, butyloxy, pentyloxy, hexyloxy, heptyloxy et leurs isomères ramifiés,
        ▪ un ou plusieurs groupe alcényle comportant 2 à 16 atomes de carbone choisi dans le groupe formé par éthylényle, propylényle, butényle, pentényle, hexényle, heptényle, octényle et leurs isomères ramifiés lesdits groupes alcényle étant éventuellement substitués par un groupe alkyle choisi dans le groupe formé par éthyle, propyle, butyle, pentyle et leurs isomères ramifiés,
        ▪ un ou plusieurs groupes halogénoalkyle choisis dans le groupe formé par $-CF_3$, $-CCl_3$, $-CHCl_2$, $-CClBrCF_3$,
        ▪ un ou plusieurs groupes siloxy choisis dans le groupe formé par le triméthylsiloxy, le triéthysiloxy, le butyldiphénylsiloxy,
        ▪ un ou plusieurs groupes aryle comportant de 6 à 10 atomes de carbone choisi dans le groupe formé par phényle ou benzyle éventuellement substitué par

            - un ou plusieurs atomes d'halogène choisis parmi les atomes de fluor, chlore, brome ou iode,
            - un ou plusieurs groupes alcoxy choisis dans le groupe formé par méthoxy, éthoxy, propyloxy, butyloxy, pentyloxy et leurs isomères ramifiés,
            - un ou plusieurs groupes alkyle choisis dans le groupe formé par méthyle, éthyle, propyle, butyle, pentyle, hexyle, heptyle et leurs isomères ramifiés,
            - un ou plusieurs groupes acyle $-C(O)R_{13}$ avec $R_{13}$ représentant un groupe alkyle comportant 1 à 12 atomes de carbone choisi dans le groupe formé par méthyle, éthyle, propyle, butyle, pentyle, hexyle, heptyle et leurs isomères ramifiés, un groupe aryle choisi dans le groupe formé par phényle, benzyle, un groupe amino choisi dans le groupe formé par diméthylamino, diéthylamino, un groupe alcoxy choisi dans le groupe formé par méthoxy, éthoxy, un groupe aryloxy choisi dans le groupe formé par benzyloxy, phénoxy.
            - un ou plusieurs groupes carboxyle $-OC(O)R_{14}$ avec $R_{14}$ représentant un atome d'hydrogène, un groupe alkyle choisi dans le groupe formé par méthyle, éthyle, propyle, butyle, pentyle, hexyle, heptyle et leurs isomères ramifiés, un groupe aryle choisi dans le groupe formé par phényle ou benzyle,

- un ou plusieurs groupes nitrile (-CN),
- un ou plusieurs groupes nitro ($-NO_2$),
- un ou plusieurs groupes amino choisis dans le formé par $-NH_2$, $-NHCH_3$, $-N(CH_3)_2$, $-N(CH_2CH_3)_2$, $-NH(CH_2CH_3)$,

◦ un groupe alcényle comportant 2 à 16 atome de carbone choisi dans le groupe formé par éthylényle, propylényle, butényle, pentényle, hexényle, heptényle, octényle et leurs isomères ramifiés lesdits groupes alcényle étant éventuellement substitués par

▪ un ou plusieurs groupes alkyle choisis dans le groupe formé par éthyle, propyle, butyle, pentyle et leurs isomères ramifiés,
▪ un ou plusieurs groupes aryle choisi dans le groupe phényle ou benzyle, éventuellement substitué par

- un ou plusieurs atomes d'halogène choisis parmi les atomes de fluor, chlore, brome ou iode,
- un ou plusieurs groupes alcoxy choisis dans le groupe formé par méthoxy, éthoxy, propyloxy, butyloxy, pentyloxy et leurs isomères ramifiés,
- un ou plusieurs groupes alkyle choisis dans le groupe formé par méthyle, éthyle, propyle, butyle, pentyle, hexyle, heptyle et leurs isomères ramifiés,
- un ou plusieurs groupes thioalcoxy (-S-alkyle) avec le radical alkyle étant choisi dans le groupe formé par méthyle, éthyle, propyle, butyle, pentyle, hexyle, heptyle et leurs isomères ramifiés,
- un ou plusieurs groupes acyle $-C(O)R_{13}$ avec $R_{13}$ représentant un groupe alkyle comportant 1 à 12 atomes de carbone choisi dans le groupe formé par méthyle, éthyle, propyle, butyle, pentyle, hexyle, heptyle et leurs isomères ramifiés, un groupe aryle choisi dans le groupe formé par phényle, benzyle, un groupe amino choisi dans le groupe formé par diméthylamino, diéthylamino, un groupe alcoxy choisi dans le groupe formé par méthoxy, éthoxy, un groupe aryloxy choisi dans le groupe formé par benzyloxy, phénoxy.
- un ou plusieurs groupes carboxyle $-OC(O)R_{14}$ avec $R_{14}$ représentant un atome d'hydrogène, un groupe alkyle choisi dans le groupe formé par méthyle, éthyle, propyle, butyle, pentyle, hexyle, heptyle et leurs isomères ramifiés, un groupe aryle choisi dans le groupe formé par phényle, benzyle,
- un ou plusieurs groupes nitrile (-CN),
- un ou plusieurs groupes nitro ($-NO_2$),
- un ou plusieurs groupes amino choisis dans le formé par $-NH_2$, $-NHCH_3$, $-N(CH_3)_2$, $-N(CH_2CH_3)_2$, $-NH(CH_2CH_3)$,

◦ un groupe acyle $-C(O)R_{13}$ avec $R_{13}$ étant un groupe alkyle comportant 1 à 12 atomes de carbone choisi dans le groupe formé par méthyle, éthyle, propyle, butyle, pentyle, hexyle, heptyle et leurs isomères ramifiés,
◦ un groupe aryloxy dont le radical aryle comporte de 6 à 10 atomes de carbone choisi dans le groupe formé par le phénoxy ou le benzyloxy,
◦ un groupe halogénoalkyle choisi dans le groupe formé par $-CF_3$, $-CCl_3$, $- CHCl_2$, $-CClBrCF_3$,
◦ un groupe aryle comportant de 6 à 10 atomes de carbone choisi dans le groupe formé par phényle ou benzyle éventuellement substitué par

▪ un ou plusieurs atomes d'halogène choisis parmi les atomes de fluor, chlore, brome ou iode,
▪ un ou plusieurs groupes alcoxy choisis dans le groupe formé par méthoxy, éthoxy, propyloxy, butyloxy, pentyloxy et leurs isomères ramifiés,
▪ un ou plusieurs groupes alkyle choisis dans le groupe formé par méthyle, éthyle, propyle, butyle, pentyle, hexyle, heptyle et leurs isomères ramifiés,
▪ un ou plusieurs groupes thioalcoxy (-S-alkyle) avec le radical alkyle étant choisi dans le groupe formé par méthyle, éthyle, propyle, butyle, pentyle, hexyle, heptyle et leurs isomères ramifiés,
▪ un ou plusieurs groupes acyle $-C(O)R_{13}$ avec $R_{13}$ représentant un groupe alkyle comportant 1 à 12 atomes de carbone choisi dans le groupe formé par méthyle, éthyle, propyle, butyle, pentyle, hexyle, heptyle et leurs isomères ramifiés,
▪ un ou plusieurs groupes carboxyle $-OC(O)R_{14}$ avec $R_{14}$ représentant un atome d'hydrogène ou un groupe alkyle choisi dans le groupe formé par méthyle, éthyle, propyle, butyle, pentyle, hexyle, heptyle et leurs isomères ramifiés,
▪ un ou plusieurs groupes nitrile (-CN),
▪ un ou plusieurs groupes nitro ($-NO_2$),
▪ un ou plusieurs groupes amino choisis dans le formé par $-NH_2$, $-NHCH_3$, $-N(CH_3)_2$, $-N(CH_2CH_3)_2$,

$-NH(CH_2CH_3)$,

◦ un groupe hétéroaryle comportant 5 à 12 membres dont au moins 2 atomes de carbone, et au moins un hétéroatome choisi parmi l'azote, l'oxygène, le ou le soufre, ledit groupe hétéroaryle étant choisi dans le groupe formé par furyle, thiényle, pyrrolyle, pyridyle, imidazolyle, thiazolyle.

Dans ce treizième mode de réalisation de l'invention, $R_3$, $R_4$ et $R_5$, indépendamment les uns des autres, sont choisis dans le groupe formé par

◦ un atome d'hydrogène,
◦ un groupe alkyle choisi dans le groupe formé par méthyle, éthyle éventuellement substitué par un groupe phényle, n-propyle, isopropyle éventuellement substitué par un groupe méthoxy, tert-butyle éventuellement substitué par 1 à 3 groupes timéthylesiloxy, n-butyle, n-pentyle, n-hexyle, n-heptyle,
◦ un groupe alcényle choisi dans le groupe formé par

  ▪ éthylényle éventuellement substitué par

    • un ou plusieurs groupes phényle,
    • un ou plusieurs groupes méthyle,

  ▪ heptényle éventuellement substitué par

    • un ou plusieurs groupes méthyle,

◦ un groupe aryle choisi dans le groupe phényle ou benzyle, éventuellement substitué par

• un ou plusieurs atomes d'halogène choisis parmi les atomes de fluor, chlore, brome ou iode,
• un ou plusieurs groupes méthoxy,
• un ou plusieurs groupes $-S-CH_3$,
• un ou plusieurs groupes méthyle, tert-butyle,
• un ou plusieurs groupes acyle $-C(O)R_{13}$ avec $R_{13}$ représentant un groupe méthyle,
• un ou plusieurs groupes carboxyle $-OC(O)R_{14}$ avec $R_{14}$ représentant un groupe méthyle,
• un ou plusieurs groupes nitrile (-CN),
• un ou plusieurs groupes nitro ($-NO_2$),
• un ou plusieurs groupes $-NH_2$, $-N(CH_3)_2$,

◦ un groupe acyle $-C(O)R_{13}$ avec $R_{13}$ étant un groupe méthyle,
◦ un groupe-$CF_3$,
◦ un groupe hétéroaryle choisi dans le groupe formé par furyle, thiényle, pyrrolyle,.

Selon un **quatorzième** mode de réalisation, lorsque n=m=1,

- le composé organique est de formule (VIII), et
- dans le composé de formule (I), Z est Y et Y représente un atome d'oxygène avec $R_3$, $R_4$ et $R_5$ ensemble avec l'atome de carbone auquel ils sont liés, forment un aryle comportant 6 à 10 atomes de carbone choisi dans le groupe formé par phényle ou benzyle éventuellement substitué par

• un ou plusieurs atomes d'halogène choisis parmi les atomes de fluor, chlore, brome ou iode,
• un ou plusieurs groupes alcoxy choisis dans le groupe formé par méthoxy, éthoxy, propyloxy, butyloxy, pentyloxy et leurs isomères ramifiés,
• un ou plusieurs groupes aryloxy choisi parmi le phénoxy et le benzyloxy,
• un ou plusieurs groupes alkyle choisis dans le groupe formé par méthyle, éthyle, propyle, butyle, pentyle, hexyle, heptyle et leurs isomères ramifiés,
• un ou plusieurs groupes thioalcoxy (-S-alkyle) avec le radical alkyle étant choisi dans le groupe formé par méthyle, éthyle, propyle, butyle, pentyle, hexyle, heptyle et leurs isomères ramifiés,
• un ou plusieurs groupes acyle $-C(O)R_{13}$ avec $R_{13}$ représentant un groupe alkyle comportant 1 à 12 atomes de carbone choisi dans le groupe formé par méthyle, éthyle, propyle, butyle, pentyle, hexyle, heptyle et leurs isomères ramifiés, un groupe aryle choisi dans le groupe formé par phényle, benzyle, un groupe amino choisi

dans le groupe formé par diméthylamino, diéthylamino, un groupe alcoxy choisi dans le groupe formé par méthoxy, éthoxy, un groupe aryloxy choisi dans le groupe formé par benzyloxy, phénoxy,

- un ou plusieurs groupes carboxyle -OC(O)$R_{14}$ avec $R_{14}$ représentant un atome d'hydrogène ou un groupe alkyle choisi dans le groupe formé par méthyle, éthyle, propyle, butyle, pentyle, hexyle, heptyle et leurs isomères ramifiés,
- un ou plusieurs groupes nitrile (-CN),
- un ou plusieurs groupes nitro ($-NO_2$),
- un ou plusieurs groupes amino choisis dans le formé par$-NH_2$, $-NHCH_3$, $-N(CH_3)_2$, $-N(CH_2CH_3)_2$, $-NH(CH_2CH_3)$.

Dans ce quatorzième mode de réalisation de l'invention, $R_3$, $R_4$ et $R_5$ ensemble avec l'atome de carbone auquel ils sont liés, forment un groupe phényle éventuellement substitué par

- un ou plusieurs atomes d'halogène choisis parmi les atomes de fluor, chlore, brome ou iode,
- un ou plusieurs groupes alcoxy choisis dans le groupe formé par méthoxy, éthoxy, propyloxy, butyloxy, pentyloxy et leurs isomères ramifiés,
- un ou plusieurs groupes aryloxy choisi parmi le phénoxy et le benzyloxy,
- un ou plusieurs groupes nitro ($-NO_2$),
- un ou plusieurs groupes amino choisis dans le formé par $-NH_2$, $-NHCH_3$.

Selon un **quinzième** mode de réalisation, lorsque n=m=1,

- le composé organique est de formule (VIII), et
- dans le composé de formule (I), Z est Y et Y représente un atome d'oxygène avec
    - $R_5$ représentant un atome d'hydrogène, et
    - $R_3$ et $R_4$ ensemble avec l'atome de carbone auquel ils sont liés, forment un alkyle mono- ou polycyclique comportant 3 à 20 atomes de carbone choisi dans le groupe formé cyclopropyle, cyclobutyle, cyclopentyle, cyclohexyle, cycloheptyle, cyclooctyle, bicyclo[2,1,1] hexyle, bicyclo[2,2,1] heptyle, 2-adamantyle, ledit groupe alkyle mono- ou polycyclique étant éventuellement substitué par
        - ◦ un ou plusieurs groupes hydroxy,
        - ◦ un ou plusieurs groupes alcoxy dont le radical alkyle comporte 1 à 12 atomes de carbone choisi dans le groupe formé par méthoxy, éthoxy, propyloxy, butyloxy, pentyloxy, hexyloxy, heptyloxy et leurs isomères ramifiés,
        - ◦ un ou plusieurs groupe alcényle comportant 2 à 16 atomes de carbone choisi dans le groupe formé par éthylényle, propylényle, butényle, pentényle, hexényle, heptényle, octényle et leurs isomères ramifiés lesdits groupes alcényle étant éventuellement substitués par un groupe alkyle choisi dans le groupe formé par éthyle, propyle, butyle, pentyle et leurs isomères ramifiés,
        - ◦ un ou plusieurs groupes halogénoalkyle choisis dans le groupe formé par - $CF_3$, $-CCl_3$, $-CHCl_2$, $-CClBrCF_3$,
        - ◦ un ou plusieurs groupes siloxy choisis dans le groupe formé par le triméthylsiloxy, le triéthysiloxy, le butyldiphénylsiloxy,
        - ◦ un ou plusieurs groupes aryle comportant de 6 à 10 atomes de carbone choisi dans le groupe formé par phényle ou benzyle.

Dans ce quinzième mode de réalisation,

- $R_5$ représente un atome d'hydrogène, et
- $R_3$ et $R_4$ ensemble avec l'atome de carbone auquel ils sont liés, forment cycloheptyle ou 2-adamantyle.

Selon un **seizième** mode de réalisation, lorsque n=m=1,

- le composé organique est de formule (VIII), et
- dans le composé de formule (I), Z est Y et Y représente un atome d'oxygène avec
    - $R_5$ représentant un atome d'hydrogène, et
    - $R_3$ et $R_4$ ensemble avec l'atome de carbone auquel ils sont liés, forment un alcényle cyclique comportant 3 à 20 atomes de carbone et au moins une double liaison choisi dans le groupe formé par cyclopentényle, cyclohexényle, le 2,3,4,7,8,9,11,12,14,15,16,17-dodécahydro-1H-cyclopenta[a]phénanthrényle, ou

- $R_3$, $R_4$ et $R_5$ ensemble avec l'atome de carbone auquel ils sont liés, forment un alcényle cyclique comportant 3 à 20 atomes de carbone et au moins une double liaison choisi dans le groupe formé par cyclopentényle, cyclohexényle,

ledit groupe alcényle cyclique étant éventuellement substitué par

◦ un ou plusieurs atomes d'halogène choisis parmi les atomes de fluor, chlore, brome ou iode,
◦ un ou plusieurs groupes alcoxy choisis dans le groupe formé par méthoxy, éthoxy, propyloxy, butyloxy, pentyloxy et leurs isomères ramifiés,
◦ un ou plusieurs groupes aryloxy choisi parmi le phénoxy et le benzyloxy,
◦ un ou plusieurs groupes alkyle choisis dans le groupe formé par méthyle, éthyle, propyle, butyle, pentyle, hexyle, heptyle et leurs isomères ramifiés,
◦ un ou plusieurs groupes thioalcoxy (-S-alkyle) avec le radical alkyle étant choisi dans le groupe formé par méthyle, éthyle, propyle, butyle, pentyle, hexyle, heptyle et leurs isomères ramifiés,
◦ un ou plusieurs groupes acyle $-C(O)R_{13}$ avec $R_{13}$ représentant un groupe alkyle comportant 1 à 12 atomes de carbone choisi dans le groupe formé par méthyle, éthyle, propyle, butyle, pentyle, hexyle, heptyle et leurs isomères ramifiés,
◦ un ou plusieurs groupes carboxyle $-OC(O)R_{14}$ avec $R_{14}$ représentant un atome d'hydrogène ou un groupe alkyle choisi dans le groupe formé par méthyle, éthyle, propyle, butyle, pentyle, hexyle, heptyle et leurs isomères ramifiés,
◦ un ou plusieurs groupes nitrile (-CN),
◦ un ou plusieurs groupes nitro ($-NO_2$),
◦ un ou plusieurs groupes amino choisis dans le formé par $-NH_2$, $-NHCH_3$, - $N(CH_3)_2$, $-N(CH_2CH_3)_2$, $-NH(CH_2CH_3)$.

Dans ce seizième mode de réalisation,

- $R_5$ représentant un atome d'hydrogène, et
- $R_3$ et $R_4$ ensemble avec l'atome de carbone auquel ils sont liés, forment cyclohexényle, 2,3,4,7,8,9,11,12,14,15,16,17-dodécahydro-1H-cyclopenta[a]phénanthrényle, ou
- $R_3$, $R_4$ et $R_5$ ensemble avec l'atome de carbone auquel ils sont liés, forment un cyclohexényle.

Selon un **dix septième** mode de réalisation, lorsque n=m=1,

- le composé organique est de formule (VIII), et
- dans le composé de formule (I), Z est Y et Y représente un atome de soufre avec $R_3$, $R_4$ et $R_5$ ensemble avec l'atome de carbone auquel ils sont liés, forment un aryle comportant 6 à 10 atomes de carbone choisi dans le groupe formé par phényle ou benzyle éventuellement substitué par

◦ un ou plusieurs atomes d'halogène choisis parmi les atomes de fluor, chlore, brome ou iode,
◦ un ou plusieurs groupes alcoxy choisis dans le groupe formé par méthoxy, éthoxy, propyloxy, butyloxy, pentyloxy et leurs isomères ramifiés,
◦ un ou plusieurs groupes aryloxy choisi parmi le phénoxy et le benzyloxy,
◦ un ou plusieurs groupes alkyle choisis dans le groupe formé par méthyle, éthyle, propyle, butyle, pentyle, hexyle, heptyle et leurs isomères ramifiés,
◦ un ou plusieurs groupes thioalcoxy (-S-alkyle) avec le radical alkyle étant choisi dans le groupe formé par méthyle, éthyle, propyle, butyle, pentyle, hexyle, heptyle et leurs isomères ramifiés,
◦ un ou plusieurs groupes acyle $-C(O)R_{13}$ avec $R_{13}$ représentant un groupe alkyle comportant 1 à 12 atomes de carbone choisi dans le groupe formé par méthyle, éthyle, propyle, butyle, pentyle, hexyle, heptyle et leurs isomères ramifiés,
◦ un ou plusieurs groupes carboxyle $-OC(O)R_{14}$ avec $R_{14}$ représentant un atome d'hydrogène ou un groupe alkyle choisi dans le groupe formé par méthyle, éthyle, propyle, butyle, pentyle, hexyle, heptyle et leurs isomères ramifiés,
◦ un ou plusieurs groupes nitrile (-CN),
◦ un ou plusieurs groupes nitro ($-NO_2$),
◦ un ou plusieurs groupes amino choisis dans le formé par $-NH_2$, $-NHCH_3$, $-N(CH_3)_2$, $-N(CH_2CH_3)_2$, $-NH(CH_2CH_3)$.

Dans ce dix septième mode de réalisation de l'invention, $R_3$, $R_4$ et $R_5$ ensemble avec l'atome de carbone

auquel ils sont liés, forment un groupe phényle éventuellement substitué par un ou plusieurs groupes alcoxy choisis dans le groupe formé par méthoxy, éthoxy, propyloxy, butyloxy, pentyloxy et leurs isomères ramifiés.

Dans tous les modes de réalisation et les variantes de l'invention, dans le composé de formule (I) et le formiate silylé de formule (II), $R_0$, $R_1$ et $R_2$, indépendamment les uns des autres, sont choisis dans le groupe formé par un groupe alcoxy dont le groupe alkyle comprend 1 à 12 atomes de carbone, un groupe alkyle comprenant 1 à 20 atomes de carbone, un groupe aryle comprenant 6 à 20 atomes de carbone, ou un groupe aryloxy dont le groupe aryle comprend entre 6 à 20 atomes de carbones, lesdits groupes alkyle, aryle, alcoxy et aryloxy étant éventuellement substitués.

Dans tous les modes de réalisation et les variantes de l'invention, $R_0$, $R_1$ et $R_2$, indépendamment les uns des autres, peuvent être choisis dans le groupe formé par

- un groupe alcoxy dont le groupe alkyle comprend 1 à 12 atomes de carbone, par exemple, méthyloxy, éthyloxy, propyloxy et ses isomères ramifiés, butyloxy et ses isomères ramifiés, les groupes alkyles des alcoxy étant éventuellement substitués,
- un groupe alkyle comprenant 1 à 12 atomes de carbone, par exemple, méthyle, éthyle, propyle, butyle, pentyle, hexyle, heptyle, et leurs isomères ramifiés, lesdits groupes alkyles étant éventuellement substitués,
- un groupe aryle comprenant 6 à 10 atomes de carbone, par exemple, le phényle, le benzyle, lesdits groupes aryles étant éventuellement substitués.

Dans tous les modes de réalisation et les variantes de l'invention, de préférence, le formiate silylé de formule (II) est choisi dans le groupe formé par $Me_3SiOCHO$, $Et_3SiOCHO$, $iPr_3SiOCHO$, $MePh_2SiOCHO$, $t$$BuMe_2SiOCHO$ ou $(EtO)_3SiOCHO$.

Le procédé de l'invention peut être suivi d'une étape d'hydrolyse,de protonolyse ou de solvolyse afin de cliver la liaison Z-Si dans les composés silylés de formule (I). Ces procédures sont généralement bien connues et aisément accessibles pour l'homme du métier.

Dans le contexte de l'invention, la « protonolyse » signifie le clivage d'une liaison chimique par des acides de Brønsted. La solvolyse signifie le clivage d'une liaison par le solvant. Un cas particulier de solvolyse est l'hydrolyse lorsque l'eau est utilisée comme solvant ou en large excès.

Le procédé de l'invention a lieu en présence d'un catalyseur. Par catalyseur, au sens de l'invention, on entend tout composé capable de modifier, notamment en augmentant, la vitesse de la réaction chimique à laquelle il participe, et qui est régénéré à la fin de la réaction. Cette définition englobe à la fois les catalyseurs, c'est-à-dire les composés qui exercent leur activité catalytique sans avoir besoin de subir une quelconque modification ou conversion, et les composés (appelés également pré-catalyseurs) qui sont introduits dans le milieu réactionnel et qui y sont convertis en un catalyseur.

Dans le procédé de l'invention, les catalyseurs sont des catalyseurs métalliques, ces derniers étant choisis dans le groupe formé par les sels ou les complexes métalliques de:

- métaux alcalinoterreux choisis parmi le magnésium, le calcium ;
- métaux de transition choisis parmi le molybdène, le nickel, le fer, le cobalt, le zinc, le cuivre, le rhodium, le ruthénium, le platine, le palladium et l'iridium.

Le catalyseur métallique, peut être choisi parmi :

- les sels ou complexes de métaux alcalinoterreux choisi dans le groupe formé par, par exemple, $MgSO_4$, $MgCl_2$, $Mg(OAc)_2$, $Ca(BF_4)_2 \cdot xH_2O$, $CaCl_2$, $Ca(OAc)_2$.
- les sels ou complexes de métaux de transition choisi dans le groupe formé par, par exemple, $Fe(BF_4)_2 \cdot 6H_2O$, Fe(acac)3, $Fe(OAc)_2$, $FeBr_2$, $Cu(OTf)_2$, $Cu(OAc)_2 \cdot H_2O$, $Zn(OAc)_2$, Zn(BDI)Et, $ZnEt_2$, $RuCl_3 \cdot nH_2O$, Ru(COD)(Methylallyl)$_2$, [Ru($p$-cymène)$Cl_2$]$_2$, [Ru($\kappa^1$-OAc)($\kappa^2$-OAc)($\kappa^3$-triphos)], $Ru(dmso)_4Cl_2$, $Rh_2(OOCCH_3)_4$, $Rh(acac)_3$, $[Rh(COD)Cl]_2$, $Pd(OAc)_2$, $Pd(PPh_3)_4$, $NiCl_2$, $Ni(COD)_2$, $Ni(PPh_3)_2Cl_2$, $PtCl_2$, $PtCl_4$, $Pt(COD)(Me)_2$, $Pt(NH_3)_2Cl_2$.

Par « complexe métallique » il est entendu un composé organométallique ou inorganique de coordination dans lequel un ion métallique est lié à un ligand organique ou inorganique. Un complexe organométallique ou inorganique peut être obtenu par mélange d'un sel métallique avec un ligand, celui-ci se liant au métal par des atomes de phosphore, de carbone, d'azote, d'oxygène, d'hydrogène ou de silicium, par exemple.

Par exemple, le catalyseur métallique est obtenu :

- par mélange d'un sel métallique de fer comme par exemple Fe(acac)3, Fe(acac)2, ou $Fe(BF_4)_2(H_2O)_6$, avec un ligand de type phosphine ou amine comme par exemple TMEDA, dppe, $PP_3$ ; ou bien
- par mélange d'un sel de zinc comme par exemple $ZnCl_2$, $Zn(OAc)_2$, ou $ZnEt_2$ avec un ligand de type amine comme

par exemple TMEDA, pyridine, le carbène A.

Les catalyseurs peuvent, le cas échéant, être immobilisés sur des supports hétérogènes afin d'assurer une séparation facile dudit catalyseur et/ou son recyclage. Lesdits supports hétérogènes peuvent être choisis parmi les supports à base de gel de silice et de polymères plastiques comme, par exemple, le polystyrène ; les supports carbonés choisis parmi les nanotubes de carbone ; le carbure de silice ; l'alumine ; et le chlorure de magnésium ($MgCl_2$).

Dans le procédé de réduction selon l'invention, lorsque cela s'avère nécessaire, un additif peut également être utilisé. Les ligands cités ci-dessus peuvent également jouer le rôle de l'additif.

Par additif, au sens de l'invention, on entend tout composé capable d'augmenter la vitesse des transformations visées. Ceci peut être le résultat d'une réaction entre le catalyseur et ledit additif, par exemple entre le catalyseur et un ligand, ou entre l'additif et le composé organique de formule (III), (IV), (V), (VI), (VII), (VIII) ou (IX) utilisé.

Les additifs peuvent être choisis parmi :

- les ligands de type phosphine, amine, carboxylate ou carbène N-hétérocyclique,
- les acides organiques au sens de Brønsted,
- les acides au sens de Lewis,
- les bases au sens de Brønsted,
- les sels de métaux alcalins.

A titre d'exemples, l'additif peut être choisi parmi :

- la triadamantylephosphine ($PAdm_3$), le tris[2-diphénylephosphino)éthyle]phosphine ($PP_3$), le 1,1,1-tris(diphénylphosphinométhyl)ethane (triphos), le 1,3-Bis(2,6-diisopropylphényl)imidazol-2-ylidène (IPr), la tricyclohexylphosphine, l'acétate (AcO), l'acétylacétonate (acac), le 1,2-bis-diphénylphosphinoéthane (dppe), le *N,N,N',N'*-tétra-méthyl-éthylènediamine (TMEDA), le *N,N'*-bis(2,6-diisopropylphényl) β-dicétiminate (BDI), le 1,2-bis(diphénylphosphino)éthane (dppb), ou la pyridine ;
- l'acide trifluorométhanesulfonique (TfOH), l'acide trifluoroacétique (TFA), le bis(trifluorométhane)sulfonamide ($HNTf_2$) ;
- le trifluorure de bore ($BF_3$), le tris(pentafluorophényl)borane ($B(C_6F_5)_3$), le trichlorure d'aluminium ($AlCl_3$) ;
- la triéthylamine, le *tert*-butylate de potassium (*t*BuOK) ;
- le chlorure de lithium (LiCl), le chlorure de sodium (NaCl), le chlorure de potassium (KCl).

Les carbènes N-hétérocycliques éventuellement utilisés comme ligand et additif sont des carbènes N-hétérocycliques issus d'un sel d'imidazolium, lesdits carbènes étant, par exemple, choisis dans le groupe formé par les sels de 1,3-bis(2,6-diisopropylphényl)-1H-imidazol-3-ium (également appelé IPr), 1,3-bis(2,6-diisopropylphényl)-4,5-dihydro-1H-imidazol-3-ium (également appelé s-IPr), 1,3-bis(2,4,6-triméthylphényl)-1H-imidazol-3-ium (également appelé IMes), 1,3-bis(2,4,6-triméthylphényl)-4,5-dihydro-1H-imidazol-3-ium (également s-IMes), 4,5-dichloro-1,3-bis(2,6-diisopropylphényl)-1H-imidazol-3 ium (également appelé $Cl_2$-IPr), 1,3-di-tert-butyl-1H-imidazol-3-ium (également appelé ItBu), et 1,3-di-tert-butyl-4,5-dihydro-1H-imidazol-3-ium (également appelé s-ItBu), lesdits sels étant sous la forme de sels de chlorure ou de tétraphénylborate, par exemple.

Des exemples de carbènes N-hétérocycliques sont représentés dans la Figure 10.

Une sélection de ligands évoqués et qui peuvent être utilisés comme additifs est représentée en Figure 11.

Le procédé de l'invention génère une pression de gaz résultant de la formation de dioxyde de carbone et éventuellement de dihydrogène. La réaction peut alors se produire sous pression des gaz formés ou sous pression atmosphérique en collectant les gaz, par exemple dans une burette. Ce(s) gaz peuvent être réutilisés pour préparer l'acide formique par exemple par électro- réduction du $CO_2$ à $2e^-$.

Le procédé de l'invention peut avoir lieu dans un ou un mélange d'au moins deux solvants. Le solvant peut être choisis dans le groupe formé par :

- les éthers choisis parmi l'éther diéthylique, le THF, le diglyme, le 1,4-dioxane ;
- les hydrocarbures choisis parmi le benzène, ou le toluène ;
- les solvants azotés choisis parmi la pyridine, ou l'acétonitrile ;
- les sulfoxydes choisis parmi le diméthylesulfoxyde ;
- les halogénures d'alkyle choisis parmi le chloroforme, ou le chlorure de méthylène ; et
- un fluide supercritique choisis parmi le $CO_2$ supercritique.

Lorsque le formiate silylé de formule (II) est liquide, outre son rôle de d'équivalent synthétique d'hydrosilane, il peut également servir de solvant. Il ne sera alors pas nécessaire d'ajouter un solvant supplémentaire.

Le procédé de l'invention a lieu à une température comprise entre 0 et 150°C, de préférence entre 30 et 100°C, bornes incluses.

La durée des réactions de transfert dépendra du type de composé organique, du formiate silylé, et du catalyseur employés. En général, la durée du procédé est de 1 minutes à 72 heures, de préférence de 1 minute à 24 heures, bornes incluses.

Les différents réactifs utilisés dans le procédé de l'invention (l'acide formique, les chlorosilanes, les catalyseurs, les additifs et les composés organiques) sont, en général, des composés commerciaux ou peuvent être préparés par des procédés connus de l'homme du métier.

La quantité du composé organique de formule (III), (IV), (V), (VI), (VII), (VIII) ou (IX) est de 0,1 à 1 équivalent molaire, de préférence de 0,5 à 1 équivalent molaire, bornes incluses, par rapport au formiate silylé de formule (II).

La quantité du catalyseur est de 0,0001 à 0,2 équivalent molaire, de préférence de 0,005 à 0,1 équivalent molaire, bornes incluses, par rapport au composé organique de formule (III), (IV), (V), (VI), (VII), (VIII) ou (IX).

Lorsqu'un additif est utilisé, la quantité de l'additif est de 0,001 à 2 équivalents molaires, de préférence de 0,01 à 1 équivalent molaire, bornes incluses, par rapport au composé organique de formule (III), (IV), (V), (VI), (VII), (VIII) ou (IX).

L'invention a également pour objet, l'utilisation du procédé de préparation de composés de formule (I) selon l'invention,

- pour la préparation de réactifs pour la chimie fine,
- pour la préparation de réactifs pour la chimie lourde, notamment l'industrie des silicones,
- dans la fabrication de vitamines, de produits pharmaceutiques, de colles, de fibres acryliques, de cuirs synthétiques, de pesticides.

L'invention a, en outre, comme objet un procédé de fabrication de vitamines, de produits pharmaceutiques, de colles, de fibres acryliques, de cuirs synthétiques, de pesticides comprenant une étape préparation de composé organique de formule (I) selon le procédé de l'invention.

D'autres avantages et caractéristiques de la présente invention apparaîtront à la lecture des exemples ci-dessous donnés à titre illustratif et non limitatif et les figures annexées.

- La Figure 1 représente ainsi les principales voies d'accès aux hydrosilanes et chlorosilanes dits « de base » : la réduction carbothermique de la silice $SiO_2$ ou de silicates $SiO_4^{4-}$ (étape 1) ; l'oxydation du silicium métal (étape 2) ; la fonctionnalisation du trichlorosilane (étape 3).
- La Figure 2 représente résume les problèmes liés à la préparation des hydrosilanes (sections 1 et 2) : la synthèse d'hydrosilanes par réduction et oxydation du silicium (section 1) ; la synthèse redox neutre d'hydrosilanes par $LIAIH_4$ (section 2).
- La Figure 3 représente l'hydrosilylation par transfert radicalaire avec les cyclohexa-1,4-diène (1,4-CHDN) substitués en position 2 par des groupements silyles (1,4-CHDN silylés 1 et 9).
- La Figure 4 représente l'hydrosilylation par transfert ionique du 1-méthylcyclohexène catalysé par le $B(C_6F_5)_3$ comme décrit par M. Oestreich et coll. (Angewandte Chemie Int. Ed. 2013, 52, 11905-11907).
- La Figure 5 représente l'hydrosilylation par transfert ionique d'alcynes, de cétones et d'imines catalysé par le $B(C_6F_5)_3$.
- La Figure 6 représente le couplage déshydrogénant par transfert de l'octanol (24) catalysé par le $B(C_6F_5)_3$ comme décrit par M. Oestreich et coll. (European Journal of Organic Chemistry 2014, 2014, 2077-2083).
- La Figure 7 représente la synthèse redox neutre de formiate silylés comme équivalents renouvelables d'hydrosilanes.
- La Figure 8 résume les réactions d'hydrosilylation par transfert et de couplage déshydrogénant par transfert avec différents types de substrat organique.
- La Figure 9 représente les réactions d'hydrosilylation par transfert et de couplage déshydrogénant par transfert avec les amides.
- La Figure 10 représente des exemples de carbènes N-hétérocyclique pouvant être utilisés comme additifs et comme ligands.
- La Figure 11 représente une sélection de ligands évoqués ci-dessus et qui peuvent être utilisés comme additifs.

**EXEMPLES**

Un ensemble de résultats est présenté ci-dessous, donnant des exemples d'hydrosilylation de carbonyles (aldéhydes et cétones) par transfert (exemple 1) et de couplages déshydrogénant par transfert (exemple 2) avec différents formiates silylés. Ces réactions sont catalysées par des métaux de transitions, éventuellement en présence d'additifs. Les abréviations employés pour décrire les catalyseurs utilisés seront définis à la fin du tableau. Les rendements sont

obtenus par intégration des signaux du produit silylé par rapport à ceux du mésitylène utilisé comme étalon interne. Dans certains cas, un rendement en produit isolé (après purification telle que décrite ci-dessus) sera également donné.

Les rendements seront toujours calculés à l'aide de la formule suivante :

$$\rho(transfert) = \frac{n(produit)}{n_0(substrat)}$$

avec :

$\rho$(transfert) : rendement en produit éventuellement silylé après transfert de l'hydrosilane (%)
$n_0$(substrat) : quantité de matière en substrat organique introduit initialement (mmol)
n(produit silylé) : quantité de matière en produit après transfert de l'hydrosilane (mmol).

**Protocole de préparation des formiates silylés de formule (II)**

Les formiates silylés de formule (II) peuvent être préparé par tout procédé connu de l'homme du métier. Par exemple, $Et_3SiOCHO$ peut être préparé à partir de $Et_3SiCl$ et du formiate de sodium ($HCO_2Na$) selon le protocole décrit par F. A. Leblanc, W. E. Piers, M. Parvez, Angew. Chem. Int. Ed., 2014, 53, 789-792. De plus, $Me_3SiOCHO$ peut être obtenu à partir de $Me_3SiCl$ et d'acide formique en présence d'une base organique telle que la pyridine dans l'éther diéthylique selon le protocole décrit par Etienne (Y. Etienne, C. R. Hebd. Seances Acad. Sci., 1952 , 235, 966-968).

Dans la présente invention, les formiates silylés, sont synthétisés à partir d'acide formique, d'un chlorosilane de formule générale $R_{0(x)}R_{1(y)}R_{2(z)}Si(Cl)_{4-(x+y+z)}$ ($x$ = 0 ou 1 ; $y$ = 0 ou 1 ; $z$ = 0 ou 1) en présence éventuellement d'une base et d'un solvant :
Ces synthèses peuvent par exemple être réalisées selon le protocole expérimental suivant :

1. Sous atmosphère inerte, en boîte à gants, le chlorosilane, l'acide formique (de 1 à 4,4 équivalents molaire par rapport au chlorosilane) et, éventuellement, le solvant sont introduits dans un ballon à fond rond. L'ordre d'introduction des réactifs n'a pas d'importance.
2. Le ballon est ensuite sorti de la boîte à gants tout en maintenant le milieu réactionnel sous atmosphère inerte et la base est ajoutée goutte à goutte (dans les même proportions que l'acide formique) à 0°C. Une fois l'addition terminée, le mélange réactionnel est réchauffé à température ambiante et agité vigoureusement pendant 15 heures sous atmosphère inerte.
3. Le brut réactionnel est ensuite filtré sur Büchner, puis le filtrat est transféré dans un ballon à fond rond et le solvant est évaporé sous vide. Le résidu obtenu est purifié par distillation fractionnée.

Ce protocole général est exemplifié avec la synthèse de $Et_3SiOCHO$ à partir de $Et_3SiCl$ :

1. Sous atmosphère inerte, en boîte à gants, $Et_3SiCl$ (10.4 mL, 62 mmol, 1 équiv.), de l'éther anhydre (100 mL) et l'acide formique (2.4 mL, 62 mmol, 1 équiv.) sont introduits dans un ballon bicol à fond rond de 500 mL.
2. Le ballon est ensuite sorti de la boîte à gants tout en maintenant le milieu réactionnel sous atmosphère inerte et la triéthylamine est ajoutée goutte à goutte (8,4 mL ; 62 mmol ;1 équiv.) à 0 °C. Une fois l'addition terminée, le mélange réactionnel est réchauffé à température ambiante et agité vigoureusement pendant 15 heures sous atmosphère inerte.
3. Le brut réactionnel est ensuite filtré sur Büchner, le solide est lavé avec de l'éther diéthylique (3 x 20 mL) puis avec du pentane (20 mL). Le filtrat est transféré dans un ballon à fond rond et les composés volatils sont évaporés sous vide à 0 °C. Le résidu obtenu est purifié par distillation fractionnée pour otenir 6,1 g (61 %) du liquide incolore $Et_3SiOCHO$ (62 - 64 °C à 3600 Pa (27 mm Hg).

Le tableau ci-dessous présente quelques résultats obtenus pour la synthèse de différents formiates silylés :

| **Chlorosilane (mmol)** | **Quantité d'acide formique (mmol)** | **Base (mmol)** | **Solvant (mL)** | **Formiate silylé** | **Rendement (%)** |
|---|---|---|---|---|---|
| $Me_3SiCl$ (85) | 85 | Pyridine (85) | $Et_2O$ (20) | $Me_3SiOCHO$ | 67% |

(suite)

| Chlorosilane (mmol) | Quantité d'acide formique (mmol) | Base (mmol) | Solvant (mL) | Formiate silylé | Rendement (%) |
|---|---|---|---|---|---|
| $Et_3SiCl$ (62) | 62 | $NEt_3$ (62) | $Et_2O$ (100) | $Et_3SiOCHO$ | 61% |
| $(iPr)_3SiCl$ (24,7) | 24,7 | $NEt_3$ (25) | $Et_2O$ (50) | $(iPr)_3SiOCHO$ | 58% |
| $Ph_2MeSiCl$ (19) | 19,2 | $NEt_3$ (19,2) | $Et_2O$ (50) | $Ph_2MeSiOCHO$ | 65% |
| $(EtO)_3SiCl$ (24) | 24 | $NEt_3$ (24,1) | $Et_2O$ (50) | $(EtO)_3SiOCHO$ | 57% |

Une fois les formiates silylés obtenus, le procédé de l'invention peut être réalisé selon le protocole expérimental suivant :

1. Sous atmosphère inerte, en boîte à gants, le formiate silylé de formule générale $R_{0(x)}R_{1(y)}R_{2(z)}Si(OCHO)_{(x+y+z)}$ ($x$ = 0 ou 1 ; $y$ = 0 ou 1 ; $z$ = 0 ou 1) (0,1 à 500 équivalents molaires par rapport au composé organique), le composé organique, le catalyseur (de 0,001 à 0,5 équivalent molaire par rapport au composé organique) et/ou le solvant et/ou l'additif sont introduits dans un tube de Schlenk qui peut éventuellement être scellé par un robinet J. Young. L'ordre d'introduction des réactifs n'a pas d'importance.

2. Le mélange réactionnel est ensuite agité sous atmosphère inerte à une température comprise entre 0 et 150 °C (préférentiellement > 40°C) jusqu'à la conversion totale du substrat organique (de 1 minute à 72 heures de réaction). Le suivi de la réaction est assuré par RMN du proton $^1H$ et/ou du carbone $^{13}C$ et/ou par GC/MS et/ou par chromatographie sur couche mince (CCM).

3. Lorsque la réaction est terminée, si celle-ci a été conduite en tube scellé, la pression dans le tube est libérée. Dans tous les cas, le solvant est évaporé sous vide.

4. Le résidu obtenu après évaporation du solvant est ensuite purifié par distillation ou par colonne de chromatographie sur gel de silice ou sur alumine.

Ce protocole général est exemplifié ci-dessous avec l'hydrosilylation par transfert du benzaldehyde en présence de $Et_3SiOCHO$ et du catalyseur [Ru($\kappa^1$-OAc)($\kappa^2$-OAc)($\kappa^3$-triphos)] :

1. Sous atmosphère inerte, en boîte à gants, le catalyseur Ru($\kappa^1$-OAc)($\kappa^2$-OAc)($\kappa^3$-triphos)] (8,5 mg ; 0,01 mmol) et l'acétonitrile (2 mL) sont introduits dans un tube de Schlenk de 10 mL. Le mélange réactionnel obtenu est agité 5 min jusqu'à obtention d'une solution homogène jaune puis le benzaldéhyde (51 µL ; 0,5 mmol ; 1 équiv.) et $Et_3SiOCHO$ (96 mg ; 0,6 mmol ; 1,2 équiv.) sont ajoutés au milieu réactionnel.

2. Le tube de Schlenk est ensuite scellé et le mélange réactionnel est agité sous atmosphère inerte à une température comprise entre 70 °C jusqu'à la conversion pendant 1 h.

3. Les composés volatils sont évaporés sous vide et le résidu obtenu est purifié par colonne de chormatographie sur gel de silice (99 : 1 éther de pétrole/acétate d'éthyle). $PhCH_2OSiEt_3$ (huile incolore) est obtenu avec un rendement de 91 %.

**Exemple 1 : Hydrosilylation par transfert**

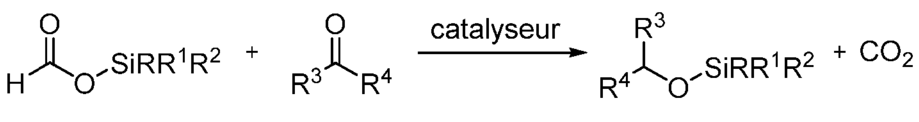


(1)

| Formiate silylé | Substrat | Catalyseur (%mol) | Additif | Solvant | *t* (h)/T (°C) | Produit | Rendement (%) |
|---|---|---|---|---|---|---|---|
| $Et_3SiOCHO$ | PhCHO | [Ru(*p*-cymene)$Cl_2]_2$ (2) | - | MeCN | 26/100 | $PhCH_2OSiEt_3$ | 73 |
| $Et_3SiOCHO$ | PhCHO | [$RuCl_2(dmso)_4$] (4) | triphos | MeCN | 1.5/95 | $PhCH_2OSiEt_3$ | > 99 |
| $Et_3SiOCHO$ | PhCHO | [Ru(*p*-cymene)$Cl_2]_2$ (2) | triphos | MeCN | 22/70 | $PhCH_2OSiEt_3$ | > 99 |
| $Et_3SiOCHO$ | PhCHO | [Ru(*p*-cymene)$Cl_2]_2$ (2) | $PAdm_3$ | MeCN | 26/100 | $PhCH_2OSiEt_3$ | |
| $Et_3SiOCHO$ | PhCHO | Ru(Me-allyl)$_2$(COD) (4) | - | MeCN | 7/70 | $PhCH_2OSiEt_3$ | > 99 |
| $Et_3SiOCHO$ | PhCHO | Ru(Me-allyl)$_2$(COD) (4) | dppp | MeCN | 3,5/70 | $PhCH_2OSiEt_3$ | > 99 |
| $Et_3SiOCHO$ | PhCHO | Ru(Me-allyl)$_2$(COD) (4) | triphos | MeCN | 50 min/70 | $PhCH_2OSiEt_3$ | > 99 |
| $Et_3SiOCHO$ | PhCHO | [Ru($\kappa^1$-OAc)($\kappa^2$-OAc)($\kappa^3$-triphos)] (4) | - | MeCN | >5 min/70 | $PhCH_2OSiEt_3$ | > 99 |
| $Et_3SiOCHO$ | PhCHO | [Ru($\kappa^1$-OAc)($\kappa^2$-OAc)($\kappa^3$-triphos)] (4) | - | MeCN | 14/TA | $PhCH_2OSiEt_3$ | > 99 |
| $Et_3SiOCHO$ | PhCHO | [Ru($\kappa^1$-OAc)($\kappa^2$-OAc)($\kappa^3$-triphos)] (2) | - | MeCN | 0,5/70 | $PhCH_2OSiEt_3$ | > 99 |
| $Et_3SiOCHO$ | PhCHO | [Ru($\kappa^1$-OAc)($\kappa^2$-OAc)($\kappa^3$-triphos)] (2) | - | THF | 0,5/70 | $PhCH_2OSiEt_3$ | > 99 |
| $Me_3SiOCHO$ | PhCHO | [Ru($\kappa^1$-OAc)($\kappa^2$-OAc)($\kappa^3$-triphos)] (2) | - | MeCN | 0,5/70 | $PhCH_2OSiMe_3$ | > 99 |
| $Ph_2MeSiOCHO$ | PhCHO | [Ru($\kappa^1$-OAc)($\kappa^2$-OAc)($\kappa^3$-triphos)] (2) | - | MeCN | 0.5/70 | $PhCH_2OSiMePh_2$ | > 99 |
| $(EtO)_3SiOCHO$ | PhCHO | [Ru($\kappa^1$-OAc)($\kappa^2$-OAc)($\kappa^3$-triphos)] (2) | - | MeCN | 2/70 | $PhCH_2OSi(OEt)_3$ | 50 |
| $Et_3SiOCHO$ | 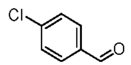 | [Ru($\kappa^1$-OAc)($\kappa^2$-OAc)($\kappa^3$-triphos)] (2) | - | MeCN | 0,5/70 | 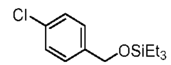 | > 99 |
| $Et_3SiOCHO$ | 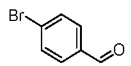 | [Ru($\kappa^1$-OAc)($\kappa^2$-OAc)($\kappa^3$-triphos)] (2) | - | MeCN | 0,5/70 | 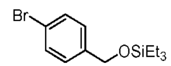 | > 99 |
| $Et_3SiOCHO$ | 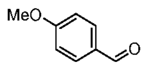 | [Ru($\kappa^1$-OAc)($\kappa^2$-OAc)($\kappa^3$-triphos)] (2) | - | MeCN | 0,5/70 | 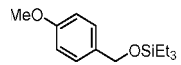 | > 99 |
| $Et_3SiOCHO$ | 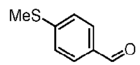 | [Ru($\kappa^1$-OAc)($\kappa^2$-OAc)($\kappa^3$-triphos)] (2) | - | MeCN | 0,5/70 | 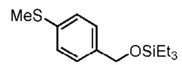 | > 99 (95) |
| $Et_3SiOCHO$ | 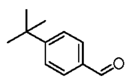 | [Ru($\kappa^1$-OAc)($\kappa^2$-OAc)($\kappa^3$-triphos)] (2) | - | MeCN | 0,5/70 | 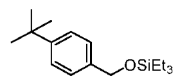 | > 99 (92) |
| $Et_3SiOCHO$ | 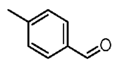 | [Ru($\kappa^1$-OAc)($\kappa^2$-OAc)($\kappa^3$-triphos)] (2) | - | MeCN | 0,5/70 | 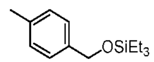 | > 99 |

(suite)

| Formiate silylé | Substrat | Catalyseur (%mol) | Additif | Solvant | *t* (h)/T (°C) | Produit | Rendement (%) |
|---|---|---|---|---|---|---|---|
| $Et_3SiOCHO$ | 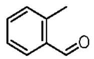 | [Ru(κ1-OAc)(κ2-OAc)(κ3-triphos)] (2) | - | MeCN | 0,5/70 | 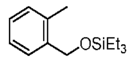 | > 99 |
| $Et_3SiOCHO$ | 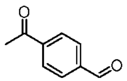 | [Ru(κ1-OAc)(κ2-OAc)(κ3-triphos)] (2) | - | MeCN | 0,5/70 | 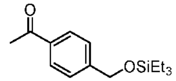 | > 99 |
| $Et_3SiOCHO$ | 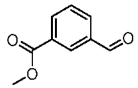 | [Ru(κ1-OAc)(κ2-OAc)(κ3-triphos)] (2) | - | MeCN | 0,5/70 | 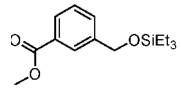 | > 99 |
| $Et_3SiOCHO$ | 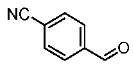 | [Ru(κ1-OAc)(κ2-OAc)(κ3-triphos)] (2) | - | MeCN | 0,5/70 | 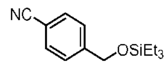 | 91 |
| $Et_3SiOCHO$ | 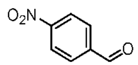 | [Ru(κ1-OAc)(κ2-OAc)(κ3-triphos)] (2) | - | MeCN | 0,5/70 | 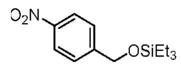 | > 99 |
| $Et_3SiOCHO$ | 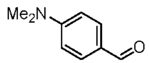 | [Ru(κ1-OAc)(κ2-OAc)(κ3-triphos)] (2) | - | MeCN | 1,5/70 | 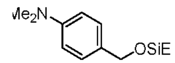 | > 99 |
| $Et_3SiOCHO$ | 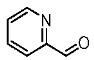 | [Ru(κ1-OAc)(κ2-OAc)(κ3-triphos)] (2) | - | MeCN | 0,5/70 | 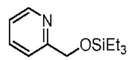 | > 99 |
| $Et_3SiOCHO$ | 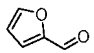 | [Ru(κ1-OAc)(κ2-OAc)(κ3-triphos)] (2) | - | MeCN | 0,5/70 | 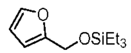 | > 99 |
| $Et_3SiOCHO$ | 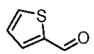 | [Ru(κ1-OAc)(κ2-OAc)(κ3-triphos)] (2) | - | MeCN | 0,5/70 | 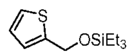 | > 99 |
| $Et_3SiOCHO$ | 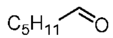 | [Ru(κ1-OAc)(κ2-OAc)(κ3-triphos)] (2) | - | MeCN | 0,5/70 | 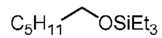 | > 99 |
| $Et_3SiOCHO$ | 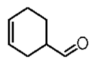 | [Ru(κ1-OAc)(κ2-OAc)(κ3-triphos)] (2) | - | MeCN | 0,5/70 | 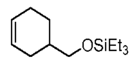 | > 99 (95) |
| $Et_3SiOCHO$ | 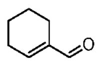 | [Ru(κ1-OAc)(κ2-OAc)(κ3-triphos)] (2) | - | MeCN | 0,5/70 | 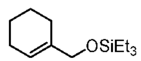 | > 99 (90) |
| $Et_3SiOCHO$ | 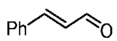 | [Ru(κ1-OAc)(κ2-OAc)(κ3-triphos)] (2) | - | MeCN | 0,5/70 | 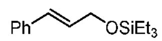 | > 99 |

(suite)

| Formiate silylé | Substrat | Catalyseur (%mol) | Additif | Solvant | *t* (h)/T (°C) | Produit | Rendement (%) |
|---|---|---|---|---|---|---|---|
| $Et_3SiOCHO$ | 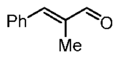 | [Ru($\kappa^1$-OAc)($\kappa^2$-OAc)($\kappa^3$-triphos)] (2) | - | MeCN | 0,5/70 | 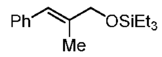 | > 99 (85) |
| $Et_3SiOCHO$ | 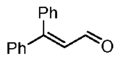 | [Ru($\kappa^1$-OAc)($\kappa^2$-OAc)($\kappa^3$-triphos)] (2) | - | MeCN | 0,5/70 | 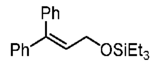 | > 99 (98) |
| $Et_3SiOCHO$ | 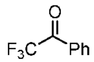 | [Ru($\kappa^1$-OAc)($\kappa^2$-OAc)($\kappa^3$-triphos)] (2) | - | MeCN | 0,5/70 | 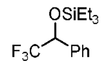 | > 99 |

Conditions réactionnelles : formiate silylé (0,12 - 0,15 mmol) ; carbonyle (0,1 mmol) ; solvant (0,4 mL); Les rendements entre parenthèse sont des rendements isolés après purification et déterminés en adaptant les conditions réactionnelles précédentes pour que la quantité de substrat soit de 0,5 mmol.

Les abréviations employées pour décrire les catalyseurs et les additifs utilisés sont : dppp (1,3-bis(diphénylphosphino)propane) ; triphos (1,1,1-tris(diphénylphosphinométhyl)éthane) ; COD (cylooctadiène) ; Me-allyl (méthylallyl) ; dmso = diméthylsulfoxyde ; Adm = adamantyle, $PAdm_3$ = la triadamantylephosphine.

Tous les catalyseurs, les ligands ainsi que les aldéhydes présentés dans le tableau ci-dessus sont commerciaux à l'exception du complexe [Ru($\kappa^1$-OAc)($\kappa^2$-OAc)($\kappa^3$-triphos)] qui peut être aisément synthétisé par l'homme du métier à partir de réactifs commerciaux selon le protocole décrit ci-après.

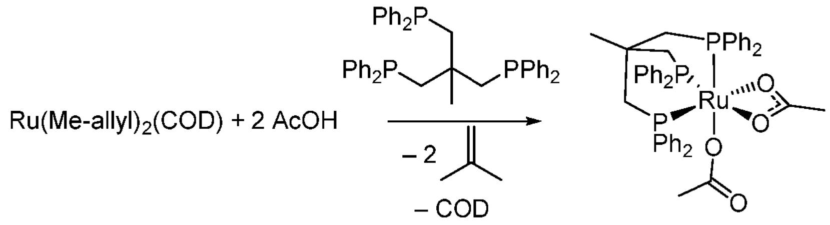


En boîte à gants, sous atmosphère inerte, le complexe commercial $Ru(COD)(methylallyl)_2$ (160 mg, 0,5 mmol, 1 equiv.), la triphos (0,5 mmol, 312 mg, 1 équivalent) ainsi que 20 mL de THF anhydre sont ajoutés dans un ballon à fond rond de 100-mL muni d'une valve J-Young. Une solution jaune et homogène est obtenue, à laquelle l'acide acétique (70 µL, 1,2 mmol, 2,4 équivalents) est ajouté en une seule fois à l'aide d'une seringue. Le ballon est ensuite scellé, sorti de la boite à gants et chauffé à 90 °C dans un bain d'huile pendant 15 h. Le mélange réactionnel est ensuite refroidi à température ambiante (20°C + 5°C) et le solvant ainsi que les composés volatils sont évaporés sous vide. Un solide jaune est obtenu et celui-ci est repris dans environ 5 mL d'éther diéthylique préalablement refroidie à - 20°C. Le solide en suspension est alors récupéré par filtration sur Büchner, lavé avec 5 mL d'$Et_2O$ également refroidie et séché sous vide poussé (1 Pa ($10^{-2}$ mbar)). Le complexe [Ru($\kappa^1$-OAc)($\kappa^2$-OAc)(triphos)] (323 mg, 78 %) est obtenu sous la forme d'une poudre jaune et caractérisé.

**$^1$H NMR (200 MHz, $CD_2Cl_2$)** δ 7.38 (m, 12H), 7.23 - 7.07 (m, 6H), 6.98 (t, *J* = 6.8 Hz, 12H), 2.20 (s, 6H), 1.87 (s, 6H), 1.51 (s, 3H).

**$^{13}$C NMR (50 MHz, $CD_2Cl_2$)** δ 181.74 (s), 137.27 (dd, *J* = 29.0, 15.0 Hz), 132.78 (dd, *J* = 6.4, 3.2 Hz), 129.30 (s), 128.06 (dd, *J* = 6.4, 3.2 Hz), 39.07 - 38.41 (m), 38.32 - 37.57 (m), 35.00 - 33.74 (m), 25.66 (s).

**$^{31}$P NMR (81 MHz, $CD_2Cl_2$)** δ 40.99 (s).

**Analyse élémentaire:** calcd (%) for $C_{45}H_{45}O_4P_3Ru$ (843.84 g.mol$^{-1}$): C 64.05, H 5.38, trouvé: C 63.16, H 5.32.

**Exemple 2 : Couplage déshydrogénant par transfert**

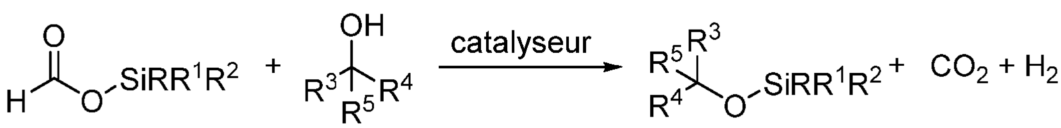


(2)

| Formiate silylé (mmol) | Substrat (mmol) | Catalyseur (mmol) | Additif (mmol) | Solvant | *t* (h)/T (°C) | Produit | Rendement (%) |
|---|---|---|---|---|---|---|---|
| $Et_3SiOCHO$ (0,15) | $PhCH_2OH$ (0,1) | [Ru(κ$^1$-OAc)(κ$^2$-OAc)(κ$^3$-triphos)] (1%) | - | MeCN | 0,5/70 | $PhCH_2OSiEt_3$ | > 99 |
| $Et_3SiOCHO$ (0,15) | $PhCH_2OH$ (0,1) | [Ru(κ$^1$-OAc)(κ$^2$-OAc)(κ$^3$-triphos)] (1%) | - | THF | 4,5/70 | $PhCH_2OSiEt_3$ | > 99 |
| $Et_3SiOCHO$ (0,15) | $PhCH_2OH$ (0,1) | [Ru(κ$^1$-OAc)(κ$^2$-OAc)(κ$^3$-triphos)] (1%) | - | DCM | 8,5/70 | $PhCH_2OSiEt_3$ | > 99 |
| $Et_3SiOCHO$ (0,15) | $PhCH_2OH$ (0,1) | [Ru(κ$^1$-OAc)(κ$^2$-OAc)(κ$^3$-triphos)] (1%) | - | $CH_3NO_2$ | 1,5/70 | $PhCH_2OSiEt_3$ | > 99 |
| $iPr_3SiOCHO$ (0,15) | $PhCH_2OH$ (0,1) | [Ru(κ$^1$-OAc)(κ$^2$-OAc)(κ$^3$-triphos)] (1%) | - | MeCN | 2,5/70 | $PhCH_2OSi(iPr)_3$ | 31 |
| $(OEt)_3SiOCHO$. (0,15) | $PhCH_2OH$ (0,1) | [Ru(κ$^1$-OAc)(κ$^2$-OAc)(κ$^3$-triphos)] (1%) | - | MeCN | 18/70 | $PhCH_2OSi(OEt)_3$ | 93 |
| $MePh_2SiOCHO$ (0,15) | $PhCH_2OH$ (0,1) | [Ru(κ$^1$-OAc)(κ$^2$-OAc)(κ$^3$-triphos)] (1%) | - | MeCN | 1/70 | $PhCH_2OSiMePh_2$ | > 99 |
| $Me_3SiOCHO$ (0,15) | $PhCH_2OH$ (0,1) | [Ru(κ$^1$-OAc)(κ$^2$-OAc)(κ$^3$-triphos)] (1%) | - | MeCN | 1/70 | $PhCH_2OSiMe_3$ | > 99 |
| $Et_3SiOCHO$ (0,15) | 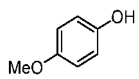 (0,1) | [Ru(κ$^1$-OAc)(κ$^2$-OAc)(κ$^3$-triphos)] (1%) | - | MeCN | 1/70 | 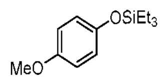 | 93 |
| $iPr_3SiOCHO$ (0,15) | 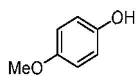 (0,1) | [Ru(κ$^1$-OAc)(κ$^2$-OAc)(κ$^3$-triphos)] (1%) | - | MeCN | 2,5/70 | 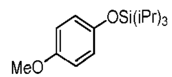 | >99 |
| $(OEt)_3SiOCHO$ (0,15) | 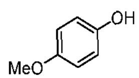 (0,1) | [Ru(κ$^1$-OAc)(κ$^2$-OAc)(κ$^3$-triphos)] (1%) | - | MeCN | 18/70 | 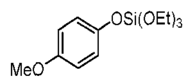 | 62 |
| $MePh_2SiOCHO$ (0,15) | 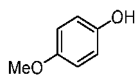 (0,1) | [Ru(κ$^1$-OAc)(κ$^2$-OAc)(κ$^3$-triphos)] (1%) | - | MeCN | 1/70 | 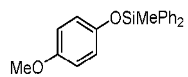 | > 99 |

(suite)

| Formiate silylé (mmol) | Substrat (mmol) | Catalyseur (mmol) | Additif (mmol) | Solvant | *t* (h)/T (°C) | Produit | Rendement (%) |
|---|---|---|---|---|---|---|---|
| $Me_3SiOCHO$ (0,15) | 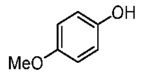 (0,1) | [Ru(κ$^1$-OAc)(κ$^2$-OAc)(κ$^3$-triphos)] (1%) | - | MeCN | 1/70 | 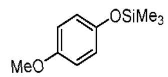 | > 99 |
| $Et_3SiOCHO$ (0,15) | 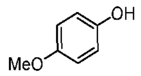 (0,1) | [Ru(κ$^1$-OAc)(κ$^2$-OAc)(κ$^3$-triphos)] (1%) | - | Dichloromethane (DCM) | 1/70 | 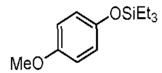 | > 99 |
| $Et_3SiOCHO$ (0,15) | 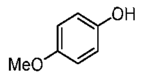 (0,1) | [Ru(κ$^1$-OAc)(κ$^2$-OAc)(κ$^3$-triphos)] (1%) | - | Benzene | 1/70 | 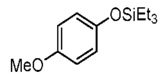 | > 99 |
| $Et_3SiOCHO$ (0,15) | 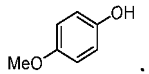 . (0,1) | [Ru(κ$^1$-OAc)(κ$^2$-OAc)(κ$^3$-triphos)] (1%) | - | THF | 1/70 | 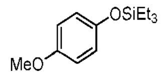 | 95 |
| $Et_3SiOCHO$ (0,15) | Acétoïne (0,1) | [Ru(κ$^1$-OAc)(κ$^2$-OAc)(κ$^3$-triphos)] (1%) | - | MeCN | 4/70 | 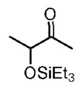 | 27 |
| $Et_3SiOCHO$ (0.15) | 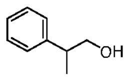 (0.1) | [Ru(κ$^1$-OAc)(κ$^2$-OAc)(κ$^3$-triphos)] (1%) | - | MeCN | 1/70 | 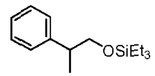 | > 99 |
| $Et_3SiOCHO$ (0,15) | 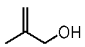 (0,1) | [Ru(κ$^1$-OAc)(κ$^2$-OAc)(κ$^3$-triphos)] (1%) | - | MeCN | 1/70 | 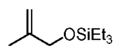 | > 99 |
| $Et_3SiOCHO$ (0,15) | 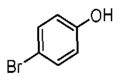 (0,1) | [Ru(κ$^1$-OAc)(κ$^2$-OAc)(κ$^3$-triphos)] (1%) | - | MeCN | 1/70 | 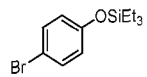 | 98 |

(suite)

| Formiate silylé (mmol) | Substrat (mmol) | Catalyseur (mmol) | Additif (mmol) | Solvant | *t* (h)/T (°C) | Produit | Rendement (%) |
|---|---|---|---|---|---|---|---|
| $Et_3SiOCHO$ (0,15) | 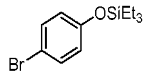 (0,1) | [Ru(κ$^1$-OAc)(κ$^2$-OAc)(κ$^3$-triphos)] (1%) | - | MeCN | 1/70 | 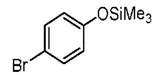 | > 99 |
| $Et_3SiOCHO$ (0,15) | 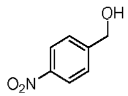 (0,1) | [Ru(κ$^1$-OAc)(κ$^2$-OAc)(κ$^3$-triphos)] (1%) | - | MeCN | 1/70 | 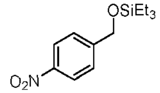 | > 99 |
| $Et_3SiOCHO$ (0,15) | 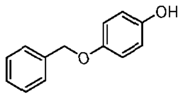 (0,1) | [Ru(κ$^1$-OAc)(κ$^2$-OAc)(κ$^3$-triphos)] (1%) | - | MeCN | 1/70 | 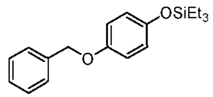 | >99 |
| $Et_3SiOCHO$ (0,15) | 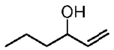 (0,1) | [Ru(κ$^1$-OAc)(κ$^2$-OAc)(κ$^3$-triphos)] (1%) | - | MeCN | 1/70 | 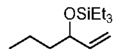 | 54 |
| $Et_3SiOCHO$ (0.15) | 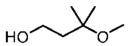 (0.1) | [Ru(κ$^1$-OAc)(κ$^2$-OAc)(κ$^3$-triphos)] (1%) | - | MeCN | 1/70 | 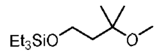 | 95 |
| $Et_3SiOCHO$ (0,15) | 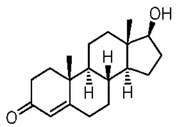 (0,1) | [Ru(κ$^1$-OAc)(κ$^2$-OAc)(κ$^3$-triphos)] (1%) | - | MeCN | 5/70 | 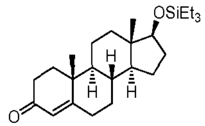 | 65 |
| $Et_3SiOCHO$ (0,15) | 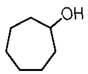 (0,1) | [Ru(κ$^1$-OAc)(κ$^2$-OAc)(κ$^3$-triphos)] (1%) | - | MeCN | 1/70 | 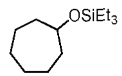 | 90 |
| $Et_3SiOCHO$ (0,15) | 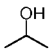 (0,1) | [Ru(κ$^1$-OAc)(κ$^2$-OAc)(κ$^3$-triphos)] (1%) | - | MeCN | 1/70 | 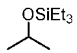 | 80 |

(suite)

| Formiate silylé (mmol) | Substrat (mmol) | Catalyseur (mmol) | Additif (mmol) | Solvant | *t* (h)/T (°C) | Produit | Rendement (%) |
|---|---|---|---|---|---|---|---|
| $Et_3SiOCHO$ (0,15) | 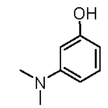 (0,1) | [Ru(κ$^1$-OAc)(κ$^2$-OAc)(κ$^3$-triphos)] (1%) | - | MeCN | 1/70 | 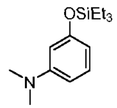 | > 99 |
| $Et_3SiOCHO$ (0,15) | 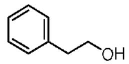 (0,1) | [Ru(κ$^1$-OAc)(κ$^2$-OAc)(κ$^3$-triphos)] (1%) | - | MeCN | 1/70 | 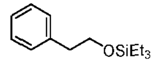 | 98 |
| $Et_3SiOCHO$ (0,15) | 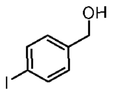 (0,1) | [Ru(κ$^1$-OAc)(κ$^2$-OAc)(κ$^3$-triphos)] (1%) | - | MeCN | 1/70 | 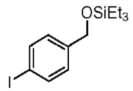 | >99 |
| $Me_3SiOCHO$ (0,15) | 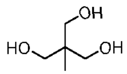 (0,1) | [Ru(κ$^1$-OAc)(κ$^2$-OAc)(κ$^3$-triphos)] (1%) | - | MeCN | 1,5/70 | 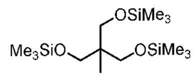 | > 99 |
| $Me_3SiOCHO$ (0,15) | 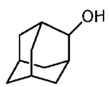 (0,1) | [Ru(κ$^1$-OAc)(κ$^2$-OAc)(κ$^3$-triphos)] (1%) | - | MeCN | 1/70 | 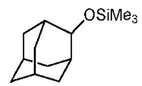 | 98 |
| $Me_3SiOCHO$ (0,15) | 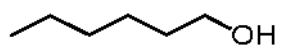 (0,1) | [Ru(κ$^1$-OAc)(κ$^2$-OAc)(κ$^3$-triphos)] (1%) | - | MeCN | 1/70 | 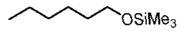 | > 99 |
| $Et_3SiOCHO$ (0,15) | 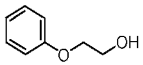 (0,1) | [Ru(κ$^1$-OAc)(κ$^2$-OAc)(κ$^3$-triphos)] (1%) | - | MeCN | 1/70 | 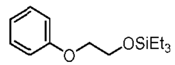 | > 99 |
| $Et_3SiOCHO$ (0,15) | 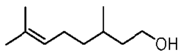 (0,1) | [Ru(κ$^1$-OAc)(κ$^2$-OAc)(κ$^3$-triphos)] (1%) | - | MeCN | 1/70 | 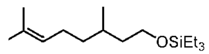 | > 99 |
| $Et_3SiOCHO$ (0,15) | 4-methoxythiphenol (0,1) | [Ru(κ$^1$-OAc)(κ$^2$-OAc)(κ$^3$-triphos)] (1%) | - | MeCN | 18/70 | 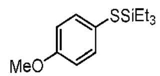 | 31 |

(suite)

| Formiate silylé (mmol) | Substrat (mmol) | Catalyseur (mmol) | Additif (mmol) | Solvant | *t* (h)/T (°C) | Produit | Rendement (%) |
|---|---|---|---|---|---|---|---|
| $Et_3SiOCHO$ (0.15) | Amino-heptane (0.1) | [Ru(κ$^1$-OAc)(κ$^2$-OAc)(κ$^3$-triphos)] (1%) | - | MeCN | 0,5/70 | 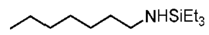 | 80 |
| $Et_3SiOCHO$ (0,15) | Amino-heptane (0,1) | [Ru(κ$^1$-OAc)(κ$^2$-OAc)(κ$^3$-triphos)] (1%) | - | MeCN | 96/25 | 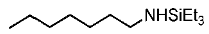 | 80 |
| $Et_3SiOCHO$ (0,15) | Morpholine (0,1) | [Ru(κ$^1$-OAc)(κ$^2$-OAc)(κ$^3$-triphos)] (1%) | - | MeCN | 1/70 | 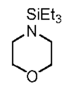 | > 99 |
| $Et_3SiOCHO$ (0,15) | Morpholine (0,1) | [Ru(κ$^1$-OAc)(κ$^2$-OAc)(κ$^3$-triphos)] (1%) | - | MeCN | 96/25 | 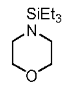 | > 99 |
| $Et_3SiOCHO$ (0,15) | 2-aminophenol (0,1) | [Ru(κ$^1$-OAc)(κ$^2$-OAc)(κ$^3$-triphos)] (1%) | - | MeCN | 1/70 | 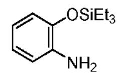 | > 99 |
| $Et_3SiOCHO$ (0,15) | $PhCH_2OH$ (0,1) | $Fe(OAc)_2$ (5%) | $PP_3$ (5%) | THF | 20/70 | $PhCH_2OSiEt_3$ | > 99 |
| $Et_3SiOCHO$ (0,15) | $PhCH_2OH$ (0,1) | $Fe(OAc)_2$ (5%) | $PP_3$ (5%) | benzene | 4/70 | $PhCH_2OSiEt_3$ | 84 |
| $Et_3SiOCHO$ (0,15) | $PhCH_2OH$ (0,1) | $Fe(OAc)_2$ (5%) | $PP_3$ (5%) | DCM | 0,75/70 | $PhCH_2OSiEt_3$ | > 99 |
| $Et_3SiOCHO$ (0,15) | $PhCH_2OH$ (0,1) | $FeCl_2$ (5%) | $PP_3$ (5%) | DCM | 0,75/70 | $PhCH_2OSiEt_3$ | 53 |
| $Et_3SiOCHO$ (0,15) | $PhCH_2OH$ (0,1) | $Fe(acac)_2$ (5%) | $PP_3$ (5%) | DCM | 0,75/70 | $PhCH_2OSiEt_3$ | > 99 |
| $tBuMe_2SiOCHO$ (0,15) | 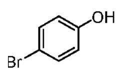 (0,1) | [Ru(κ$^1$-OAc)(κ$^2$-OAc)(κ$^3$-triphos)] (1%) | - | MeCN | 1/70 | 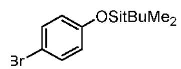 | 98 |
| $Et_3SiOCHO$ (0,15) | 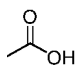 | [Ru(κ$^1$-OAc)( κ$^2$-OAc)(κ$^3$-triphos)] (1%) | - | MeCN | 2.5/70 | 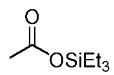 | >99 |

(suite)

| Formiate silylé (mmol) | Substrat (mmol) | Catalyseur (mmol) | Additif (mmol) | Solvant | *t* (h)/T (°C) | Produit | Rendement (%) |
|---|---|---|---|---|---|---|---|
| $Et_3SiOCHO$ (0,15) | 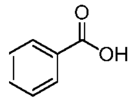 | [Ru($\kappa^1$-OAc)($\kappa^2$-OAc)($\kappa^3$-triphos)] (1%) | - | MeCN | 2/70 | 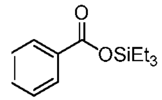 | >99 |
| $Et_3SiOCHO$ (0,15) | 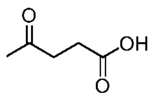 | [Ru($\kappa^1$-OAc)($\kappa^2$-OAc)($\kappa^3$-triphos)] (1%) | - | MeCN | 3/70 | 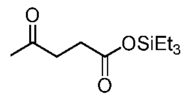 | >99 |
| $Et_3SiOCHO$ (0,12) | $PhCH_2OH$ (0,1) | $Fe(OAc)_2$ (2%) | $PP_3$ (2%) | DCM | 5/70 | $PhCH_2OSiEt_3$ | > 99 |
| $Et_3SiOCHO$ (0,12) | $PhCH_2OH$ (0,1) | $Fe(OAc)_2$ (1%) | $PP_3$ (1%) | DCM | 24/70 | $PhCH_2OSiEt_3$ | > 99 |
| $Et_3SiOCHO$ (0,12) | $PhCH_2OH$ (0,1) | $Fe(OAc)_2$ (2%) | $PP_3$ (2%) | DCM | 21/20 | $PhCH_2OSiEt_3$ | > 99 |
| $Me_3SiOCHO$ (0,12) | $PhCH_2OH$ (0,1) | $Fe(OAc)_2$ (2%) | $PP_3$ (2%) | DCM | 3/70 | $PhCH_2OSiMe_3$ | > 99 |
| $tBuMe_2SiOCHO$ (0,12) | $PhCH_2OH$ (0,1) | $Fe(OAc)_2$ (2%) | $PP_3$ (2%) | DCM | 16/70 | $PhCH_2OSitBuMe_2$ | 56 |
| $iPr_3SiOCHO$ (0,12) | $PhCH_2OH$ (0,1) | $Fe(OAc)_2$ (2%) | $PP_3$ (2%) | DCM | 48/70 | $PhCH_2OSi/Pr_3$ | 34 |
| $Ph_2MeSiOCHO$ (0,12) | (0,1) | $Fe(OAc)_2$ (2%) | $PP_3$ (2%) | DCM | 1/70 | $PhCH_2OSiPh_2Me$ | > 99 |
| $PhMe_2SiOCHO$ (0,12) | (0,1) | $Fe(OAc)_2$ (2%) | $PP_3$ (2%) | DCM | 1/70 | $PhCH_2OSiPhMe_2$ | > 99 |
| $Et_2Si(OCHO)_2$ (0,6) | (0,1) | $Fe(OAc)_2$ (2%) | $PP_3$ (2%) | DCM | 1,5/70 | $(PhCH_2O)_2SiEt_2$ | 85 |
| $Et_3SiOCHO$ (0,12) | 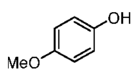 (0.1) | $Fe(OAc)_2$ (2%) | $PP_3$ (2%) | DCM | 1,5/90 | 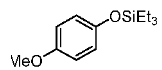 | 96 |

(suite)

| Formiate silylé (mmol) | Substrat (mmol) | Catalyseur (mmol) | Additif (mmol) | Solvant | *t* (h)/T (°C) | Produit | Rendement (%) |
|---|---|---|---|---|---|---|---|
| $Et_3SiOCHO$ (0,12) | 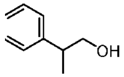 (0,1) | $Fe(OAc)_2$ (2%) | $PP_3$ (2%) | DCM | 1,5/90 | 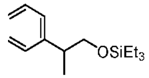 | >99 |
| $Et_3SiOCHO$ (0,12) | 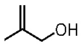 (0,1) | $Fe(OAc)_2$ (2%) | $PP_3$ (2%) | DCM | 1,5/90 | 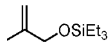 | 97 |
| $Me_3SiOCHO$ (0,12) | 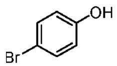 (0,1) | $Fe(OAc)_2$ (2%) | $PP_3$ (2%) | DCM | 1,25/ 90 | 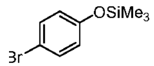 | 84 |
| $Et_3SiOCHO$ (0,12) | 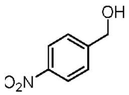 (0.1) | $Fe(OAc)_2$ (2%) | $PP_3$ (2%) | DCM | 3/90 | 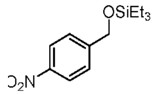 | 91 |
| $Et_3SiOCHO$ (0,12) | 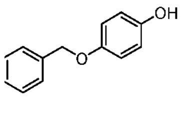 (0,1) | $Fe(OAc)_2$ (2%) | $PP_3$ (2%) | DCM | 1,75/ 90 | 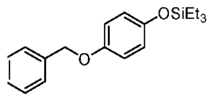 | 90 |
| $Et_3SiOCHO$ (0,12) | 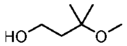 (0,1) | $Fe(OAc)_2$ (2%) | $PP_3$ (2%) | DCM | 1,.5/90 | 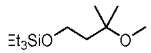 | 87 |
| $Me_3SiOCHO$ (0,12) | 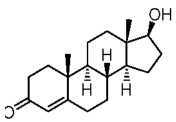 (0,1) | $Fe(OAc)_2$ (2%) | $PP_3$ (2%) | DCM | 2/90 | 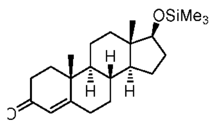 | 92 |

(suite)

| Formiate silylé (mmol) | Substrat (mmol) | Catalyseur (mmol) | Additif (mmol) | Solvant | *t* (h)/T (°C) | Produit | Rendement (%) |
|---|---|---|---|---|---|---|---|
| $Et_3SiOCHO$ (0,12) | 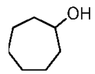 (0,1) | $Fe(OAc)_2$ (2%) | $PP_3$ (2%) | DCM | 1/90 | 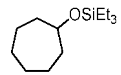 | 96 |
| $Et_3SiOCHO$ (0,12) | 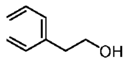 (0,1) | $Fe(OAc)_2$ (2%) | $PP_3$ (2%) | DCM | 1/90 | 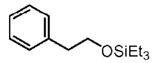 | 97 |
| $Et_3SiOCHO$ (0,12) | 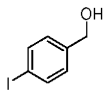 (0,1) | $Fe(OAc)_2$ (2%) | $PP_3$ (2%) | DCM | 3,75/ 90 | 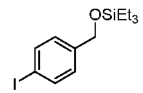 | 94 |
| $Et_3SiOCHO$ (0,12) | 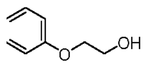 (0,1) | $Fe(OAc)_2$ (2%) | $PP_3$ (2%) | DCM | 2,25/ 90 | 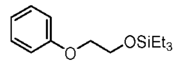 | > 99 |
| $Et_3SiOCHO$ (0,24) | 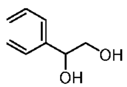 (0,1) | $Fe(OAc)_2$ (2%) | $PP_3$ (2%) | DCM | 1,75/90 | 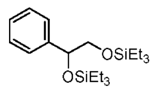 | 96 |
| $Et_3SiOCHO$ (0,12) | 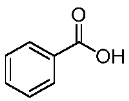 | $Fe(OAc)_2$ (2%) | $PP_3$ (2%) | DCM | 3,75/90 | 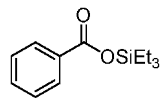 | 97 |
| DCM = dichlorométhane. | | | | | | | |

## Revendications

1. Procédé de de préparation de composés de formule (I)

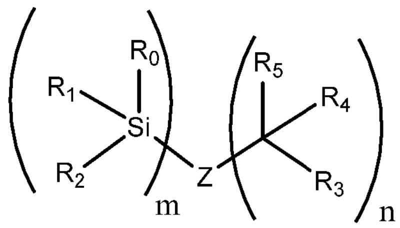

(I)

dans laquelle

- $R_0$, $R_1$ et $R_2$, indépendamment les uns des autres, sont choisis dans le groupe formé par un groupe alcoxy, un groupe aryloxy, un groupe alkyle, un groupe carboxyle, un groupe alcényle, un groupe alcynyle, un groupe aryle, un groupe hétéroaryle, un groupe hétérocyclique, un groupe silyle, un groupe siloxy, lesdits groupes alkyle, alcényle, alcynyle, aryle, hétéroaryle, alcoxy, aryloxy, silyle, siloxy ou hétérocyclique étant éventuellement substitués, ou
$R_0$ et $R_1$ ensemble avec l'atome de silicium auquel ils sont liés, forment un hétéorcycle silylé éventuellement substitué et $R_2$ est tel que défini ci-dessus ;
- n=0 ou 1 ;
- m=0 ou 1 ;
- lorsque n=0 et m=1, Z est choisi dans le groupe formé par $-NR_3R_4$ avec

    • $R_3$ et $R_4$ indépendamment l'un de l'autre, choisis dans le groupe formé par un atome d'hydrogène, un groupe alkyle, un groupe halogénoalkyle, un groupe alcényle, un groupe alcynyle, un groupe silyle, un groupe aryle, un groupe hétéroaryle, un groupe hétérocyclique, lesdits groupes alkyle, alcényle, alcynyle, aryle, hétéroaryle, silyle, ou hétérocyclique étant éventuellement substitués, ou
    • $R_3$ et $R_4$, pris ensemble avec l'atome d'azote auquel ils sont liés, forment un hétérocycle éventuellement substitué ;

- lorsque n=m=1,

    • $R_3$, $R_4$ et $R_5$, indépendamment les uns des autres, sont choisis dans le groupe formé par un atome d'hydrogène, un groupe alkyle, un groupe halogénoalkyle, un groupe alcényle, un groupe alcényle cyclique, un groupe alcynyle, un groupe silyle, un groupe aryle, un groupe hétéroaryle, un groupe hétérocyclique, lesdits groupes alkyle, alcényle, alcynyle, aryle, hétéroaryle, silyle, ou hétérocyclique étant éventuellement substitués, ou
    • $R_3$, $R_4$ et $R_5$ ensemble avec l'atome de carbone auquel ils sont liés, forment un aryle éventuellement substitué, ou
    • $R_3$ et $R_4$ ensemble avec l'atome de carbone auquel ils sont liés, forment un alkyle cyclique éventuellement substitué et $R_5$ est tel que défini ci-dessus, ou
    • $R_3$ et $R_4$ ensemble avec l'atome de carbone auquel ils sont liés, forment un alcényle cyclique éventuellement substitué et $R_5$ est tel que défini ci-dessus, ou
    • $R_3$, $R_4$ et $R_5$ ensemble avec l'atome de carbone auquel ils sont liés, forment un alcényle cyclique, et
    • Z est choisi dans le groupe formé par

        ◦ X ou Y tels que définis ci-dessous,
        ◦ Z et $R_5$ ensemble avec l'atome de carbone auquel ils sont liés, forment un groupe

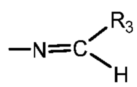

avec $R_3$ tel que défini ci-dessus, ou
◦ Z et $R_5$ ensemble avec l'atome de carbone auquel ils sont liés, forment un groupe

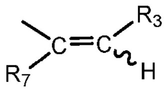

avec $R_7$ étant choisi dans le groupe formé par un atome d'hydrogène, un groupe alkyle ou un groupe aryle, lesdits groupes alkyle et aryle étant éventuellement substitués, et $R_3$ étant tel que définis ci-dessus ;

- lorsque n=1 et m=0, Z est choisi dans le groupe formé par $-NR_9R_{10}$ avec

  - $R_9$ et $R_{10}$ représentent, indépendamment l'un de l'autre, un atome d'hydrogène, un groupe alkyle, un groupe alcényle, un groupe alcynyle, un groupe aryle, un groupe hétéroaryle, un groupe hétérocyclique, un groupe silyle, lesdits groupes alkyle, alcényle, alcynyle, aryle, hétéroaryle, hétérocyclique, silyle étant éventuellement substitués, ou
  - $R_9$ et $R_{10}$, pris ensemble avec l'atome d'azote auquel ils sont liés, forment un hétérocycle éventuellement substitué, et
  - $R_3$, $R_4$ et $R_5$ tels que définis ci-dessus ;

**caractérisé en ce que** l'on fait réagir un formiate silylé de formule (II)

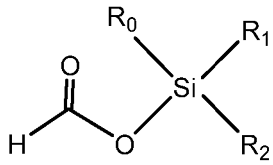
(II)

dans laquelle $R_0$, $R_1$ et $R_2$ sont tels que définis ci-dessus, avec un composé organique de formule (III), (IV), (V), (VI), (VII), (VIII) ou (IX)

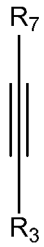
(III)

ou

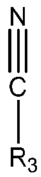
(IV)

ou

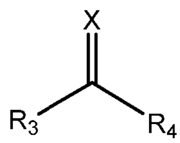
(V)

ou

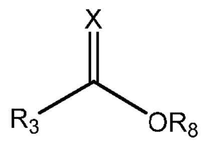
(VI)

ou

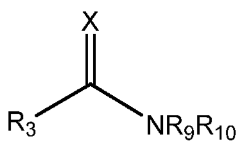
(VII)

ou

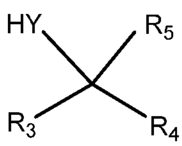
(VIII)

ou

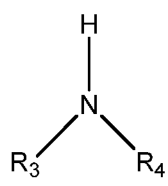
(IX)

dans laquelle

- $R_3$, $R_4$, $R_5$ $R_9$ et $R_{10}$ sont tels que définis ci-dessus ;
- $R_7$ est choisi dans le groupe formé par un atome d'hydrogène, un groupe alkyle, ou un groupe aryle, lesdits groupes alkyle et aryle étant éventuellement substitués ;
- $R_8$ est choisi dans le groupe formé par un atome d'hydrogène, un groupe alkyle, un groupe alcényle, un

groupe alcynyle, un groupe aryle, un groupe hétéroaryle, un groupe hétérocyclique, lesdits groupes alkyle, alcényle, alcynyle, aryle, hétéroaryle, hétérocyclique étant éventuellement substitués ;
- X est choisi dans le groupe formé par

• un atome d'oxygène,
• un groupe $CR_aR_b$ avec $R_a$ et $R_b$ représentant, indépendamment l'un de l'autre, un atome d'hydrogène, un groupe alkyle, un groupe aryle, un groupe hétéroaryle, un groupe silyle, ou un groupe hétérocyclique, lesdits groupes alkyle, aryle, hétéroaryle, silyle, hétérocyclique étant éventuellement substitués, ou
• un groupe $NR_6$ avec $R_6$ représentant un atome d'hydrogène, un groupe alkyle, un groupe silyle, un groupe aryle, lesdits groupes alkyle, silyle ou aryle étant éventuellement substitués ;

- Y est choisi dans un groupe formé par un atome d'oxygène ou un atome de soufre ;

un groupe « alkyle » désigne un radical carboné linéaire, ramifié ou cyclique, saturé, éventuellement substitué, comprenant 1 à 20 atomes de carbone;
par « alcényle » ou « alcynyle », on entend un radical carboné insaturé linéaire, ramifié ou cyclique, éventuellement substitué, ledit radical carboné insaturé comprenant 2 à 20 atomes de carbone et au moins une double (alcényle) et/ou au moins une triple liaison (alcynyle); en présence d'un catalyseur et éventuellement d'un additif.

**2.** Procédé selon la revendication 1, **caractérisé en ce que** lorsque n=0 et m=1

- le composé organique est de formule (IX), et
- dans le composé de formule (I), Z est choisi dans le groupe formé par $-NR_3R_4$,
avec

• $R_3$ et $R_4$ indépendamment l'un de l'autre, choisis dans le groupe formé par un atome d'hydrogène, un groupe alkyle, un groupe halogénoalkyle, un groupe alcényle, un groupe alcynyle, un groupe silyle, un groupe aryle, un groupe hétéroaryle, un groupe hétérocyclique, lesdits groupes alkyle, alcényle, alcynyle, aryle, hétéroaryle, silyle, ou hétérocyclique étant éventuellement substitués.

**3.** Procédé selon la revendication 1, **caractérisé en ce que** lorsque n=0 et m=1

- le composé organique est de formule (IX), et
- dans le composé de formule (I), Z est choisi dans le groupe formé par $-NR_3R_4$,

avec $R_3$ et $R_4$, pris ensemble avec l'atome d'azote auquel ils sont liés, forment un hétérocycle éventuellement substitué.

**4.** Procédé selon la revendication 1, **caractérisé en ce que** lorsque n=m=1,

- le composé organique est de formule (III), et
- dans le composé de formule (I), Z et $R_5$, ensemble avec l'atome de carbone auquel ils sont liés forment un groupe

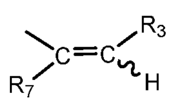

avec

• $R_3$ choisi dans le groupe formé par un atome d'hydrogène, un groupe alkyle, un groupe silyle, un groupe aryle, un groupe hétéroaryle, un groupe hétérocyclique, lesdits groupes alkyle, aryle, hétéroaryle, silyle, ou hétérocyclique étant éventuellement substitués,
• $R_7$ choisi dans le groupe formé par un atome d'hydrogène, un groupe alkyle, un groupe aryle, lesdits groupes alkyle et aryle étant éventuellement substitués.

**5.** Procédé selon la revendication 1, **caractérisé en ce que** lorsque n=m=1,

- le composé organique est de formule (IV), et

- dans le composé de formule (I), Z et $R_5$ ensemble avec l'atome de carbone auquel ils sont liés, forment un groupe

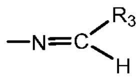

avec

• $R_3$ étant choisi dans le groupe formé par un atome d'hydrogène, un groupe alkyle, un groupe halogénoalkyle, un groupe alcényle, un groupe alcényle cyclique, un groupe alcynyle, un groupe silyle, un groupe aryle, un groupe hétéroaryle, un groupe hétérocyclique, lesdits groupes alkyle, alcényle, alcynyle, aryle, hétéroaryle, silyle, ou hétérocyclique étant éventuellement substitués.

6. Procédé selon la revendication 1, **caractérisé en ce que** lorsque n=m=1,

- le composé organique est de formule (V), et
- dans le composé de formule (I), Z est X et X représente un atome d'oxygène, avec

• $R_5$ choisi dans le groupe formé par un atome d'hydrogène, et
• $R_3$ et $R_4$, indépendamment l'un de l'autre, sont choisis dans le groupe formé par un atome d'hydrogène, un groupe alkyle, un groupe halogénoalkyle, un groupe alcényle, un groupe alcényle cyclique, un groupe alcynyle, un groupe aryle, un groupe hétéroaryle, un groupe hétérocyclique, lesdits groupes alkyle, alcényle, alcynyle, aryle, hétéroaryle ou hétérocyclique étant éventuellement substitués.

7. Procédé selon la revendication 1, **caractérisé en ce que** lorsque n=m=1,

- le composé organique est de formule (V), et
- dans le composé de formule (I), Z est X et X représente un atome d'oxygène, avec

• $R_5$ choisi dans le groupe formé par un atome d'hydrogène, et
• $R_3$ et $R_4$ ensemble avec l'atome de carbone auquel ils sont liés, forment un alkyle cyclique comportant 3 à 20 atomes de carbone, ledit alkyl cyclique étant éventuellement substitué.

8. Procédé selon la revendication 1, **caractérisé en ce que** lorsque n=m=1,

- le composé organique est de formule (V), et
- dans le composé de formule (I), Z est X et X représente un groupe $CR_aR_b$ avec

• $R_a$ et $R_b$ représentant, indépendamment l'un de l'autre, un atome d'hydrogène, un groupe alkyle, un groupe aryle, un groupe hétéroaryle, un groupe silyle, ou un groupe hétérocyclique, lesdits groupes alkyle, aryle, hétéroaryle, silyle, hétérocyclique étant éventuellement substitués, et
• $R_5$ est choisi dans le groupe formé par un atome d'hydrogène, et
• $R_3$ et $R_4$, indépendamment l'un de l'autre, sont choisis dans le groupe formé par un atome d'hydrogène, un groupe alkyle, un groupe aryle, un groupe hétéroaryle, groupe silyle, ou un groupe hétérocyclique, lesdits groupes alkyle, aryle, hétéroaryle, silyle, ou hétérocyclique étant éventuellement substitués.

9. Procédé selon la revendication 1, **caractérisé en ce que** lorsque n=m=1,

- le composé organique est de formule (V), et
- dans le composé de formule (I), Z est X et X représente un groupe $CR_aR_b$ avec

• $R_a$ et $R_b$ représentant, indépendamment l'un de l'autre, un atome d'hydrogène, un groupe alkyle, un groupe aryle, un groupe hétéroaryle, un groupe silyle, ou un groupe hétérocyclique, lesdits groupes alkyle, aryle, hétéroaryle, silyle, hétérocyclique étant éventuellement substitués, et
• $R_5$ est choisi dans le groupe formé par un atome d'hydrogène,
• $R_3$ et $R_4$ ensemble avec l'atome de carbone auquel ils sont liés, forment un alkyle cyclique éventuellement substitué, ou
• $R_3$ et $R_4$ ensemble avec l'atome de carbone auquel ils sont liés, forment un alcényle cyclique éventuellement substitué,

lesdits groupes alkyle cyclique et alcényle cyclique étant éventuellement substitués.

**10.** Procédé selon la revendication 1, **caractérisé en ce que** lorsque n=m=1,

- le composé organique est de formule (V), et
- dans le composé de formule (I), Z est X et X représente un groupe $NR_6$ avec

  • $R_6$ représentant un atome d'hydrogène, un groupe alkyle, un groupe silyle, un groupe aryle, lesdits groupes alkyle, silyle ou aryle étant éventuellement substitués, et
  • $R_5$ est choisi dans le groupe formé par un atome d'hydrogène, et
  • $R_3$ et $R_4$, indépendamment l'un de l'autre, sont choisis dans le groupe formé par un atome d'hydrogène, un groupe alkyle, un groupe aryle, ou un groupe silyle, lesdits groupes alkyle, aryle ou silyle, étant éventuellement substitués.

**11.** Procédé selon la revendication 1, **caractérisé en ce que** lorsque n=m=1,

- le composé organique est de formule (VI), et
- dans le composé de formule (I), Z est X et X représente un atome d'oxygène avec

  • $R_8$ choisi dans le groupe formé par un atome d'hydrogène, un groupe alkyle, un groupe alcényle, un groupe alcynyle, un groupe aryle, un groupe silyle, un groupe hétéroaryle, un groupe hétérocyclique, lesdits groupes alkyle, alcényle, alcynyle, aryle, hétéroaryle, hétérocyclique étant éventuellement substitués, et
  • $R_3$ est choisi dans le groupe formé par un atome d'hydrogène, un groupe hydroxyle, un groupe alkyle, un groupe halogénoalkyle, un groupe alcényle, un groupe alcynyle, un groupe aryle, un groupe hétéroaryle, un groupe hétérocyclique, lesdits groupes alkyle, alcényle, alcynyle, aryle, hétéroaryle, ou hétérocyclique étant éventuellement substitués, et
  • $R_4$ et $R_5$, indépendamment l'un de l'autre, représentent un atome d'hydrogène.

**12.** Procédé selon la revendication 1, **caractérisé en ce que** lorsque n=1 et m=0,

- le composé organique est de formule (VII) avec X représentant un atome d'oxygène, et
- dans le composé de formule (I), Z est choisi dans le groupe formé par $-NR_9R_{10}$ avec

  • $R_9$ et $R_{10}$, indépendamment l'un de l'autre, sont choisis dans le groupe formé par un atome d'hydrogène, un groupe alkyle, un groupe alcényle, un groupe alcynyle, un groupe aryle, un groupe hétéroaryle, un groupe hétérocyclique, un groupe silyle, avec les groupes alkyle, alcényle, alcynyle, aryle, hétéroaryle, hétérocyclique, silyle, étant éventuellement substitués ; et
  • $R_3$ est choisi dans le groupe formé par un atome d'hydrogène, un groupe alkyle, un groupe halogénoalkyle, un groupe alcényle, un groupe alcynyle, un groupe aryle, un groupe hétéroaryle, un groupe hétérocyclique, lesdits groupes alkyle, alcényle, alcynyle, aryle, hétéroaryle, ou hétérocyclique étant éventuellement substitués ;
  • $R_4$ et $R_5$, indépendamment l'un de l'autre, représentent un atome d'hydrogène.

**13.** Procédé selon la revendication 1, **caractérisé en ce que** lorsque n=1 et m=0,

- le composé organique est de formule (VII) avec X représentant un atome d'oxygène, et
- dans le composé de formule (I), Z est choisi dans le groupe formé par $-NR_9R_{10}$ avec

  • $R_9$ et $R_{10}$, pris ensemble avec l'atome d'azote auquel ils sont liés, forment un hétérocycle éventuellement substitué, et
  • $R_3$ est choisi dans le groupe formé par un atome d'hydrogène un groupe alkyle, un groupe halogénoalkyle, un groupe alcényle, un groupe alcynyle, un groupe aryle, un groupe hétéroaryle, un groupe hétérocyclique, lesdits groupes alkyle, alcényle, alcynyle, aryle, hétéroaryle, ou hétérocyclique étant éventuellement substitués, et
  • $R_4$ et $R_5$, indépendamment l'un de l'autre, représentent un atome d'hydrogène.

**14.** Procédé selon la revendication 1, **caractérisé en ce que** lorsque n=m=1,

- le composé organique est de formule (VIII), et
- dans le composé de formule (I), Z est Y et Y représente un atome d'oxygène avec $R_3$, $R_4$ et $R_5$, indépendamment les uns des autres, sont choisis dans le groupe formé par

  ◦ un atome d'hydrogène,
  ◦ un groupe alkyle comportant 1 à 12 atomes de carbone choisi dans le groupe formé par méthyle, éthyle, propyle, butyle, pentyle, hexyle, heptyle et leurs isomères ramifiés, ledit groupe alkyle étant éventuellement substitué par

    ▪ un ou plusieurs groupes hydroxy,
    ▪ un ou plusieurs groupes alcoxy dont le radical alkyle comporte 1 à 12 atomes de carbone choisi dans le groupe formé par méthoxy, éthoxy, propyloxy, butyloxy, pentyloxy, hexyloxy, heptyloxy et leurs isomères ramifiés,
    ▪ un ou plusieurs groupe alcényle comportant 2 à 16 atomes de carbone choisi dans le groupe formé par éthylényle, propylényle, butényle, pentényle, hexényle, heptényle, octényle et leurs isomères ramifiés lesdits groupes alcényle étant éventuellement substitués par un groupe alkyle choisi dans le groupe formé par éthyle, propyle, butyle, pentyle et leurs isomères ramifiés,
    ▪ un ou plusieurs groupes halogénoalkyle choisis dans le groupe formé par $-CF_3$, $-CCl_3$, $-CHCl_2$, $-CClBrCF_3$,
    ▪ un ou plusieurs groupes siloxy choisis dans le groupe formé par le triméthylsiloxy, le triéthysiloxy, le butyldiphénylsiloxy,
    ▪ un ou plusieurs groupes aryle comportant de 6 à 10 atomes de carbone choisi dans le groupe formé par phényle ou benzyle éventuellement substitué par

      • un ou plusieurs atomes d'halogène choisis parmi les atomes de fluor, chlore, brome ou iode,
      • un ou plusieurs groupes alcoxy choisis dans le groupe formé par méthoxy, éthoxy, propyloxy, butyloxy, pentyloxy et leurs isomères ramifiés,
      • un ou plusieurs groupes alkyle choisis dans le groupe formé par méthyle, éthyle, propyle, butyle, pentyle, hexyle, heptyle et leurs isomères ramifiés,
      • un ou plusieurs groupes acyle $-C(O)R_{13}$ avec $R_{13}$ représentant un groupe alkyle comportant 1 à 12 atomes de carbone choisi dans le groupe formé par méthyle, éthyle, propyle, butyle, pentyle, hexyle, heptyle et leurs isomères ramifiés, un groupe aryle choisi dans le groupe formé par phényle, benzyle, un groupe amino choisi dans le groupe formé par diméthylamino, diéthylamino, un groupe alcoxy choisi dans le groupe formé par méthoxy, éthoxy, un groupe aryloxy choisi dans le groupe formé par benzyloxy, phénoxy.
      • un ou plusieurs groupes carboxyle $-OC(O)R_{14}$ avec $R_{14}$ représentant un atome d'hydrogène, un groupe alkyle choisi dans le groupe formé par méthyle, éthyle, propyle, butyle, pentyle, hexyle, heptyle et leurs isomères ramifiés, un groupe aryle choisi dans le groupe formé par phényle ou benzyle,
      • un ou plusieurs groupes nitrile (-CN),
      • un ou plusieurs groupes nitro ($-NO_2$),
      • un ou plusieurs groupes amino choisis dans le formé par $-NH_2$, $-NHCH_3$, $-N(CH_3)_2$, $-N(CH_2CH_3)_2$, $-NH(CH_2CH_3)$,

  ◦ un groupe alcényle comportant 2 à 16 atome de carbone choisi dans le groupe formé par éthylényle, propylényle, butényle, pentényle, hexényle, heptényle, octényle et leurs isomères ramifiés lesdits groupes alcényle étant éventuellement substitués par

    ▪ un ou plusieurs groupes alkyle choisis dans le groupe formé par éthyle, propyle, butyle, pentyle et leurs isomères ramifiés,
    ▪ un ou plusieurs groupes aryle choisi dans le groupe phényle ou benzyle, éventuellement substitué par

      • un ou plusieurs atomes d'halogène choisis parmi les atomes de fluor, chlore, brome ou iode,
      • un ou plusieurs groupes alcoxy choisis dans le groupe formé par méthoxy, éthoxy, propyloxy, butyloxy, pentyloxy et leurs isomères ramifiés,
      • un ou plusieurs groupes alkyle choisis dans le groupe formé par méthyle, éthyle, propyle, butyle,

pentyle, hexyle, heptyle et leurs isomères ramifiés,
• un ou plusieurs groupes thioalcoxy (-S-alkyle) avec le radical alkyle étant choisi dans le groupe formé par méthyle, éthyle, propyle, butyle, pentyle, hexyle, heptyle et leurs isomères ramifiés,
• un ou plusieurs groupes acyle -C(O)$R_{13}$ avec $R_{13}$ représentant un groupe alkyle comportant 1 à 12 atomes de carbone choisi dans le groupe formé par méthyle, éthyle, propyle, butyle, pentyle, hexyle, heptyle et leurs isomères ramifiés, un groupe aryle choisi dans le groupe formé par phényle, benzyle, un groupe amino choisi dans le groupe formé par diméthylamino, diéthylamino, un groupe alcoxy choisi dans le groupe formé par méthoxy, éthoxy, un groupe aryloxy choisi dans le groupe formé par benzyloxy, phénoxy.
• un ou plusieurs groupes carboxyle -OC(O)$R_{14}$ avec $R_{14}$ représentant un atome d'hydrogène, un groupe alkyle choisi dans le groupe formé par méthyle, éthyle, propyle, butyle, pentyle, hexyle, heptyle et leurs isomères ramifiés, un groupe aryle choisi dans le groupe formé par phényle, benzyle,
• un ou plusieurs groupes nitrile (-CN),
• un ou plusieurs groupes nitro (-$NO_2$),
• un ou plusieurs groupes amino choisis dans le formé par -$NH_2$, -$NHCH_3$, -$N(CH_3)_2$, -$N(CH_2CH_3)_2$, -$NH(CH_2CH_3)$,

◦ un groupe acyle -C(O)$R_{13}$ avec $R_{13}$ étant un groupe alkyle comportant 1 à 12 atomes de carbone choisi dans le groupe formé par méthyle, éthyle, propyle, butyle, pentyle, hexyle, heptyle et leurs isomères ramifiés,
◦ un groupe aryloxy dont le radical aryle comporte de 6 à 10 atomes de carbone choisi dans le groupe formé par le phénoxy ou le benzyloxy,
◦ un groupe halogénoalkyle choisi dans le groupe formé par -$CF_3$, -$CCl_3$, - $CHCl_2$, -$CClBrCF_3$,
◦ un groupe aryle comportant de 6 à 10 atomes de carbone choisi dans le groupe formé par phényle ou benzyle éventuellement substitué par

▪ un ou plusieurs atomes d'halogène choisis parmi les atomes de fluor, chlore, brome ou iode,
▪ un ou plusieurs groupes alcoxy choisis dans le groupe formé par méthoxy, éthoxy, propyloxy, butyloxy, pentyloxy et leurs isomères ramifiés,
▪ un ou plusieurs groupes alkyle choisis dans le groupe formé par méthyle, éthyle, propyle, butyle, pentyle, hexyle, heptyle et leurs isomères ramifiés,
▪ un ou plusieurs groupes thioalcoxy (-S-alkyle) avec le radical alkyle étant choisi dans le groupe formé par méthyle, éthyle, propyle, butyle, pentyle, hexyle, heptyle et leurs isomères ramifiés,
▪ un ou plusieurs groupes acyle -C(O)$R_{13}$ avec $R_{13}$ représentant un groupe alkyle comportant 1 à 12 atomes de carbone choisi dans le groupe formé par méthyle, éthyle, propyle, butyle, pentyle, hexyle, heptyle et leurs isomères ramifiés,
▪ un ou plusieurs groupes carboxyle -OC(O)$R_{14}$ avec $R_{14}$ représentant un atome d'hydrogène ou un groupe alkyle choisi dans le groupe formé par méthyle, éthyle, propyle, butyle, pentyle, hexyle, heptyle et leurs isomères ramifiés,
▪ un ou plusieurs groupes nitrile (-CN),
▪ un ou plusieurs groupes nitro (-$NO_2$),
▪ un ou plusieurs groupes amino choisis dans le formé par -$NH_2$, -$NHCH_3$, -$N(CH_3)_2$, -$N(CH_2CH_3)_2$, -$NH(CH_2CH_3)$,

◦ un groupe hétéroaryle comportant 5 à 12 membres dont au moins 2 atomes de carbone, et au moins un hétéroatome choisi parmi l'azote, l'oxygène, le ou le soufre, ledit groupe hétéroaryle étant choisi dans le groupe formé par furyle, thiényle, pyrrolyle, pyridyle, imidazolyle, thiazolyle.

**15.** Procédé selon la revendication 1, **caractérisé en ce que** lorsque n=m=1,

- le composé organique est de formule (VIII), et
- dans le composé de formule (I), Z est Y et Y représente un atome d'oxygène avec $R_3$, $R_4$ et $R_5$ ensemble avec l'atome de carbone auquel ils sont liés, forment un aryle comportant 6 à 10 atomes de carbone choisi dans le groupe formé par phényle ou benzyle éventuellement substitué par

• un ou plusieurs atomes d'halogène choisis parmi les atomes de fluor, chlore, brome ou iode,
• un ou plusieurs groupes alcoxy choisis dans le groupe formé par méthoxy, éthoxy, propyloxy, butyloxy, pentyloxy et leurs isomères ramifiés,

- un ou plusieurs groupes aryloxy choisi parmi le phénoxy et le benzyloxy,
- un ou plusieurs groupes alkyle choisis dans le groupe formé par méthyle, éthyle, propyle, butyle, pentyle, hexyle, heptyle et leurs isomères ramifiés,
- un ou plusieurs groupes thioalcoxy (-S-alkyle) avec le radical alkyle étant choisi dans le groupe formé par méthyle, éthyle, propyle, butyle, pentyle, hexyle, heptyle et leurs isomères ramifiés,
- un ou plusieurs groupes acyle -C(O)$R_{13}$ avec $R_{13}$ représentant un groupe alkyle comportant 1 à 12 atomes de carbone choisi dans le groupe formé par méthyle, éthyle, propyle, butyle, pentyle, hexyle, heptyle et leurs isomères ramifiés, un groupe aryle choisi dans le groupe formé par phényle, benzyle, un groupe amino choisi dans le groupe formé par diméthylamino, diéthylamino, un groupe alcoxy choisi dans le groupe formé par méthoxy, éthoxy, un groupe aryloxy choisi dans le groupe formé par benzyloxy, phénoxy,
- un ou plusieurs groupes carboxyle -OC(O)$R_{14}$ avec $R_{44}$ représentant un atome d'hydrogène ou un groupe alkyle choisi dans le groupe formé par méthyle, éthyle, propyle, butyle, pentyle, hexyle, heptyle et leurs isomères ramifiés,
- un ou plusieurs groupes nitrile (-CN),
- un ou plusieurs groupes nitro ($-NO_2$),
- un ou plusieurs groupes amino choisis dans le formé par-$NH_2$, $-NHCH_3$, $-N(CH_3)_2$, $-N(CH_2CH_3)_2$, $-NH(CH_2CH_3)$.

**16.** Procédé selon la revendication 1, **caractérisé en ce que** lorsque n=m=1,

- le composé organique est de formule (VIII), et
- dans le composé de formule (I), Z est Y et Y représente un atome d'oxygène avec

  - $R_5$ représentant un atome d'hydrogène, et
  - $R_3$ et $R_4$ ensemble avec l'atome de carbone auquel ils sont liés, forment un alkyle mono- ou polycyclique comportant 3 à 20 atomes de carbone choisi dans le groupe formé cyclopropyle, cyclobutyle, cyclopentyle, cyclohexyle, cycloheptyle, cyclooctyle, bicyclo[2,1,1] hexyle, bicyclo[2,2,1] heptyle, 2-adamantyle, ledit groupe alkyle mono- ou polycyclique étant éventuellement substitué par

    - ◦ un ou plusieurs groupes hydroxy,
    - ◦ un ou plusieurs groupes alcoxy dont le radical alkyle comporte 1 à 12 atomes de carbone choisi dans le groupe formé par méthoxy, éthoxy, propyloxy, butyloxy, pentyloxy, hexyloxy, heptyloxy et leurs isomères ramifiés,
    - ◦ un ou plusieurs groupe alcényle comportant 2 à 16 atomes de carbone choisi dans le groupe formé par éthylényle, propylényle, butényle, pentényle, hexényle, heptényle, octényle et leurs isomères ramifiés lesdits groupes alcényle étant éventuellement substitués par un groupe alkyle choisi dans le groupe formé par éthyle, propyle, butyle, pentyle et leurs isomères ramifiés,
    - ◦ un ou plusieurs groupes halogénoalkyle choisis dans le groupe formé par - $CF_3$, $-CCl_3$, $-CHCl_2$, $-CClBrCF_3$,
    - ◦ un ou plusieurs groupes siloxy choisis dans le groupe formé par le triméthylsiloxy, le triéthysiloxy, le butyldiphénylsiloxy,
    - ◦ un ou plusieurs groupes aryle comportant de 6 à 10 atomes de carbone choisi dans le groupe formé par phényle ou benzyle.

**17.** Procédé selon la revendication 1, **caractérisé en ce que** lorsque n=m=1,

- le composé organique est de formule (VIII), et
- dans le composé de formule (I), Z est Y et Y représente un atome d'oxygène avec

  - $R_5$ représentant un atome d'hydrogène, et
  - $R_3$ et $R_4$ ensemble avec l'atome de carbone auquel ils sont liés, forment un alcényle cyclique comportant 3 à 20 atomes de carbone et au moins une double liaison choisi dans le groupe formé par cyclopentényle, cyclohexényle, le 2,3,4,7,8,9,11,12,14,15,16,17-dodécahydro-1H-cyclopenta[a]phénanthrényle, ou
  - $R_3$, $R_4$ et $R_5$ ensemble avec l'atome de carbone auquel ils sont liés, forment un alcényle cyclique comportant 3 à 20 atomes de carbone et au moins une double liaison choisi dans le groupe formé par cyclopentényle, cyclohexényle,

  ledit groupe alcényle cyclique étant éventuellement substitué par

◦ un ou plusieurs atomes d'halogène choisis parmi les atomes de fluor, chlore, brome ou iode,
◦ un ou plusieurs groupes alcoxy choisis dans le groupe formé par méthoxy, éthoxy, propyloxy, butyloxy, pentyloxy et leurs isomères ramifiés,
◦ un ou plusieurs groupes aryloxy choisi parmi le phénoxy et le benzyloxy,
◦ un ou plusieurs groupes alkyle choisis dans le groupe formé par méthyle, éthyle, propyle, butyle, pentyle, hexyle, heptyle et leurs isomères ramifiés,
◦ un ou plusieurs groupes thioalcoxy (-S-alkyle) avec le radical alkyle étant choisi dans le groupe formé par méthyle, éthyle, propyle, butyle, pentyle, hexyle, heptyle et leurs isomères ramifiés,
◦ un ou plusieurs groupes acyle $-C(O)R_{13}$ avec $R_{13}$ représentant un groupe alkyle comportant 1 à 12 atomes de carbone choisi dans le groupe formé par méthyle, éthyle, propyle, butyle, pentyle, hexyle, heptyle et leurs isomères ramifiés,
◦ un ou plusieurs groupes carboxyle $-OC(O)R_{14}$ avec $R_{14}$ représentant un atome d'hydrogène ou un groupe alkyle choisi dans le groupe formé par méthyle, éthyle, propyle, butyle, pentyle, hexyle, heptyle et leurs isomères ramifiés,
◦ un ou plusieurs groupes nitrile (-CN),
◦ un ou plusieurs groupes nitro ($-NO_2$),
◦ un ou plusieurs groupes amino choisis dans le formé par $-NH_2$, $-NHCH_3$, - $N(CH_3)_2$, $-N(CH_2CH_3)_2$, $-NH(CH_2CH_3)$.

**18.** Procédé selon la revendication 1, **caractérisé en ce que** lorsque n=m=1,

- le composé organique est de formule (VIII), et
- dans le composé de formule (I), Z est Y et Y représente un atome de soufre avec $R_3$, $R_4$ et $R_5$ ensemble avec l'atome de carbone auquel ils sont liés, forment un aryle comportant 6 à 10 atomes de carbone choisi dans le groupe formé par phényle ou benzyle éventuellement substitué par

◦ un ou plusieurs atomes d'halogène choisis parmi les atomes de fluor, chlore, brome ou iode,
◦ un ou plusieurs groupes alcoxy choisis dans le groupe formé par méthoxy, éthoxy, propyloxy, butyloxy, pentyloxy et leurs isomères ramifiés,
◦ un ou plusieurs groupes aryloxy choisi parmi le phénoxy et le benzyloxy,
◦ un ou plusieurs groupes alkyle choisis dans le groupe formé par méthyle, éthyle, propyle, butyle, pentyle, hexyle, heptyle et leurs isomères ramifiés,
◦ un ou plusieurs groupes thioalcoxy (-S-alkyle) avec le radical alkyle étant choisi dans le groupe formé par méthyle, éthyle, propyle, butyle, pentyle, hexyle, heptyle et leurs isomères ramifiés,
◦ un ou plusieurs groupes acyle $-C(O)R_{13}$ avec $R_{13}$ représentant un groupe alkyle comportant 1 à 12 atomes de carbone choisi dans le groupe formé par méthyle, éthyle, propyle, butyle, pentyle, hexyle, heptyle et leurs isomères ramifiés,
◦ un ou plusieurs groupes carboxyle $-OC(O)R_{14}$ avec $R_{14}$ représentant un atome d'hydrogène ou un groupe alkyle choisi dans le groupe formé par méthyle, éthyle, propyle, butyle, pentyle, hexyle, heptyle et leurs isomères ramifiés,
◦ un ou plusieurs groupes nitrile (-CN),
◦ un ou plusieurs groupes nitro ($-NO_2$),
◦ un ou plusieurs groupes amino choisis dans le formé par$-NH_2$, $-NHCH_3$, $-N(CH_3)_2$, $-N(CH_2CH_3)_2$, $-NH(CH_2CH_3)$.

**19.** Procédé selon l'une quelconque des revendications 1 à 18, **caractérisé en ce que** dans le composé de formule (I) et le formiate silylé de formule (II),

- $R_0$, $R_1$ et $R_2$, indépendamment les uns des autres, sont choisis dans le groupe formé par un groupe alcoxy dont le groupe alkyle comprend 1 à 12 atomes de carbone, un groupe alkyle comprenant 1 à 20 atomes de carbone, un groupe aryle comprenant 6 à 20 atomes de carbone, ou un groupe aryloxy dont le groupe aryle comprend entre 6 à 20 atomes de carbones, lesdits groupes alkyle, aryle, alcoxy et aryloxy étant éventuellement substitués.

## Patentansprüche

**1.** Zubereitungsverfahren von Verbindungen von Formel (I)

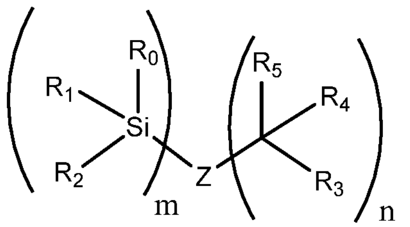

(I)

wobei

- $R_0$, $R_1$ und $R_2$ unabhängig voneinander ausgewählt sind aus der Gruppe, gebildet aus einer Alkoxygruppe, einer Aryloxygruppe, einer Alkylgruppe, einer Carboxylgruppe, einer Alkenylgruppe, einer Alkinylgruppe, einer Arylgruppe, einer Heteroarylgruppe, einer heterocyclischen Gruppe, einer Silylgruppe, einer Siloxygruppe, wobei die Alkyl-, Alkenyl-, Alkinyl-, Aryl-, Heteroaryl-, Alkoxy-, Aryloxy-, Silyl-, Siloxy- oder heterocyclischen Gruppen gegebenenfalls substituiert sind, oder
$R_0$ und $R_1$ gemeinsam mit dem Siliciumatom, an das sie gebunden sind, einen gegebenenfalls substituierten silylierten Heterocyclus bilden, und $R_2$ wie weiter oben definiert ist;
- n = 0 oder 1;
- m = 0 oder 1;
- wenn n = 0 und m = 1, Z ausgewählt ist aus der Gruppe, gebildet durch $-NR_3R_4$, mit

  • $R_3$ und $R_4$ unabhängig voneinander ausgewählt aus der Gruppe, gebildet aus einem Wasserstoffatom, einer Alkylgruppe, einer Halogenalkylgruppe, einer Alkenylgruppe, einer Alkinylgruppe, einer Silylgruppe, einer Arylgruppe, einer Heteroarylgruppe, einer heterocyclischen Gruppe, wobei die Alkyl-, Alkenyl-, Alkinyl-, Aryl-, Heteroaryl-, Silyl- oder heterocyclischen Gruppen gegebenenfalls substituiert sind, oder
  • $R_3$ und $R_4$, zusammengenommen mit dem Stickstoffatom, an das sie gebunden sind, einen gegebenenfalls substituierten Heterocyclus bilden;

- wenn n = m = 1,

  • $R_3$, $R_4$ und $R_5$ unabhängig voneinander ausgewählt sind aus der Gruppe, gebildet aus einem Wasserstoffatom, einer Alkylgruppe, einer Halogenalkylgruppe, einer Alkenylgruppe, einer cyclischen Alkenylgruppe, einer Alkinylgruppe, einer Silylgruppe, einer Arylgruppe, einer Heteroarylgruppe, einer heterocyclischen Gruppe, wobei die Alkyl-, Alkenyl-, Alkinyl-, Aryl-, Heteroaryl-, Silyl- oder heterocyclischen Gruppen gegebenenfalls substituiert sind, oder
  • $R_3$, $R_4$ und $R_5$, gemeinsam mit dem Kohlenstoffatom, an das sie gebunden sind, ein gegebenenfalls substituiertes Aryl bilden, oder
  • $R_3$ und $R_4$, gemeinsam mit dem Kohlenstoffatom, an das sie gebunden sind, ein gegebenenfalls substituiertes cyclisches Alkyl bilden, und $R_5$ wie weiter oben definiert ist, oder
  • $R_3$ und $R_4$, gemeinsam mit dem Kohlenstoffatom, an das sie gebunden sind, ein gegebenenfalls substituiertes cyclisches Alkenyl bilden, und $R_5$ wie weiter oben definiert ist, oder
  • $R_3$, $R_4$ und $R_5$, gemeinsam mit dem Kohlenstoffatom, an das sie gebunden sind, ein cyclisches Alkenyl bilden, und
  • Z ausgewählt ist aus der Gruppe, gebildet aus

    ◦ X oder Y wie weiter unten definiert,
    ◦ Z und $R_5$, gemeinsam mit dem Kohlenstoffatom, an das sie gebunden sind, eine

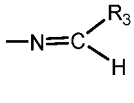

-Gruppe bilden mit $R_3$ wie weiter oben definiert, oder
    ◦ Z und $R_5$, gemeinsam mit dem Kohlenstoffatom, an das sie gebunden sind, eine

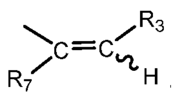

-Gruppe bilden, wobei $R_7$ ausgewählt ist aus der Gruppe, gebildet aus einem Wasserstoffatom, einer Alkylgruppe oder einer Arylgruppe, wobei die Alkyl- und Arylgruppen gegebenenfalls substituiert sind und $R_3$ wie weiter oben definiert ist;

- wenn n = 1 und m = 0, Z ausgewählt ist aus der Gruppe, gebildet aus $-NR_9R_{10}$, wobei

  • $R_9$ und $R_{10}$ unabhängig voneinander ein Wasserstoffatom, eine Alkylgruppe, eine Alkenylgruppe, eine Alkinylgruppe, eine Arylgruppe, eine Heteroarylgruppe, eine heterocyclische Gruppe, eine Silylgruppe darstellen, wobei die Alkyl-, Alkenyl-, Alkinyl-, Aryl-, Heteroaryl-, heterocyclischen, Silylgruppen gegebenenfalls substituiert sind, oder
  • $R_9$ und $R_{10}$, zusammengenommen mit dem Stickstoffatom, an das sie gebunden sind, einen gegebenenfalls substituierten Heterocyclus bilden, und
  • $R_3$, $R_4$ und $R_5$ wie weiter oben definiert;

**dadurch gekennzeichnet, dass** ein silylierter Formiat von Formel (II)

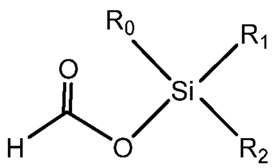

(II)

wobei $R_0$, $R_1$ und $R_2$ wie weiter oben definiert sind, mit einer organischen Verbindung von Formel (III), (IV), (V), (VI), (VII), (VIII) oder (IX) umgesetzt wird

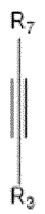 oder 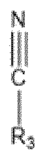 oder 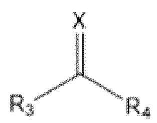 oder 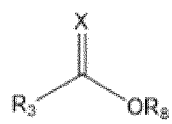

(III) (IV) (V) (VI)

oder

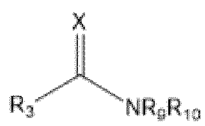 oder 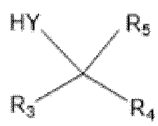 oder 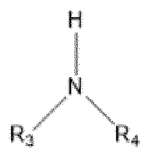

(VII) (VIII) (IX)

wobei
- $R_3$, $R_4$, $R_5$ $R_9$ und $R_{10}$ wie weiter oben definiert sind;
- $R_7$ ausgewählt ist aus der Gruppe, gebildet aus einem Wasserstoffatom, einer Alkylgruppe oder einer Arylgruppe, wobei die Alkyl- und Arylgruppen gegebenenfalls substituiert sind;
- $R_8$ ausgewählt ist aus der Gruppe, gebildet aus einem Wasserstoffatom, einer Alkylgruppe, einer Alkenylgruppe, einer Alkinylgruppe, einer Arylgruppe, einer Heteroarylgruppe, einer heterocyclischen Gruppe, wobei die Alkyl-, Alkenyl-, Alkinyl-, Aryl-, Heteroaryl-, heterocyclischen Gruppen gegebenenfalls substituiert sind;

- X ausgewählt ist aus der Gruppe, gebildet aus

  • einem Sauerstoffatom,
  • einer $CR_aR_b$-Gruppe, wobei $R_a$ und $R_b$ unabhängig voneinander ein Wasserstoffatom, eine Alkylgruppe, eine Arylgruppe, eine Heteroarylgruppe, eine Silylgruppe oder eine heterocyclische Gruppe darstellen, wobei die Alkyl-, Aryl-, Heteroaryl-, Silyl-, heterocyclischen Gruppen gegebenenfalls substituiert sind, oder
  • eine $NR_6$-Gruppe, wobei $R_6$ ein Wasserstoffatom, eine Alkylgruppe, eine Silylgruppe, eine Arylgruppe darstellt, wobei die Alkyl-, Silyl- oder Arylgruppen gegebenenfalls substituiert sind;

- Y ausgewählt ist aus der Gruppe, gebildet aus einem Sauerstoffatom oder einem Schwefelatom;

eine "Alkyl-"Gruppe einen linearen, verzweigten oder zyklischen, gesättigten, gegebenenfalls substituierten Kohlenstoffrest bezeichnet, der 1 bis 20 Kohlenstoffatome umfasst;
unter "Alkenyl" oder "Alkinyl" ein ungesättigter linearer, verzweigter oder zyklischer, gegebenenfalls substituierter Kohlenstoffrest verstanden wird, wobei der ungesättigte Kohlenstoffrest 2 bis 20 Kohlenstoffatome und mindestens eine Doppel- (Alkenyl) und/oder mindestens eine Dreifachbindung (Alkinyl) umfasst;
in Gegenwart eines Katalysators und gegebenenfalls eines Zusatzstoffes.

**2.** Verfahren nach Anspruch 1, **dadurch gekennzeichnet, dass**, wenn n = 0 und m = 1

- die organische Verbindung von Formel (IX) ist, und
- in der Verbindung von Formel (I), Z ausgewählt ist aus der Gruppe, gebildet aus $-NR_3R_4$,

mit

• $R_3$ und $R_4$ unabhängig voneinander ausgewählt aus der Gruppe, gebildet aus einem Wasserstoffatom, einer Alkylgruppe, einer Halogenalkylgruppe, einer Alkenylgruppe, einer Alkinylgruppe, einer Silylgruppe, einer Arylgruppe, einer Heteroarylgruppe, einer heterocyclischen Gruppe, wobei die Alkyl-, Alkenyl-, Alkinyl-, Aryl-, Heteroaryl-, Silyl- oder heterocyclischen Gruppen gegebenenfalls substituiert sind.

**3.** Verfahren nach Anspruch 1, **dadurch gekennzeichnet, dass**, wenn n = 0 und m = 1

- die organische Verbindung von Formel (IX) ist, und
- in der Verbindung von Formel (I), Z ausgewählt ist aus der Gruppe, gebildet aus $-NR_3R_4$,

wobei $R_3$ und $R_4$, zusammengenommen mit dem Stickstoffatom, an das sie gebunden sind, einen gegebenenfalls substituierten Heterocyclus bilden.

**4.** Verfahren nach Anspruch 1, **dadurch gekennzeichnet, dass**, wenn n = m = 1,

- die organische Verbindung von Formel (III) ist, und
- in der Verbindung von Formel (I), Z und $R_5$, gemeinsam mit dem Kohlenstoffatom, an das sie gebunden sind, eine

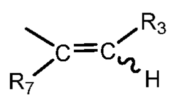

-Gruppe bilden, mit

  • $R_3$ ausgewählt aus der Gruppe, gebildet aus einem Wasserstoffatom, einer Alkylgruppe, einer Silylgruppe, einer Arylgruppe, einer Heteroarylgruppe, einer heterocyclischen Gruppe, wobei die Alkyl-, Aryl-, Heteroaryl-, Silyl- oder heterocyclischen Gruppen gegebenenfalls substituiert sind,
  • $R_7$ ausgewählt aus der Gruppe, gebildet aus einem Wasserstoffatom, einer Alkylgruppe, einer Arylgruppe, wobei die Alkyl- und Arylgruppen gegebenenfalls substituiert sind.

**5.** Verfahren nach Anspruch 1, **dadurch gekennzeichnet, dass**, wenn n = m = 1,

- die organische Verbindung von Formel (IV) ist, und
- in der Verbindung von Formel (I), Z und $R_5$, gemeinsam mit dem Kohlenstoffatom, an das sie gebunden sind, eine

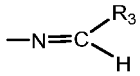

-Gruppe bilden, wobei

• $R_3$ ausgewählt ist aus der Gruppe, gebildet aus einem Wasserstoffatom, einer Alkylgruppe, einer Halogenalkylgruppe, einer Alkenylgruppe, einer cyclischen Alkenylgruppe, einer Alkinylgruppe, einer Silylgruppe, einer Arylgruppe, einer Heteroarylgruppe, einer heterocyclischen Gruppe, wobei die Alkyl-, Alkenyl-, Alkinyl-, Aryl-, Heteroaryl-, Silyl- oder heterocyclischen Gruppen gegebenenfalls substituiert sind.

**6.** Verfahren nach Anspruch 1, **dadurch gekennzeichnet, dass**, wenn n = m = 1,

- die organische Verbindung von Formel (V) ist, und
- in der Verbindung von Formel (I), Z X ist und X ein Sauerstoffatom darstellt, mit

• $R_5$ ausgewählt aus der Gruppe, gebildet aus einem Wasserstoffatom, und
• $R_3$ und $R_4$ unabhängig voneinander ausgewählt sind aus der Gruppe, gebildet aus einem Wasserstoffatom, einer Alkylgruppe, einer Halogenalkylgruppe, einer Alkenylgruppe, einer cyclischen Alkenylgruppe, einer Alkinylgruppe, einer Arylgruppe, einer Heteroarylgruppe, einer heterocyclischen Gruppe, wobei die Alkyl-, Alkenyl-, Alkinyl-, Aryl-, Heteroaryl- oder heterocyclischen Gruppen gegebenenfalls substituiert sind.

**7.** Verfahren nach Anspruch 1, **dadurch gekennzeichnet, dass**, wenn n = m = 1,

- die organische Verbindung von Formel (V) ist, und
- in der Verbindung von Formel (I), Z X ist und X ein Sauerstoffatom darstellt, mit

• $R_5$ ausgewählt aus der Gruppe, gebildet aus einem Wasserstoffatom, und
• $R_3$ et $R_4$ gemeinsam mit dem Kohlenstoffatom, an das sie gebunden sind, ein cyclisches Alkyl bilden, umfassend 3 bis 20 Kohlenstoffatome, wobei das cyclische Alkyl gegebenenfalls substituiert ist.

**8.** Verfahren nach Anspruch 1, **dadurch gekennzeichnet, dass**, wenn n = m = 1,

- die organische Verbindung von Formel (V) ist, und
- in der Verbindung von Formel (I), Z X ist und X eine $CR_aR_b$-Gruppe darstellt, wobei

• $R_a$ und $R_b$ unabhängig voneinander ein Wasserstoffatom, eine Alkylgruppe, eine Arylgruppe, eine Heteroarylgruppe, eine Silylgruppe oder eine heterocyclische Gruppe darstellen, wobei die Alkyl-, Aryl-, Heteroaryl-, Silyl-, heterocyclischen Gruppen gegebenenfalls substituiert sind, und
• $R_5$ ausgewählt ist aus der Gruppe, gebildet aus einem Wasserstoffatom, und
• $R_3$ und $R_4$ unabhängig voneinander ausgewählt sind aus der Gruppe, gebildet aus einem Wasserstoffatom, einer Alkylgruppe, einer Arylgruppe, einer Heteroarylgruppe, Silylgruppe oder einer heterocyclischen Gruppe, wobei die Alkyl-, Aryl-, Heteroaryl-, Silyl- oder heterocyclischen Gruppen gegebenenfalls substituiert sind.

**9.** Verfahren nach Anspruch 1, **dadurch gekennzeichnet, dass**, wenn n = m = 1,

- die organische Verbindung von Formel (V) ist, und
- in der Verbindung von Formel (I), Z X ist und X eine $CR_aR_b$-Gruppe darstellt, wobei

• $R_a$ und $R_b$ unabhängig voneinander ein Wasserstoffatom, eine Alkylgruppe, eine Arylgruppe, eine Heteroarylgruppe, eine Silylgruppe oder eine heterocyclische Gruppe darstellen, wobei die Alkyl-, Aryl-, Heteroaryl-, Silyl-, heterocyclischen Gruppen gegebenenfalls substituiert sind, und
• $R_5$ ausgewählt ist aus der Gruppe, gebildet aus einem Wasserstoffatom,

• $R_3$ und $R_4$, gemeinsam mit dem Kohlenstoffatom, an das sie gebunden sind, ein gegebenenfalls substituiertes cyclisches Alkyl bilden, oder
• $R_3$ und $R_4$, gemeinsam mit dem Kohlenstoffatom, an das sie gebunden sind, ein gegebenenfalls substituiertes cyclisches Alkenyl bilden, wobei die cyclischen Alkyl- und cyclischen Alkenylgruppen gegebenenfalls substituiert sind.

**10.** Verfahren nach Anspruch 1, **dadurch gekennzeichnet, dass**, wenn n = m = 1,

- die organische Verbindung von Formel (V) ist, und
- in der Verbindung von Formel (I), Z X ist und X eine $NR_6$-Gruppe darstellt, wobei

• $R_6$ ein Wasserstoffatom, eine Alkylgruppe, eine Silylgruppe, eine Arylgruppe darstellt, wobei die Alkyl-, Silyl- oder Arylgruppen gegebenenfalls substituiert sind, und
• $R_5$ ausgewählt ist aus der Gruppe, gebildet aus einem Wasserstoffatom, und
• $R_3$ und $R_4$ unabhängig voneinander ausgewählt sind aus der Gruppe, gebildet aus einem Wasserstoffatom, einer Alkylgruppe, einer Arylgruppe oder einer Silylgruppe, wobei die Alkyl-, Aryl- oder Silylgruppen gegebenenfalls substituiert sind.

**11.** Verfahren nach Anspruch 1, **dadurch gekennzeichnet, dass**, wenn n = m = 1,

- die organische Verbindung von Formel (VI) ist, und
- in der Verbindung von Formel (I), Z X ist und X ein Sauerstoffatom darstellt, mit

• $R_8$ ausgewählt aus der Gruppe, gebildet aus einem Wasserstoffatom, einer Alkylgruppe, einer Alkenylgruppe, einer Alkinylgruppe, einer Arylgruppe, einer Silylgruppe, einer Heteroarylgruppe, einer heterocyclischen Gruppe, wobei die Alkyl-, Alkenyl-, Alkinyl-, Aryl-, Heteroaryl-, heterocyclischen Gruppen gegebenenfalls substituiert sind, und
• $R_3$ ausgewählt ist aus der Gruppe, gebildet aus einem Wasserstoffatom, einer Hydroxylgruppe, einer Alkylgruppe, einer Halogenalkylgruppe, einer Alkenylgruppe, einer Alkinylgruppe, einer Arylgruppe, einer Heteroarylgruppe, einer heterocyclischen Gruppe, wobei die Alkyl-, Alkenyl-, Alkinyl-, Aryl-, Heteroaryl- oder heterocyclischen Gruppen gegebenenfalls substituiert sind, und
• $R_4$ und $R_5$ unabhängig voneinander ein Wasserstoffatom darstellen.

**12.** Verfahren nach Anspruch 1, **dadurch gekennzeichnet, dass**, wenn n = 1 und m = 0,

- die organische Verbindung von Formel (VII) ist, wobei X ein Sauerstoffatom darstellt, und
- in der Verbindung von Formel (I), Z ausgewählt ist aus der Gruppe, gebildet aus $-NR_9R_{10}$, wobei

• $R_9$ und $R_{10}$ unabhängig voneinander ausgewählt sind aus der Gruppe, gebildet aus einem Wasserstoffatom, einer Alkylgruppe, einer Alkenylgruppe, einer Alkinylgruppe, einer Arylgruppe, einer Heteroarylgruppe, einer heterocyclischen Gruppe, einer Silylgruppe, wobei die Alkyl-, Alkenyl-, Alkinyl-, Aryl-, Heteroaryl-, heterocyclischen, Silylgruppen gegebenenfalls substituiert sind; und
• $R_3$ ausgewählt ist aus der Gruppe, gebildet aus einem Wasserstoffatom, einer Alkylgruppe, einer Halogenalkylgruppe, einer Alkenylgruppe, einer Alkinylgruppe, einer Arylgruppe, einer Heteroarylgruppe, einer heterocyclischen Gruppe, wobei die Alkyl-, Alkenyl-, Alkinyl-, Aryl-, Heteroaryl- oder heterocyclischen Gruppen gegebenenfalls substituiert sind;
• $R_4$ und $R_5$ unabhängig voneinander ein Wasserstoffatom darstellen.

**13.** Verfahren nach Anspruch 1, **dadurch gekennzeichnet, dass**, wenn n = 1 und m = 0,

- die organische Verbindung von Formel (VII) ist, wobei X ein Sauerstoffatom darstellt, und
- in der Verbindung von Formel (I), Z ausgewählt ist aus der Gruppe, gebildet aus $-NR_9R_{10}$, wobei

• $R_9$ und $R_{10}$, zusammengenommen mit dem Stickstoffatom, an das sie gebunden sind, einen gegebenenfalls substituierten Heterocyclus bilden, und
• $R_3$ ausgewählt ist aus der Gruppe, gebildet aus einem Wasserstoffatom, einer Alkylgruppe, einer Halogenalkylgruppe, einer Alkenylgruppe, einer Alkinylgruppe, einer Arylgruppe, einer Heteroarylgruppe, einer heterocyclischen Gruppe, wobei die Alkyl-, Alkenyl-, Alkinyl-, Aryl-, Heteroaryl- oder heterocyclischen Gruppen gegebenenfalls substituiert sind, und
• $R_4$ und $R_5$ unabhängig voneinander ein Wasserstoffatom darstellen.

**14.** Verfahren nach Anspruch 1, **dadurch gekennzeichnet, dass**, wenn n = m = 1,

- die organische Verbindung von Formel (VIII) ist, und
- in der Verbindung von Formel (I), Z Y ist und Y ein Sauerstoffatom darstellt, wobei $R_3$, $R_4$ und $R_5$ unabhängig voneinander ausgewählt sind aus der Gruppe, gebildet aus

  ◦ einem Wasserstoffatom,
  ◦ einer Alkylgruppe, umfassend 1 bis 12 Kohlenstoffatome, ausgewählt aus der Gruppe, gebildet aus Methyl, Ethyl, Propyl, Butyl, Pentyl, Hexyl, Heptyl und deren verzweigten Isomeren, wobei die Alkylgruppe gegebenenfalls substituiert ist durch

    ▪ eine oder mehrere Hydroxygruppen,
    ▪ eine oder mehrere Alkoxygruppen, von denen der Alkylrest 1 bis 12 Kohlenstoffatome umfasst, ausgewählt aus der Gruppe, gebildet aus Methoxy, Ethoxy, Propyloxy, Butyloxy, Pentyloxy, Hexyloxy, Heptyloxy und deren verzweigten Isomeren,
    ▪ eine oder mehrere Alkenylgruppen, umfassend 2 bis 16 Kohlenstoffatome, ausgewählt aus der Gruppe, gebildet aus Ethylenyl, Propylenyl, Butenyl, Pentenyl, Hexenyl, Heptenyl, Octenyl und deren verzweigten Isomeren, wobei die Alkenylgruppen gegebenenfalls substituiert sind durch eine Alkylgruppe, ausgewählt aus der Gruppe, gebildet aus Ethyl, Propyl, Butyl, Pentyl und deren verzweigten Isomeren,
    ▪ eine oder mehrere Halogenalkylgruppen, ausgewählt aus der Gruppe, gebildet aus $-CF_3$, $-CCl_3$, $-CHCl_2$, $-CClBrCF_3$,
    ▪ eine oder mehrere Siloxygruppen, ausgewählt aus der Gruppe, gebildet aus Trimethylsiloxy, Triethysiloxy, Butyldiphenylsiloxy,
    ▪ eine oder mehrere Arylgruppen, umfassend 6 bis 10 Kohlenstoffatome, ausgewählt aus der Gruppe, gebildet aus Phenyl oder Benzyl, gegebenenfalls substituiert durch

      • ein oder mehrere Halogenatome, ausgewählt aus Fluor-, Chlor-, Brom- oder Iodatomen,
      • eine oder mehrere Alkoxygruppen, ausgewählt aus der Gruppe, gebildet aus Methoxy, Ethoxy, Propyloxy, Butyloxy, Pentyloxy und deren verzweigten Isomeren,
      • eine oder mehrere Alkylgruppen, ausgewählt aus der Gruppe, gebildet aus Methyl, Ethyl, Propyl, Butyl, Pentyl, Hexyl, Heptyl und deren verzweigten Isomeren,
      • eine oder mehrere Acylgruppen $-C(O)R_{13}$, wobei $R_{13}$ eine Alkylgruppe, umfassend 1 bis 12 Kohlenstoffatome, ausgewählt aus der Gruppe, gebildet aus Methyl, Ethyl, Propyl, Butyl, Pentyl, Hexyl, Heptyl und deren verzweigten Isomeren, eine Arylgruppe, ausgewählt aus der Gruppe, gebildet aus Phenyl, Benzyl, eine Aminogruppe, ausgewählt aus der Gruppe, gebildet aus Dimethylamino, Diethylamino, eine Alkoxygruppe, ausgewählt aus der Gruppe, gebildet aus Methoxy, Ethoxy, eine Aryloxygruppe, ausgewählt aus der Gruppe, gebildet aus Benzyloxy, Phenoxy darstellt.
      • eine oder mehrere Carboxylgruppen $-OC(O)R_{14}$, wobei $R_{14}$ ein Wasserstoffatom, eine Alkylgruppe, ausgewählt aus der Gruppe, gebildet aus Methyl, Ethyl, Propyl, Butyl, Pentyl, Hexyl, Heptyl und deren verzweigten Isomeren, eine Alkylgruppe, ausgewählt aus der Gruppe, gebildet aus Phenyl oder Benzyl darstellt,
      • eine oder mehrere Nitrilgruppen (-CN),
      • eine oder mehrere Nitrogruppen ($-NO_2$),
      • eine oder mehrere Aminogruppen, ausgewählt aus der Gruppe, gebildet aus $-NH_2$, $-NHCH_3$, $-N(CH_3)_2$, $-N(CH_2CH_3)_2$, $-NH(CH_2CH_3)$,

  ◦ einer Alkenylgruppe, umfassend 2 bis 16 Kohlenstoffatome, ausgewählt aus der Gruppe, gebildet aus Ethylenyl, Propylenyl, Butenyl, Pentenyl, Hexenyl, Heptenyl, Octenyl und deren verzweigten Isomeren, wobei die Alkenylgruppen gegebenenfalls substituiert sind durch

    ▪ eine oder mehrere Alkylgruppen, ausgewählt aus der Gruppe, gebildet aus Ethyl, Propyl, Butyl, Pentyl und deren verzweigten Isomeren,
    ▪ eine oder mehrere Arylgruppen, ausgewählt aus der Gruppe Phenyl oder Benzyl, gegebenenfalls

substituiert durch

- ein oder mehrere Halogenatome, ausgewählt aus Fluor-, Chlor-, Brom- oder Iodatomen,
- eine oder mehrere Alkoxygruppen, ausgewählt aus der Gruppe, gebildet aus Methoxy, Ethoxy, Propyloxy, Butyloxy, Pentyloxy und deren verzweigten Isomeren,
- eine oder mehrere Alkylgruppen, ausgewählt aus der Gruppe, gebildet aus Methyl, Ethyl, Propyl, Butyl, Pentyl, Hexyl, Heptyl und deren verzweigten Isomeren,
- eine oder mehrere Thioalkoxygruppen (-S-Alkyl), wobei der Alkylrest ausgewählt ist aus der Gruppe, gebildet aus Methyl, Ethyl, Propyl, Butyl, Pentyl, Hexyl, Heptyl und deren verzweigten Isomeren,
- eine oder mehrere Acylgruppen $-C(O)R_{13}$, wobei $R_{13}$ eine Alkylgruppe, umfassend 1 bis 12 Kohlenstoffatome, ausgewählt aus der Gruppe, gebildet aus Methyl, Ethyl, Propyl, Butyl, Pentyl, Hexyl, Heptyl und deren verzweigten Isomeren, eine Arylgruppe, ausgewählt aus der Gruppe, gebildet aus Phenyl, Benzyl, eine Aminogruppe, ausgewählt aus der Gruppe, gebildet aus Dimethylamino, Diethylamino, eine Alkoxygruppe, ausgewählt aus der Gruppe, gebildet aus Methoxy, Ethoxy, eine Aryloxygruppe, ausgewählt aus der Gruppe, gebildet aus Benzyloxy, Phenoxy darstellt,
- eine oder mehrere Carboxylgruppen $-OC(O)R_{14}$, wobei $R_{14}$ ein Wasserstoffatom, eine Alkylgruppe, ausgewählt aus der Gruppe, gebildet aus Methyl, Ethyl, Propyl, Butyl, Pentyl, Hexyl, Heptyl und deren verzweigten Isomeren, eine Arylgruppe, ausgewählt aus der Gruppe, gebildet aus Phenyl oder Benzyl darstellt,
- eine oder mehrere Nitrilgruppen (-CN),
- eine oder mehrere Nitrogruppen ($-NO_2$),
- eine oder mehrere Aminogruppen, ausgewählt aus der Gruppe, gebildet aus $-NH_2$, $-NHCH_3$, $-N(CH_3)_2$, $-N(CH_2CH_3)_2$, $-NH(CH_2CH_3)$,

◦ einer Acylgruppe $-C(O)R_{13}$, wobei $R_{13}$ eine Alkylgruppe ist, umfassend 1 bis 12 Kohlenstoffatome, ausgewählt aus der Gruppe, gebildet aus Methyl, Ethyl, Propyl, Butyl, Pentyl, Hexyl, Heptyl und deren verzweigten Isomeren,
◦ einer Aryloxygruppe, von der der Arylrest 6 bis 10 Kohlenstoffatome umfasst, ausgewählt aus der Gruppe, gebildet aus Phenoxy oder Benzyloxy,
◦ einer Halogenalkylgruppe, ausgewählt aus der Gruppe, gebildet aus $-CF_3$, $-CCl_3$, $-CHCl_2$, $-CClBrCF_3$,
◦ einer Arylgruppe, umfassend von 6 bis 10 Kohlenstoffatome, ausgewählt aus der Gruppe, gebildet aus Phenyl oder Benzyl, gegebenenfalls substituiert durch

▪ ein oder mehrere Halogenatome, ausgewählt aus Fluor-, Chlor-, Brom- oder Iodatomen,
▪ eine oder mehrere Alkoxygruppen, ausgewählt aus der Gruppe, gebildet aus Methoxy, Ethoxy, Propyloxy, Butyloxy, Pentyloxy und deren verzweigten Isomeren,
▪ eine oder mehrere Alkylgruppen, ausgewählt aus der Gruppe, gebildet aus Methyl, Ethyl, Propyl, Butyl, Pentyl, Hexyl, Heptyl und deren verzweigten Isomeren,
▪ eine oder mehrere Thioalkoxygruppen (-S-Alkyl), wobei der Alkylrest ausgewählt ist aus der Gruppe, gebildet aus Methyl, Ethyl, Propyl, Butyl, Pentyl, Hexyl, Heptyl und deren verzweigten Isomeren,
▪ eine oder mehrere Acylgruppen $-C(O)R_{13}$, wobei $R_{13}$ eine Alkylgruppe darstellt, umfassend 1 bis 12 Kohlenstoffatome, ausgewählt aus der Gruppe, gebildet aus Methyl, Ethyl, Propyl, Butyl, Pentyl, Hexyl, Heptyl und deren verzweigten Isomeren,
▪ eine oder mehrere Carboxylgruppen $-OC(O)R_{14}$, wobei $R_{14}$ ein Wasserstoffatom oder eine Alkylgruppe darstellt, ausgewählt aus der Gruppe, gebildet aus Methyl, Ethyl, Propyl, Butyl, Pentyl, Hexyl, Heptyl und deren verzweigten Isomeren,
▪ eine oder mehrere Nitrilgruppen (-CN),
▪ eine oder mehrere Nitrogruppen ($-NO_2$),
▪ eine oder mehrere Aminogruppen, ausgewählt aus der Gruppe, gebildet aus $-NH_2$, $-NHCH_3$, $-N(CH_3)_2$, $-N(CH_2CH_3)_2$, $-NH(CH_2CH_3)$,

◦ einer Heteroarylgruppe, umfassend 5 bis 12 Glieder, davon mindestens 2 Kohlenstoffatome und mindestens ein Heteroatom, ausgewählt aus Stickstoff, Sauerstoff oder Schwefel, wobei die Heteroarylgruppe ausgewählt ist aus der Gruppe, gebildet aus Furyl, Thienyl, Pyrrolyl, Pyridyl, Imidazolyl, Thiazolyl.

**15.** Verfahren nach Anspruch 1, **dadurch gekennzeichnet, dass**, wenn n = m = 1,

- die organische Verbindung von Formel (VIII) ist, und
- in der Verbindung von Formel (I), Z Y ist und Y ein Sauerstoffatom darstellt, wobei $R_3$, $R_4$ und $R_5$ gemeinsam mit dem Kohlenstoffatom, an das sie gebunden sind, ein Aryl bilden, umfassend 6 bis 10 Kohlenstoffatome, ausgewählt aus der Gruppe, gebildet aus Phenyl oder Benzyl, gegebenenfalls substituiert durch

  • ein oder mehrere Halogenatome, ausgewählt aus Fluor-, Chlor-, Brom- oder Iodatomen,
  • eine oder mehrere Alkoxygruppen, ausgewählt aus der Gruppe, gebildet aus Methoxy, Ethoxy, Propyloxy, Butyloxy, Pentyloxy und deren verzweigten Isomeren,
  • eine oder mehrere Aryloxygruppen, ausgewählt aus Phenoxy und Benzyloxy,
  • eine oder mehrere Alkylgruppen, ausgewählt aus der Gruppe, gebildet aus Methyl, Ethyl, Propyl, Butyl, Pentyl, Hexyl, Heptyl und deren verzweigten Isomeren,
  • eine oder mehrere Thioalkoxygruppen (-S-Alkyl), wobei der Alkylrest ausgewählt ist aus der Gruppe, gebildet aus Methyl, Ethyl, Propyl, Butyl, Pentyl, Hexyl, Heptyl und deren verzweigten Isomeren,
  • eine oder mehrere Acylgruppen $-C(O)R_{13}$, wobei $R_{13}$ eine Alkylgruppe, umfassend 1 bis 12 Kohlenstoffatome, ausgewählt aus der Gruppe, gebildet aus Methyl, Ethyl, Propyl, Butyl, Pentyl, Hexyl, Heptyl und deren verzweigten Isomeren, eine Arylgruppe, ausgewählt aus der Gruppe, gebildet aus Phenyl, Benzyl, eine Aminogruppe, ausgewählt aus der Gruppe, gebildet aus Dimethylamino, Diethylamino, eine Alkoxygruppe, ausgewählt aus der Gruppe, gebildet aus Methoxy, Ethoxy, eine Aryloxygruppe, ausgewählt aus der Gruppe, gebildet aus Benzyloxy, Phenoxy darstellt,
  • eine oder mehrere Carboxylgruppen $-OC(O)R_{14}$, wobei $R_{14}$ ein Wasserstoffatom oder eine Alkylgruppe darstellt, ausgewählt aus der Gruppe, gebildet aus Methyl, Ethyl, Propyl, Butyl, Pentyl, Hexyl, Heptyl und deren verzweigten Isomeren,
  • eine oder mehrere Nitrilgruppen (-CN),
  • eine oder mehrere Nitrogruppen ($-NO_2$),
  • eine oder mehrere Aminogruppen, ausgewählt aus der Gruppe, gebildet aus $-NH_2$, $-NHCH_3$, $-N(CH_3)_2$, $-N(CH_2CH_3)_2$, $-NH(CH_2CH_3)$.

**16.** Verfahren nach Anspruch 1, **dadurch gekennzeichnet, dass**, wenn n = m = 1,

- die organische Verbindung von Formel (VIII) ist, und
- in der Verbindung von Formel (I), Z Y ist und Y ein Sauerstoffatom darstellt, wobei

  • $R_5$ ein Wasserstoffatom darstellt, und
  • $R_3$ und $R_4$ gemeinsam mit dem Kohlenstoffatom, an das sie gebunden sind, ein mono- oder polycyclisches Alkyl bilden, umfassend 3 bis 20 Kohlenstoffatome, ausgewählt aus der Gruppe, gebildet Cyclopropyl, Cyclobutyl, Cyclopentyl, Cyclohexyl, Cycloheptyl, Cyclooctyl, Bicyclo[2,1,1]hexyl, Bicyclo[2,2,1]heptyl, 2-Adamantyl, wobei die mono- oder polycyclische Alkylgruppe gegebenenfalls substituiert ist durch

    ◦ eine oder mehrere Hydroxygruppen,
    ◦ eine oder mehrere Alkoxygruppen, von denen der Alkylrest 1 bis 12 Kohlenstoffatome umfasst, ausgewählt aus der Gruppe, gebildet aus Methoxy, Ethoxy, Propyloxy, Butyloxy, Pentyloxy, Hexyloxy, Heptyloxy und deren verzweigten Isomeren,
    ◦ eine oder mehrere Alkenylgruppen, umfassend 2 bis 16 Kohlenstoffatome, ausgewählt aus der Gruppe, gebildet aus Ethylenyl, Propylenyl, Butenyl, Pentenyl, Hexenyl, Heptenyl, Octenyl und deren verzweigten Isomeren, wobei die Alkenylgruppen gegebenenfalls substituiert sind durch eine Alkylgruppe, ausgewählt aus der Gruppe, gebildet aus Ethyl, Propyl, Butyl, Pentyl und deren verzweigten Isomeren,
    ◦ eine oder mehrere Halogenalkylgruppen, ausgewählt aus der Gruppe, gebildet aus $-CF_3$, $-CCl_3$, $-CHCl_2$, $-CClBrCF_3$,
    ◦ eine oder mehrere Siloxygruppen, ausgewählt aus der Gruppe, gebildet aus Trimethylsiloxy, Triethylsiloxy, Butyldiphenylsiloxy,
    ◦ eine oder mehrere Arylgruppen, umfassend von 6 bis 10 Kohlenstoffatome, ausgewählt aus der Gruppe, gebildet aus Phenyl oder Benzyl.

**17.** Verfahren nach Anspruch 1, **dadurch gekennzeichnet, dass**, wenn n = m = 1,

- die organische Verbindung von Formel (VIII) ist, und
- in der Verbindung von Formel (I), Z Y ist und Y ein Sauerstoffatom darstellt, wobei

- $R_5$ ein Wasserstoffatom darstellt, und
- $R_3$ und $R_4$ gemeinsam mit dem Kohlenstoffatom, an das sie gebunden sind, ein cyclisches Alkenyl bilden, umfassend 3 bis 20 Kohlenstoffatome und mindestens eine Doppelbindung, ausgewählt aus der Gruppe, gebildet aus Cyclopentenyl, Cyclohexenyl, 2,3,4,7,8,9,11,12,14,15,16,17-Dodecahydro-1H-cyclopenta[a]phenanthrenyl, oder
- $R_3$, $R_4$ und $R_5$ gemeinsam mit dem Kohlenstoffatom, an das sie gebunden sind, ein cyclisches Alkenyl bilden, umfassend 3 bis 20 Kohlenstoffatome und mindestens eine Doppelbindung, ausgewählt aus der Gruppe, gebildet aus Cyclopentenyl, Cyclohexenyl,

wobei die cyclische Alkenylgruppe gegebenenfalls substituiert ist durch

◦ ein oder mehrere Halogenatome, ausgewählt aus Fluor-, Chlor-, Brom- oder Iodatomen,
◦ eine oder mehrere Alkoxygruppen, ausgewählt aus der Gruppe, gebildet aus Methoxy, Ethoxy, Propyloxy, Butyloxy, Pentyloxy und deren verzweigten Isomeren,
◦ eine oder mehrere Aryloxygruppen, ausgewählt aus Phenoxy und Benzyloxy,
◦ eine oder mehrere Alkylgruppen, ausgewählt aus der Gruppe, gebildet aus Methyl, Ethyl, Propyl, Butyl, Pentyl, Hexyl, Heptyl und deren verzweigten Isomeren,
◦ eine oder mehrere Thioalkoxygruppen (-S-Alkyl), wobei der Alkylrest ausgewählt ist aus der Gruppe, gebildet aus Methyl, Ethyl, Propyl, Butyl, Pentyl, Hexyl, Heptyl und deren verzweigten Isomeren,
◦ eine oder mehrere Acylgruppen $-C(O)R_{13}$, wobei $R_{13}$ eine Alkylgruppe darstellt, umfassend 1 bis 12 Kohlenstoffatome, ausgewählt aus der Gruppe, gebildet aus Methyl, Ethyl, Propyl, Butyl, Pentyl, Hexyl, Heptyl und deren verzweigten Isomeren,
◦ eine oder mehrere Carboxylgruppen $-OC(O)R_{14}$, wobei $R_{14}$ ein Wasserstoffatom oder eine Alkylgruppe darstellt, ausgewählt aus der Gruppe, gebildet aus Methyl, Ethyl, Propyl, Butyl, Pentyl, Hexyl, Heptyl und deren verzweigten Isomeren,
◦ eine oder mehrere Nitrilgruppen (-CN),
◦ eine oder mehrere Nitrogruppen ($-NO_2$),
◦ eine oder mehrere Aminogruppen, ausgewählt aus der Gruppe, gebildet aus $-NH_2$, $-NHCH_3$, $-N(CH_3)_2$, $-N(CH_2CH_3)_2$, $-NH(CH_2CH_3)$.

**18.** Verfahren nach Anspruch 1, **dadurch gekennzeichnet, dass**, wenn n = m = 1,

- die organische Verbindung von Formel (VIII) ist, und
- in der Verbindung von Formel (I), Z Y ist und Y ein Schwefelatom darstellt, wobei $R_3$, $R_4$ und $R_5$ gemeinsam mit dem Kohlenstoffatom, an das sie gebunden sind, ein Aryl bilden, umfassend 6 bis 10 Kohlenstoffatome, ausgewählt aus der Gruppe, gebildet aus Phenyl oder Benzyl, gegebenenfalls substituiert durch

◦ ein oder mehrere Halogenatome, ausgewählt aus Fluor-, Chlor-, Brom- oder Iodatomen,
◦ eine oder mehrere Alkoxygruppen, ausgewählt aus der Gruppe, gebildet aus Methoxy, Ethoxy, Propyloxy, Butyloxy, Pentyloxy und deren verzweigten Isomeren,
◦ eine oder mehrere Aryloxygruppen, ausgewählt aus Phenoxy und Benzyloxy,
◦ eine oder mehrere Alkylgruppen, ausgewählt aus der Gruppe, gebildet aus Methyl, Ethyl, Propyl, Butyl, Pentyl, Hexyl, Heptyl und deren verzweigten Isomeren,
◦ eine oder mehrere Thioalkoxygruppen (-S-Alkyl), wobei der Alkylrest ausgewählt ist aus der Gruppe, gebildet aus Methyl, Ethyl, Propyl, Butyl, Pentyl, Hexyl, Heptyl und deren verzweigten Isomeren,
◦ eine oder mehrere Acylgruppen $-C(O)R_{13}$, wobei $R_{13}$ eine Alkylgruppe darstellt, umfassend 1 bis 12 Kohlenstoffatome, ausgewählt aus der Gruppe, gebildet aus Methyl, Ethyl, Propyl, Butyl, Pentyl, Hexyl, Heptyl und deren verzweigten Isomeren,
◦ eine oder mehrere Carboxylgruppen $-OC(O)R_{14}$, wobei $R_{14}$ ein Wasserstoffatom oder eine Alkylgruppe darstellt, ausgewählt aus der Gruppe, gebildet aus Methyl, Ethyl, Propyl, Butyl, Pentyl, Hexyl, Heptyl und deren verzweigten Isomeren,
◦ eine oder mehrere Nitrilgruppen (-CN),
◦ eine oder mehrere Nitrogruppen ($-NO_2$),
◦ eine oder mehrere Aminogruppen, ausgewählt aus der Gruppe, gebildet aus $-NH_2$, $-NHCH_3$, $-N(CH_3)_2$, $-N(CH_2CH_3)_2$, $-NH(CH_2CH_3)$.

**19.** Verfahren nach einem der Ansprüche 1 bis 18, **dadurch gekennzeichnet, dass** in der Verbindung von Formel (I) und dem silylierten Formiat von Formel (II),

- $R_0$, $R_1$ und $R_2$ unabhängig voneinander ausgewählt sind aus der Gruppe, gebildet aus einer Alkoxygruppe, von der die Alkylgruppe 1 bis 12 Kohlenstoffatome umfasst, einer Alkylgruppe, umfassend 1 bis 20 Kohlenstoffatome, einer Arylgruppe, umfassend 6 bis 20 Kohlenstoffatome oder einer Aryloxygruppe, von der die Arylgruppe zwischen 6 bis 20 Kohlenstoffatome umfasst, wobei die Alkyl-, Aryl-, Alkoxy- und Aryloxygruppen gegebenenfalls substituiert sind.

## Claims

**1.** Method for preparing compounds of formula (I)

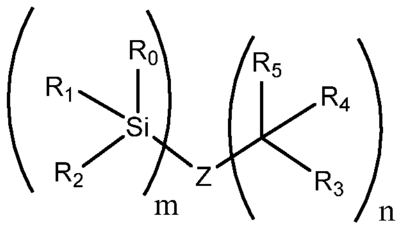

(I)

wherein

- $R_0$, $R_1$ and $R_2$, independently from one another, are selected from the group formed by an alkoxy group, an aryloxy group, an alkyl group, a carboxyl group, an alkenyl group, an alkynyl group, an aryl group, a heteroaryl group, a heterocyclic group, a silyl group, a siloxy group, said alkyl, alkenyl, alkynyl, aryl, heteroaryl, alkoxy, aryloxy, silyl or heterocyclic groups being optionally substituted, or,
$R_0$ and $R_1$ together with the silicon atom to which they are bonded, form a silylated heterocycle optionally substituted and $R_2$ is such as defined above;
- n=0 or 1;
- m=0 or 1;
- when n=0 and m=1, Z is selected from the group formed by - $NR_3R_4$ with

  • $R_3$ and $R_4$ independently from one another, selected from the group formed by a hydrogen atom, an alkyl group, a halogenoalkyl group, an alkenyl group, an alkynyl group, a silyl group, an aryl group, a heteroaryl group, a heterocyclic group, said alkyl, alkenyl, alkynyl, aryl, heteroaryl, silyl, or heterocyclic groups being optionally substituted, or
  • $R_3$ and $R_4$, taken together with the nitrogen atom to which they are bonded, form a heterocycle optionally substituted;

- when n=m=1,

  • $R_3$, $R_4$ and $R_5$, independently from one another, are selected from the group formed by a hydrogen atom, an alkyl group, a halogenoalkyl group, an alkenyl group, a cyclic alkenyl group, an alkynyl group, a silyl group, an aryl group, a heteroaryl group, a heterocyclic group, said alkyl, alkenyl, alkynyl, aryl, heteroaryl, silyl, or heterocyclic groups being optionally substituted, or
  • $R_3$, $R_4$ and $R_5$ together with the carbon atom to which they are bonded, form an aryl optionally substituted, or
  • $R_3$ and $R_4$ together with the carbon atom to which they are bonded, form a cyclic alkyl optionally substituted and $R_5$ is such as defined above, or
  • $R_3$ and $R_4$ together with the carbon atom to which they are bonded, form a cyclic alkenyl optionally substituted and $R_5$ is such as defined above, or
  • $R_3$, $R_4$ and $R_5$ together with the carbon atom to which they are bonded, form a cyclic alkenyl, and
  • Z is selected from the group formed by

    ◦ X or Y such as defined below,
    ◦ Z and $R_5$ together with the carbon atom to which they are bonded, form a group

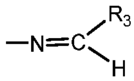

with $R_3$ such as defined above, or

◦ Z and $R_5$ together with the carbon atom to which they are bonded, form a group

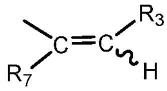

with $R_7$ being selected from the group formed by a hydrogen atom, an alkyl group or an aryl group, said alkyl and aryl groups being optionally substituted, and $R_3$ being such as defined above;

- when n=1 and m=0, Z is selected from the group formed by - $NR_9R_{10}$ with

• $R_9$ and $R_{10}$ represent, independently from one another, a hydrogen atom, an alkyl group, an alkenyl group, an alkynyl group, an aryl group, a heteroaryl group, a heterocyclic group, a silyl group, said alkyl, alkenyl, alkynyl, aryl, heteroaryl, heterocyclic, silyl groups being optionally substituted, or
• $R_9$ and $R_{10}$, taken together with the nitrogen atom to which they are bonded, form a heterocycle optionally substituted, and
• $R_3$, $R_4$ and $R_5$ such as defined above;

**characterised in that** a silylated formiate of formula (II) is made to react

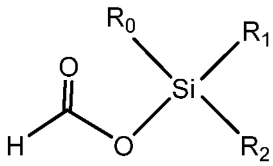

(II)

wherein $R_0$, $R_1$ and $R_2$ are such as defined above, with an organic compound of formula (III), (IV), (V), (VI), (VII), (VIII) or (IX)

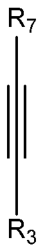

(III)

ou

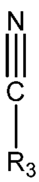

(IV)

ou

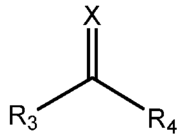

(V)

ou

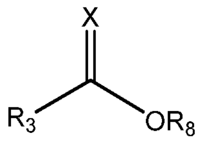

(VI)

ou

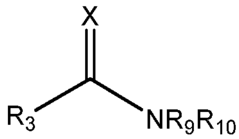

(VII)

ou

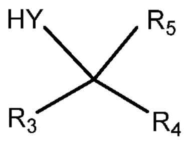

(VIII)

ou

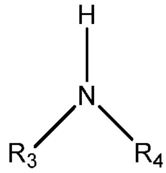

(IX)

wherein

- $R_3$, $R_4$, $R_5$ $R_9$ and $R_{10}$ are such as defined above;
- $R_7$ is selected from the group formed by a hydrogen atom, an alkyl group, or an aryl group, said alkyl and aryl groups being optionally substituted;
- $R_8$ is selected from the group formed by a hydrogen atom, an alkyl group, an alkenyl group, an alkynyl group, an aryl group, a heteroaryl group, a heterocyclic group, said alkyl, alkenyl, alkynyl, aryl, heteroaryl, heterocyclic groups being optionally substituted;
- X is selected from the group formed by

- an oxygen atom,
- a $CR_aR_b$ group with $R_a$ and $R_b$ representing, independently from one another, a hydrogen atom, an alkyl group, an aryl group, a heteroaryl group, a silyl group, or a heterocyclic group, said alkyl, aryl, heteroaryl, silyl, heterocyclic groups being optionally substituted, or
- an $NR_6$ group with $R_6$ representing a hydrogen atom, an alkyl group, a silyl group, an aryl group, said alkyl, silyl or aryl groups being optionally substituted;

- Y is selected from a group formed by an oxygen atom or a sulphur atom;

an "alkyl" group designates a linear, branched or cyclic, saturated, optionally substituted carbon radical, comprising 1 to 20 carbon atoms;
"alkenyl" or "alkynyl" means a linear, branched or cyclic, optionally substituted unsaturated carbon radical, said unsaturated carbon radical comprising 2 to 20 carbon atoms and at least one double (alkenyl) and/or at least one triple bond (alkynyl);
in the presence of a catalyst and optionally an additive.

**2.** Method according to claim 1, **characterised in that** when n=0 and m=1

- the organic compound is of formula (IX), and
- in the compound of formula (I), Z is selected from the group formed by $-NR_3R_4$, with

  - $R_3$ and $R_4$ independently from one another, selected from the group formed by a hydrogen atom, an alkyl group, a halogenoalkyl group, an alkenyl group, an alkynyl group, a silyl group, an aryl group, a heteroaryl group, a heterocyclic group, said alkyl, alkenyl, alkynyl, aryl, heteroaryl, heteroaryl, silyl, or heterocyclic groups being optionally substituted.

**3.** Method according to claim 1, **characterised in that** when n=0 and m=1

- the organic compound is of formula (IX), and
- in the compound of formula (I), Z is selected from the group formed by $-NR_3R_4$,

with $R_3$ and $R_4$, taken together with the nitrogen atom to which they are bonded, form a heterocycle optionally substituted.

**4.** Method according to claim 1, **characterised in that** when n=m=1,

- the organic compound is of formula (III), and
- in the compound of formula (I), Z and $R_5$, together with the carbon atom to which they are bonded form a group

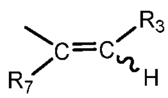

with

  - $R_3$ selected from the group formed by a hydrogen atom, an alkyl group, a silyl group, an aryl group, a heteroaryl group, a heterocyclic group, said alkyl, aryl, heteroaryl, silyl, or heterocyclic groups being optionally substituted,
  - $R_7$ selected from the group formed by a hydrogen atom, an alkyl group, an aryl group, said alkyl and aryl groups being optionally substituted.

**5.** Method according to claim 1, **characterised in that** when n=m=1,

- the organic compound is of formula (IV), and
- in the compound of formula (I), Z and $R_5$ together with the carbon atom to which they are bonded, form a group

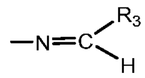

with

- $R_3$ being selected from the group formed by a hydrogen atom, an alkyl group, a halogenoalkyl group, an alkenyl group, a cyclic alkenyl group, an alkynyl group, a silyl group, an aryl group, a heteroaryl group, a heterocyclic group, said alkyl, alkenyl, alkynyl, aryl, heteroaryl, silyl, or heterocyclic groups being optionally substituted.

**6.** Method according to claim 1, **characterised in that** when n=m=1,

- the organic compound is of formula (V), and
- in the compound of formula (I), Z is X and X represents an oxygen atom, with

  - $R_5$ selected from the group formed by a hydrogen atom, and
  - $R_3$ and $R_4$, independently from one another, are selected from the group formed by a hydrogen atom, an alkyl group, a halogenoalkyl group, an alkenyl group, a cyclic alkenyl group, an alkynyl group, an aryl group, a heteroaryl group, a heterocyclic group, said alkyl, alkenyl, alkynyl, aryl, heteroaryl or heterocyclic groups being optionally substituted.

**7.** Method according to claim 1, **characterised in that** when n=m=1,

- the organic compound is of formula (V), and
- in the compound of formula (I), Z is X and X represents an oxygen atom, with

  - $R_5$ selected from the group formed by a hydrogen atom, and
  - $R_3$ and $R_4$ together with the carbon atom to which they are bonded, form a cyclic alkyl comprising 3 to 20 carbon atoms, said cyclic alkyl being optionally substituted.

**8.** Method according to claim 1, **characterised in that** when n=m=1,

- the organic compound is of formula (V), and
- in the compound of formula (I), Z is X and X represents a $CR_aR_b$ group, with

  - $R_a$ and $R_b$ representing, independently from one another, a hydrogen atom, an alkyl group, an aryl group, a heteroaryl group, a silyl group, or a heterocyclic group, said alkyl, aryl, heteroaryl, silyl, heterocyclic groups being optionally substituted, and
  - $R_5$ is selected from the group formed by a hydrogen atom, and
  - $R_3$ and $R_4$, independently from one another, are selected from the group formed by a hydrogen atom, an alkyl group, an aryl group, a heteroaryl group, a silyl group, or a heterocyclic group, said alkyl, aryl, heteroaryl, silyl, or heterocyclic groups being optionally substituted.

**9.** Method according to claim 1, **characterised in that** when n=m=1,

- the organic compound is of formula (V), and
- in the compound of formula (I), Z is X and X represents a $CR_aR_b$ group, with

  - $R_a$ and $R_b$ representing, independently from one another, a hydrogen atom, an alkyl group, an aryl group, a heteroaryl group, a silyl group, or a heterocyclic group, said alkyl, aryl, heteroaryl, silyl, heterocyclic groups being optionally substituted, and
  - $R_5$ is selected from the group formed by a hydrogen atom,
  - $R_3$ and $R_4$ together with the carbon atom to which they are bonded, form a cyclic alkyl optionally substituted, or
  - $R_3$ and $R_4$ together with the carbon atom to which they are bonded, form a cyclic alkenyl optionally substituted,

said cyclic alkyl and cyclic alkenyl groups being optionally substituted.

**10.** Method according to claim 1, **characterised in that** when n=m=1,

- the organic compound is of formula (V), and
- in the compound of formula (I), Z is X and X represents an $NR_6$ group, with

  • $R_6$ representing a hydrogen atom, an alkyl group, a silyl group, an aryl group, said alkyl, silyl or aryl groups being optionally substituted, and
  • $R_5$ is selected from the group formed by a hydrogen atom, and
  • $R_3$ and $R_4$, independently from one another, are selected from the group formed by a hydrogen atom, an alkyl group, an aryl group, or a silyl group, said alkyl, aryl or silyl groups, being optionally substituted.

**11.** Method according to claim 1, **characterised in that** when n=m=1,

- the organic compound is of formula (VI), and
- in the compound of formula (I), Z is X and X represents an oxygen atom, with

  • $R_8$ selected from the group formed by a hydrogen atom, an alkyl group, an alkenyl group, an alkynyl group, an aryl group, a silyl group, a heteroaryl group, a heterocyclic group, said alkyl, alkenyl, alkynyl, aryl, heteroaryl, heterocyclic groups being optionally substituted, and
  • $R_3$ is selected from the group formed by a hydrogen atom, a hydroxyl group, an alkyl group, a halogenoalkyl group, an alkenyl group, an alkynyl group, an aryl group, a heteroaryl group, a heterocyclic group, said alkyl, alkenyl, alkynyl, aryl, heteroaryl, or heterocyclic groups being optionally substituted, and
  • $R_4$ and $R_5$, independently from one another, represent a hydrogen atom.

**12.** Method according to claim 1, **characterised in that** when n=1 and m=0,

- the organic compound is of formula (VII) with X representing an oxygen atom, and
- in the compound of formula (I), Z is selected from the group formed by $-NR_9R_{10}$, with

  • $R_9$ and $R_{10}$, independently from one another, are selected from the group formed by a hydrogen atom, an alkyl group, an alkenyl group, an alkynyl group, an aryl group, a heteroaryl group, a heterocyclic group, a silyl group, with the alkyl, alkenyl, alkynyl, aryl, heteroaryl, heterocyclic, silyl groups being optionally substituted; and
  • $R_3$ is selected from the group formed by a hydrogen atom, an alkyl group, a halogenoalkyl group, an alkenyl group, an alkynyl group, an aryl group, a heteroaryl group, a heterocyclic group, said alkyl, alkenyl, alkynyl, aryl, heteroaryl, or heterocyclic groups being optionally substituted;
  • $R_4$ and $R_5$, independently from one another, represent a hydrogen atom.

**13.** Method according to claim 1, **characterised in that** when n=1 and m=0,

- the organic compound is of formula (VII) with X representing an oxygen atom, and
- in the compound of formula (I), Z is selected from the group formed by $-NR_9R_{10}$, with

  • $R_9$ and $R_{10}$, taken together with the nitrogen atom to which they are bonded, form a heterocycle optionally substituted, and
  • $R_3$ is selected from the group formed by a hydrogen atom, an alkyl group, a halogenoalkyl group, an alkenyl group, an alkynyl group, an aryl group, a heteroaryl group, a heterocyclic group, said alkyl, alkenyl, alkynyl, aryl, heteroaryl, or heterocyclic groups being optionally substituted, and
  • $R_4$ and $R_5$, independently from one another, represent a hydrogen atom.

**14.** Method according to claim 1, **characterised in that** when n=m=1,

- the organic compound is of formula (VIII), and
- in the compound of formula (I), Z is Y and Y represents an oxygen atom with $R_3$, $R_4$ and $R_5$, independently from one another, are selected from the group formed by

◦ a hydrogen atom,
◦ an alkyl group comprising 1 to 12 carbon atoms selected from the group formed by methyl, ethyl, propyl, butyl, pentyl, hexyl, heptyl and their branched isomers, said alkyl group being optionally substituted by

▪ one or more hydroxy groups,
▪ one or more alkoxy groups of which the alkyl radical comprises 1 to 12 carbon atoms selected from the group formed by methoxy, ethoxy, propyloxy, butyloxy, pentyloxy, hexyloxy, heptyloxy and their branched isomers,
▪ one or more alkenyl groups comprising 2 to 16 carbon atoms selected from the group formed by ethylenyl, propylenyl, butenyl, pentenyl, hexenyl, heptenyl, octenyl and their branched isomers, said alkenyl groups being optionally substituted by an alkyl group selected from the group formed by ethyl, propyl, butyl, pentyl and their branched isomers,
▪ one or more halogenoalkyl groups selected from the group formed by $-CF_3$, $-CCl_3$, $-CHCl_2$, $-CClBrCF_3$,
▪ one or more siloxy groups selected from the group formed by trimethylsiloxy, triethysiloxy, butyldiphenylsiloxy,
▪ one or more aryl groups comprising 6 to 10 carbon atoms selected from the group formed by phenyl or benzyl optionally substituted by

• one or more halogen atoms selected from among fluorine, chlorine, bromine or iodine atoms,
• one or more alkoxy groups selected from the group formed by methoxy, ethoxy, propyloxy, butyloxy, pentyloxy and their branched isomers,
• one or more alkyl groups selected from the group formed by methyl, ethyl, propyl, butyl, pentyl, hexyl, heptyl and their branched isomers,
• one or more acyl groups $-C(O)R_{13}$, with $R_{13}$ representing an alkyl group comprising 1 to 12 carbon atoms selected from the group formed by methyl, ethyl, propyl, butyl, pentyl, hexyl, heptyl and their branched isomers, an aryl group selected from the group formed by phenyl, benzyl, an amino group selected from the group formed by dimethylamino, diethylamino, an alkoxy group selected from the group formed by methoxy, ethoxy, an aryloxy group selected from the group formed by benzyloxy, phenoxy.
• one or more carboxyl groups $-OC(O)R_{14}$, with $R_{14}$ representing a hydrogen atom, an alkyl group selected from the group formed by methyl, ethyl, propyl, butyl, pentyl, hexyl, heptyl and their branched isomers, an aryl group selected from the group formed by phenyl or benzyl,
• one or more nitrile groups (-CN),
• one or more nitro groups ($-NO_2$),
• one or more amino groups selected in the group formed by - $NH_2$, $-NHCH_3$, $-N(CH_3)_2$, $-N(CH_2CH_3)_2$, $-NH(CH_2CH_3)$,

◦ an alkenyl group comprising 2 to 16 carbon atoms selected from the group formed by ethylenyl, propylenyl, butenyl, pentenyl, hexenyl, heptenyl, octenyl and their branched isomers, said alkenyl groups being optionally substituted by

▪ one or more alkyl groups selected from the group formed by ethyl, propyl, butyl, pentyl and their branched isomers,
▪ one or more aryl groups selected from the phenyl or benzyl group, optionally substituted by

• one or more halogen atoms selected from among fluorine, chlorine, bromine or iodine atoms,
• one or more alkoxy groups selected from the group formed by methoxy, ethoxy, propyloxy, butyloxy, pentyloxy and their branched isomers,
• one or more alkyl groups selected from the group formed by methyl, ethyl, propyl, butyl, pentyl, hexyl, heptyl and their branched isomers,
• one or more thioalkoxy groups (-S-alkyl) with the alkyl radical being selected from the group formed by methyl, ethyl, propyl, butyl, pentyl, hexyl, heptyl and their branched isomers,
• one or more acyl groups $-C(O)R_{13}$, with $R_{13}$ representing an alkyl group comprising 1 to 12 carbon atoms selected from the group formed by methyl, ethyl, propyl, butyl, pentyl, hexyl, heptyl and their branched isomers, an aryl group selected from the group formed by phenyl, benzyl, an amino group selected from the group formed by dimethylamino, diethylamino, an alkoxy group selected from the group formed by methoxy, ethoxy, an aryloxy group selected from the group formed by

benzyloxy, phenoxy,
• one or more carboxyl groups $-OC(O)R_{14}$, with $R_{14}$ representing a hydrogen atom, an alkyl group selected from the group formed by methyl, ethyl, propyl, butyl, pentyl, hexyl, heptyl and their branched isomers, an aryl group selected from the group formed by phenyl, benzyl,
• one or more nitrile groups (-CN),
• one or more nitro groups ($-NO_2$),
• one or more amino groups selected from the group formed by - $NH_2$, $-NHCH_3$, $-N(CH_3)_2$, $-N(CH_2CH_3)_2$, $-NH(CH_2CH_3)$,

◦ an acyl group $-C(O)R_{13}$, with $R_{13}$ being an alkyl group comprising 1 to 12 carbon atoms selected from the group formed by methyl, ethyl, propyl, butyl, pentyl, hexyl, heptyl and their branched isomers,
◦ an aryloxy group of which the aryl radical comprises 6 to 10 carbon atoms selected from the group formed by phenoxy or benzyloxy,
◦ a halogenoalkyl group selected from the group formed by $-CF_3$, $-CCl_3$, $-CHCl_2$, $-CClBrCF_3$,
◦ an aryl group comprising 6 to 10 carbon atoms selected from the group formed by phenyl or benzyl optionally substituted by

▪ one or more halogen atoms selected from among fluorine, chlorine, bromine or iodine atoms,
▪ one or more alkoxy groups selected from the group formed by methoxy, ethoxy, propyloxy, butyloxy, pentyloxy and their branched isomers,
▪ one or more alkyl groups selected from the group formed by methyl, ethyl, propyl, butyl, pentyl, hexyl, heptyl and their branched isomers,
▪ one or more thioalkoxy groups (-S-alkyl) with the alkyl radical being selected from the group formed by methyl, ethyl, propyl, butyl, pentyl, hexyl, heptyl and their branched isomers,
▪ one or more acyl groups $-C(O)R_{13}$, with $R_{13}$ representing an alkyl group comprising 1 to 12 carbon atoms selected from the group formed by methyl, ethyl, propyl, butyl, pentyl, hexyl, heptyl and their branched isomers,
▪ one or more carboxyl groups $-OC(O)R_{14}$, with $R_{14}$ representing a hydrogen atom or an alkyl group selected from the group formed by methyl, ethyl, propyl, butyl, pentyl, hexyl, heptyl and their branched isomers,
▪ one or more nitrile groups (-CN),
▪ one or more nitro groups ($-NO_2$),
▪ one or more amino groups selected from the group formed by - $NH_2$, $-NHCH_3$, $-N(CH_3)_2$, $-N(CH_2CH_3)_2$, $-NH(CH_2CH_3)$,

◦ a heteroaryl group comprising 5 to 12 members of which at least 2 carbon atoms, and at least one heteroatom selected from among nitrogen, oxygen or sulphur, said heteroaryl group being selected from the group formed by furyl, thienyl, pyrrolyl, pyridyl, imidazolyl, thiazolyl.

**15.** Method according to claim 1, **characterised in that** when n=m=1,

- the organic compound is of formula (VIII), and
- in the compound of formula (I), Z is Y and Y represents an oxygen atom with $R_3$, $R_4$ and $R_5$ together with the carbon atom to which they are bonded, form an aryl comprising 6 to 10 carbon atoms selected from the group formed by phenyl or benzyl optionally substituted by

• one or more halogen atoms selected from among the fluorine, chlorine, bromine or iodine atoms,
• one or more alkoxy groups selected from the group formed by methoxy, ethoxy, propyloxy, butyloxy, pentyloxy and their branched isomers,
• one or more aryloxy groups selected from among phenoxy and benzyloxy,
• one or more alkyl groups selected from the group formed by methyl, ethyl, propyl, butyl, pentyl, hexyl, heptyl and their branched isomers,
• one or more thioalkoxy groups (-S-alkyl) with the alkyl radical being selected from the group formed by methyl, ethyl, propyl, butyl, pentyl, hexyl, heptyl and their branched isomers,
• one or more acyl groups $-C(O)R_{13}$, with $R_{13}$ representing an alkyl group comprising 1 to 12 carbon atoms selected from the group formed by methyl, ethyl, propyl, butyl, pentyl, hexyl, heptyl and their branched isomers, an aryl group selected from the group formed by phenyl, benzyl, an amino group selected from the group formed by dimethylamino, diethylamino, an alkoxy group selected from the group formed by

methoxy, ethoxy, an aryloxy group selected from the group formed by benzyloxy, phenoxy,

- one or more carboxyl groups $-OC(O)R_{14}$, with $R_{14}$ representing a hydrogen atom or an alkyl group selected from the group formed by methyl, ethyl, propyl, butyl, pentyl, hexyl, heptyl and their branched isomers,
- one or more nitrile groups (-CN),
- one or more nitro groups ($-NO_2$),
- one or more amino groups selected from the group formed by - $NH_2$, $-NHCH_3$, $-N(CH_3)_2$, $-N(CH_2CH_3)_2$, $-NH(CH_2CH_3)$.

**16.** Method according to claim 1, **characterised in that** when n=m=1,

- the organic compound is of formula (VIII), and
- in the compound of formula (I), Z is Y and Y represents an oxygen atom, with

  • $R_5$ representing a hydrogen atom, and
  • $R_3$ and $R_4$ together with the carbon atom to which they are bonded, form a mono- or polycyclic alkyl comprising 3 to 20 carbon atoms selected from the group formed cyclopropyl, cyclobutyl, cyclopentyl, cyclohexyl, cycloheptyl, cyclooctyl, bicyclo[2,1,1] hexyl, bicyclo[2,2,1] heptyl, 2-adamantyl, said mono- or polycyclic alkyl group being optionally substituted by

    ◦ one or more hydroxy groups,
    ◦ one or more alkoxy groups of which the alkyl radical comprises 1 to 12 carbon atoms selected from the group formed by methoxy, ethoxy, propyloxy, butyloxy, pentyloxy, hexyloxy, heptyloxy and their branched isomers,
    ◦ one or more alkenyl groups comprising 2 to 16 carbon atoms selected from the group formed by ethylenyl, propylenyl, butenyl, pentenyl, hexenyl, heptenyl, octenyl and their branched isomers, said alkenyl groups being optionally substituted by an alkyl group selected from the group formed by ethyl, propyl, butyl, pentyl and their branched isomers,
    ◦ one or more halogenoalkyl groups selected from the group formed by $-CF_3$, $-CCl_3$, $-CHCl_2$, $-CClBrCF_3$,
    ◦ one or more siloxy groups selected from the group formed by trimethylsiloxy, triethysiloxy, butyldiphenylsiloxy,
    ◦ one or more aryl groups comprising 6 to 10 carbon atoms selected from the group formed by phenyl or benzyl.

**17.** Method according to claim 1, **characterised in that** when n=m=1,

- the organic compound is of formula (VIII), and
- in the compound of formula (I), Z is Y and Y represents an oxygen atom, with

  • $R_5$ representing a hydrogen atom, and
  • $R_3$ and $R_4$ together with the carbon atom to which they are bonded, form a cyclic alkenyl comprising 3 to 20 carbon atoms and at least one double bond selected from the group formed by cyclopentenyl, cyclohexenyl, 2,3,4,7,8,9,11,12,14,15,16,17-dodecahydro-1H-cyclopenta[a]phenanthrenyl, or
  • $R_3$, $R_4$ and $R_5$ together with the carbon atom to which they are bonded, form a cyclic alkenyl comprising 3 to 20 carbon atoms and at least one double bond selected from the group formed by cyclopentenyl, cyclohexenyl,

said cyclic alkenyl group being optionally substituted by

  ◦ one or more halogen atoms selected from among fluorine, chlorine, bromine or iodine atoms,
  ◦ one or more alkoxy groups selected from the group formed by methoxy, ethoxy, propyloxy, butyloxy, pentyloxy and their branched isomers,
  ◦ one or more aryloxy groups selected from among phenoxy and benzyloxy,
  ◦ one or more alkyl groups selected from the group formed by methyl, ethyl, propyl, butyl, pentyl, hexyl, heptyl and their branched isomers,
  ◦ one or more thioalkoxy groups (-S-alkyl) with the alkyl radical being selected from the group formed by methyl, ethyl, propyl, butyl, pentyl, hexyl, heptyl and their branched isomers,
  ◦ one or more acyl groups $-C(O)R_{13}$, with $R_{13}$ representing an alkyl group comprising 1 to 12 carbon atoms selected from the group formed by methyl, ethyl, propyl, butyl, pentyl, hexyl, heptyl and their branched

isomers,
◦ one or more carboxyl groups -OC(O)$R_{14}$, with $R_{14}$ representing a hydrogen atom or an alkyl group selected from the group formed by methyl, ethyl, propyl, butyl, pentyl, hexyl, heptyl and their branched isomers,
◦ one or more nitrile groups (-CN),
◦ one or more nitro groups (-$NO_2$),
◦ one or more amino groups selected from the group formed by - $NH_2$, -$NHCH_3$, -$N(CH_3)_2$, -$N(CH_2CH_3)_2$, -$NH(CH_2CH_3)$.

**18.** Method according to claim 1, **characterised in that** when n=m=1,

- the organic compound is of formula (VIII), and
- in the compound of formula (I), Z is Y and Y represents a sulphur atom, with $R_3$, $R_4$ and $R_5$ together with the carbon atom to which they are bonded, form an aryl comprising 6 to 10 carbon atoms selected from the group formed by phenyl or benzyl optionally substituted by

◦ one or more halogen atoms selected from among fluorine, chlorine, bromine or iodine atoms,
◦ one or more alkoxy groups selected from the group formed by methoxy, ethoxy, propyloxy, butyloxy, pentyloxy and their branched isomers,
◦ one or more aryloxy groups selected from among phenoxy and benzyloxy,
◦ one or more alkyl groups selected from the group formed by methyl, ethyl, propyl, butyl, pentyl, hexyl, heptyl and their branched isomers,
◦ one or more thioalkoxy groups (-S-alkyl) with the alkyl radical being selected from the group formed by methyl, ethyl, propyl, butyl, pentyl, hexyl, heptyl and their branched isomers,
◦ one or more acyl groups -C(O)$R_{13}$, with $R_{13}$ representing an alkyl group comprising 1 to 12 carbon atoms selected from the group formed by methyl, ethyl, propyl, butyl, pentyl, hexyl, heptyl and their branched isomers,
◦ one or more carboxyl groups -OC(O)$R_{14}$, with $R_{14}$ representing a hydrogen atom or an alkyl group selected from the group formed by methyl, ethyl, propyl, butyl, pentyl, hexyl, heptyl and their branched isomers,
◦ one or more nitrile groups (-CN),
◦ one or more nitro groups (-$NO_2$),
◦ one or more amino groups selected from the group formed by - $NH_2$, -$NHCH_3$, -$N(CH_3)_2$, -$N(CH_2CH_3)_2$, -$NH(CH_2CH_3)$.

**19.** Method according to any one of claims 1 to 18, **characterised in that** in the compound of formula (I) and the silylated formiate of formula (II),

- $R_0$, $R_1$ and $R_2$, independently from one another, are selected from the group formed by an alkoxy group of which the alkyl group comprises 1 to 12 carbon atoms, an alkyl group comprising 1 to 20 carbon atoms, an aryl group comprising 6 to 20 carbon atoms, or an aryloxy group of which the aryl group comprises between 6 to 20 carbon atoms, said alkyl, aryl, alkoxy and aryloxy groups being optionally substituted.

1. Préparation du silicium métal par réduction de la silice

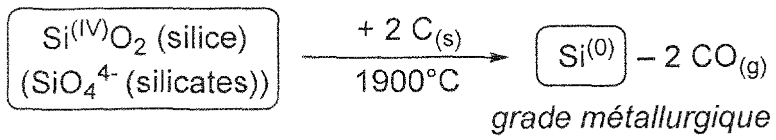


2. Oxydation du silicium métal par le chlorométhane ou HCl

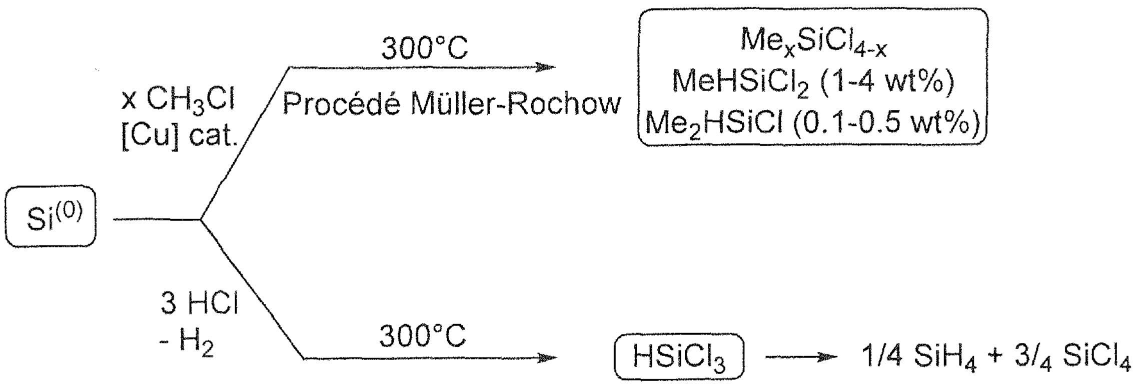


3. Fonctionnalisation du trichlorosilane

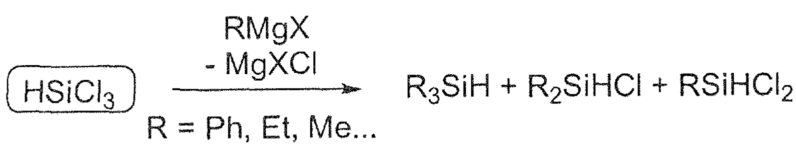


**Figure 1**

1. Synthèse d'hydrosilanes par réduction et oxydation du silicium :

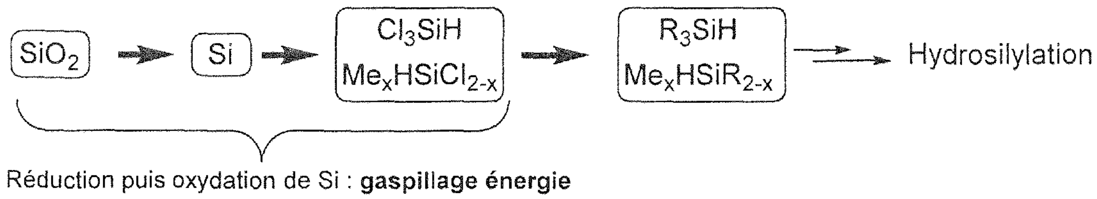


2. Synthèse redox neutre d'hydrosilanes :

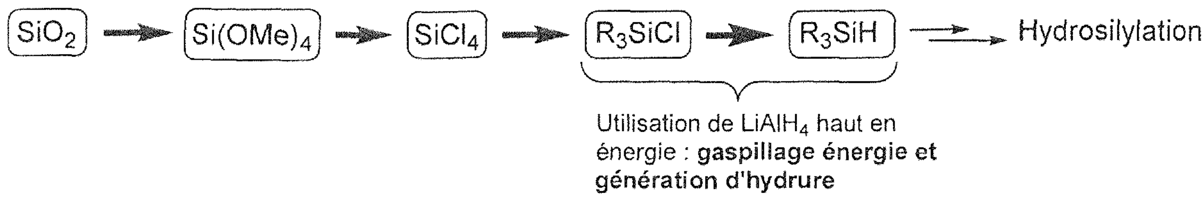


**Figure 2**

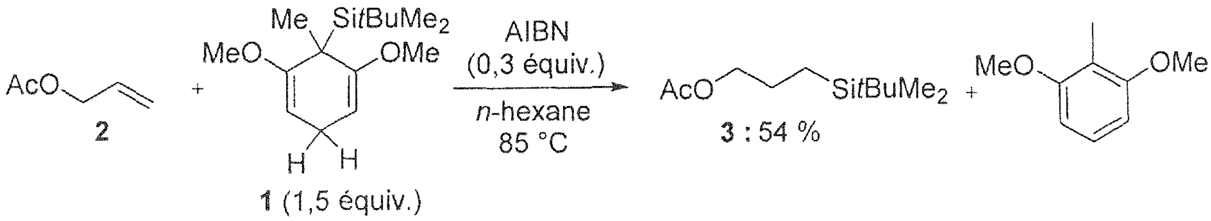
2
1 (1,5 équiv.)
AIBN
(0,3 équiv.)
n-hexane
85 °C
3 : 54 %

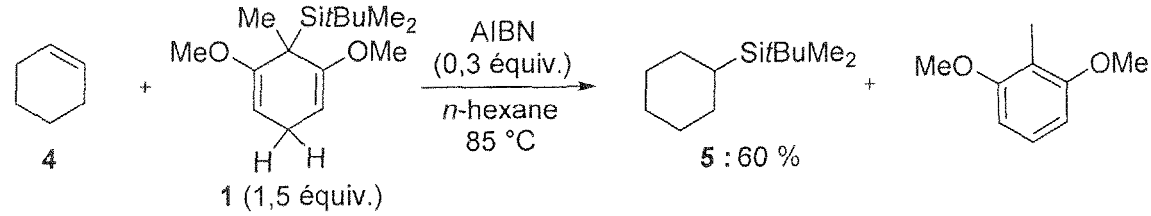
4
1 (1,5 équiv.)
AIBN
(0,3 équiv.)
n-hexane
85 °C
5 : 60 %

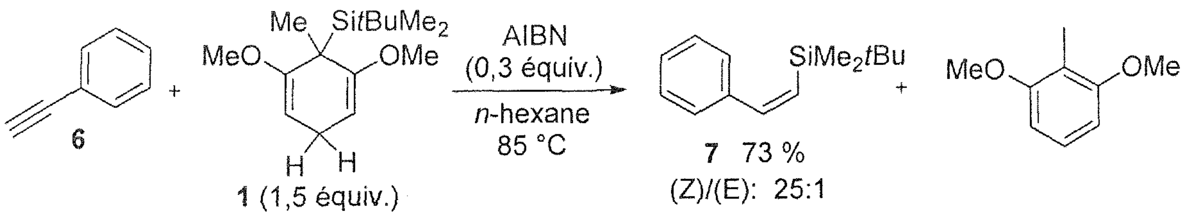
6
1 (1,5 équiv.)
AIBN
(0,3 équiv.)
n-hexane
85 °C
7 73 %
(Z)/(E): 25:1

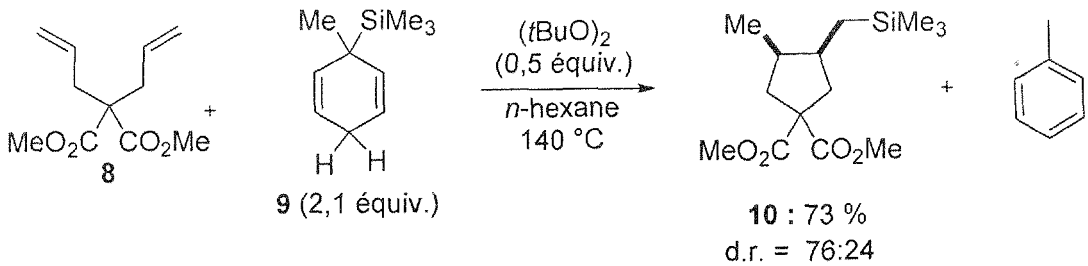
8
9 (2,1 équiv.)
(tBuO)2
(0,5 équiv.)
n-hexane
140 °C
10 : 73 %
d.r. = 76:24

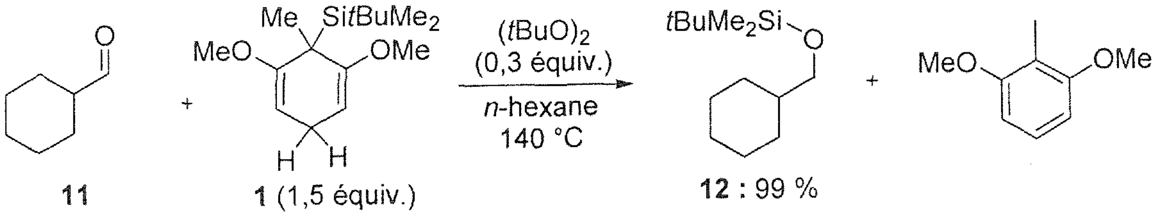
11
1 (1,5 équiv.)
(tBuO)2
(0,3 équiv.)
n-hexane
140 °C
12 : 99 %

**Figure 3**

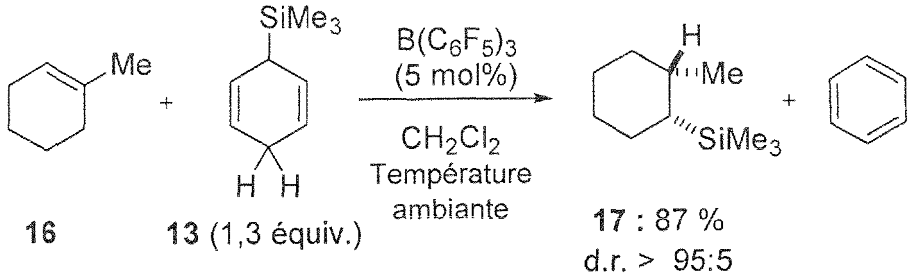


16 13 (1,3 équiv.) 17 : 87 %
d.r. > 95:5

**Figure 4**

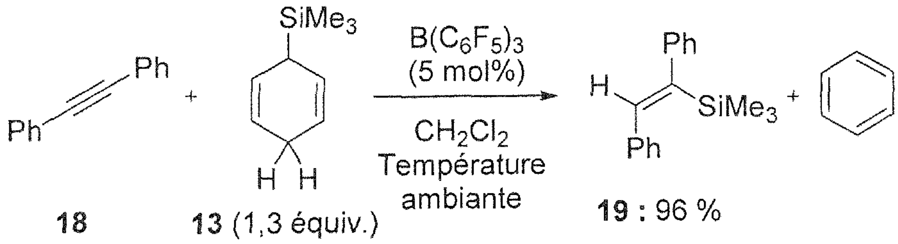


18 13 (1,3 équiv.) 19 : 96 %

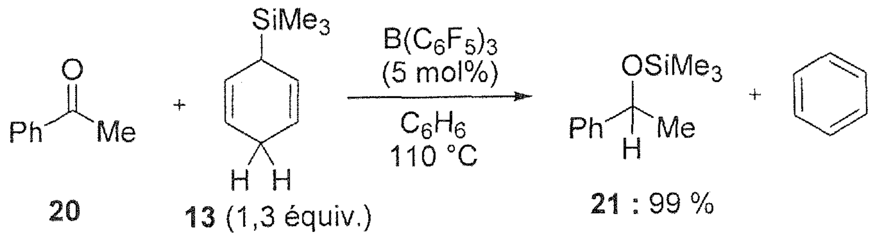


20 13 (1,3 équiv.) 21 : 99 %

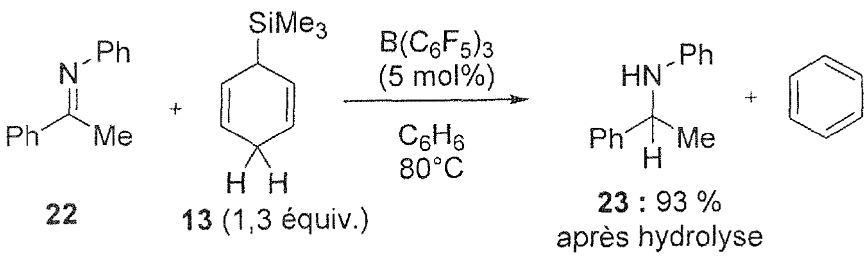


22 13 (1,3 équiv.) 23 : 93 %
après hydrolyse

**Figure 5**

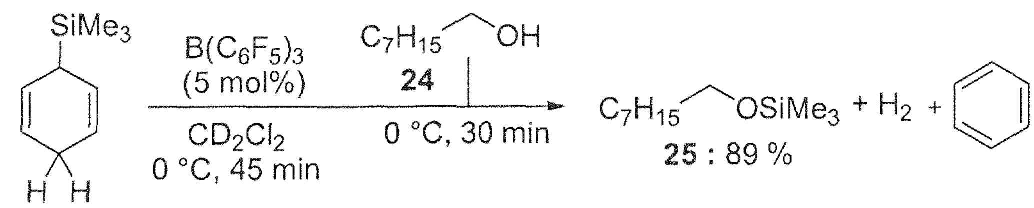


13 (1,1 équiv.)

Figure 6

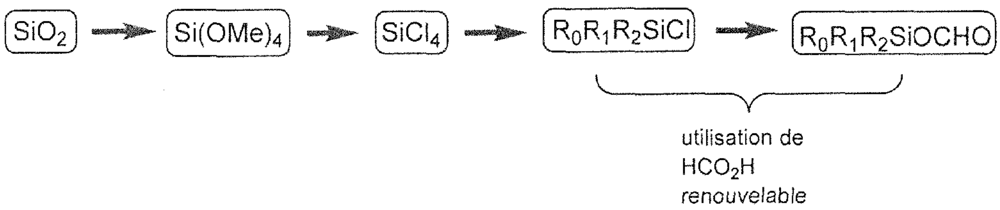


Figure 7

Réaction d'hydrosilylation

cétones et aldéhydes :

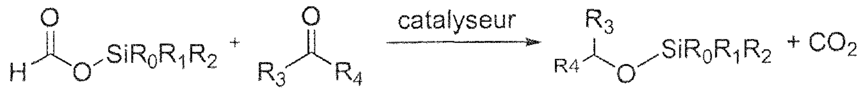


imines:

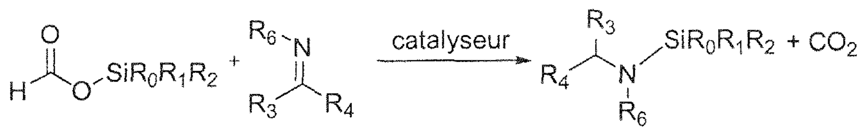


esters:

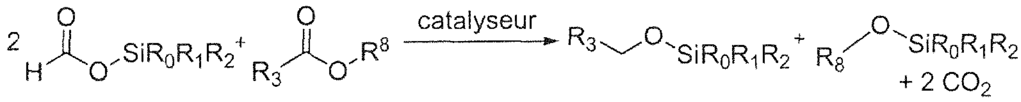


acides carboxyliques :

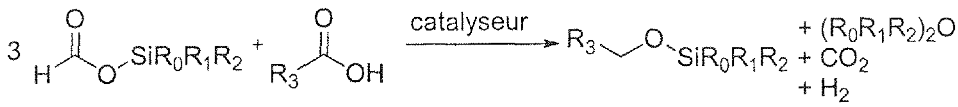


amides :

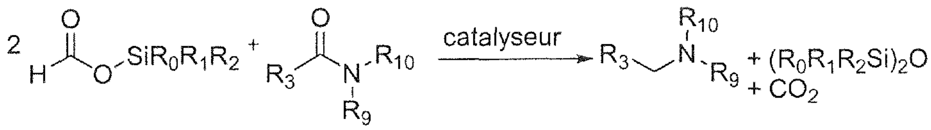


nitriles :

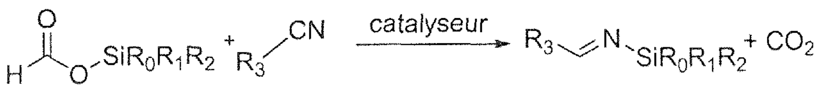


alcènes :

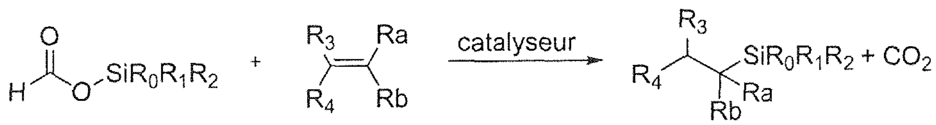


alcynes :

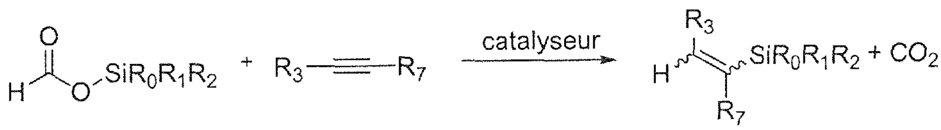


Couplage déshydrogénant

alcools :

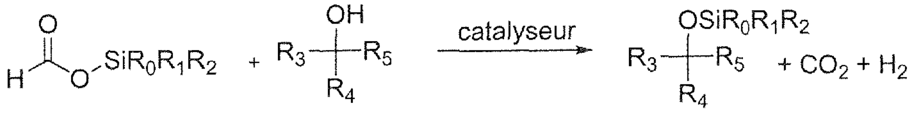


amines :

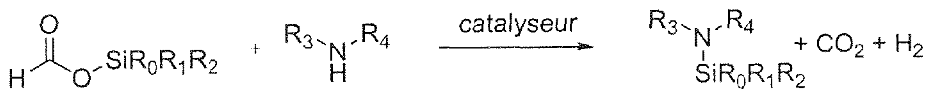


Figure 8

**Réaction d'hydrosilylation**

amides primaires :

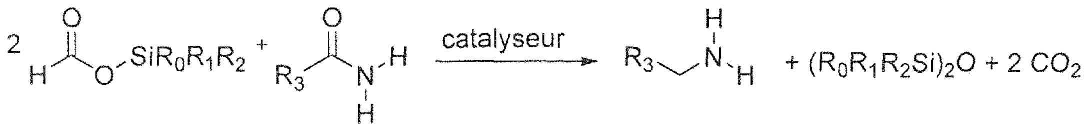


amides secondaires :

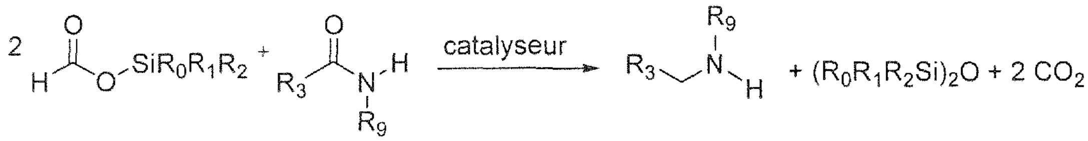


amides tertiaires :

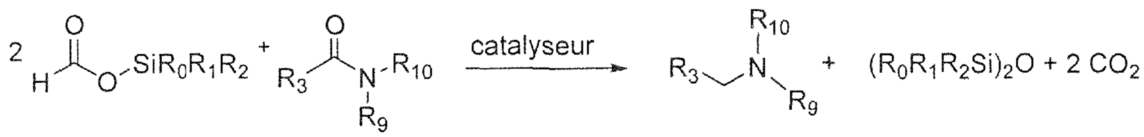


**Réaction d'hydrosilylation et de couplage déshydrogénant**

amides primaires :

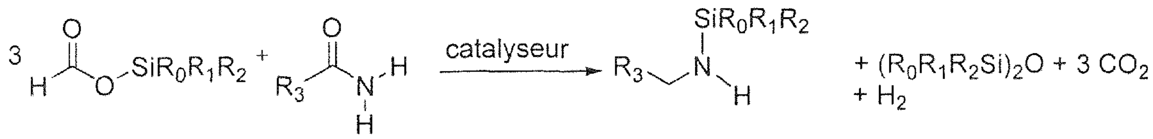


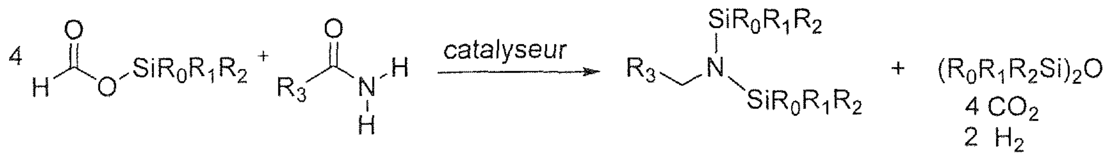


amides secondaires :

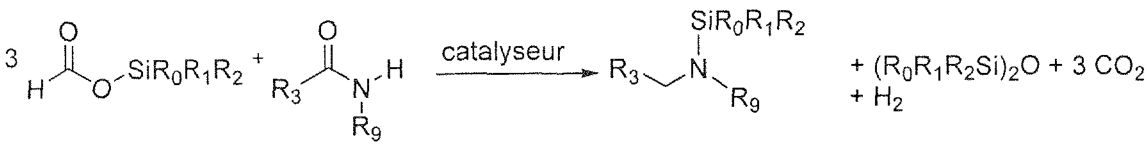


**Figure 9**

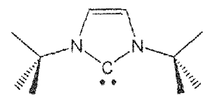
ItBu

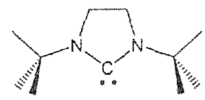
s-ItBu

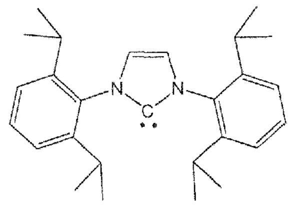
IPr

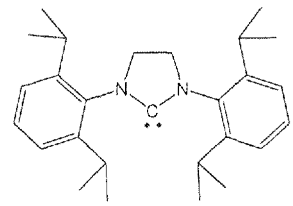
s-IPr

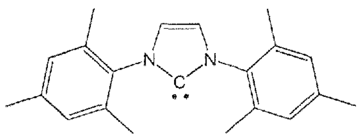
IMes

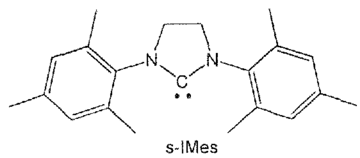
s-IMes

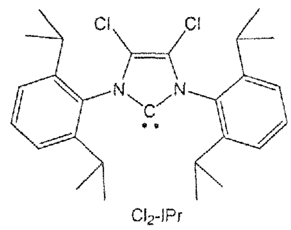
$Cl_2$-IPr

**Figure 10**

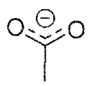
ligand OAc

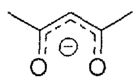
ligand acac

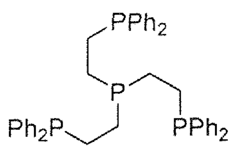
$PP_3$

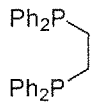
dppe

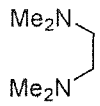
TMEDA

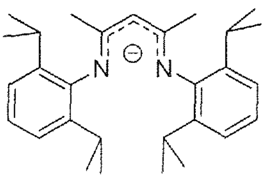
ligand BDI

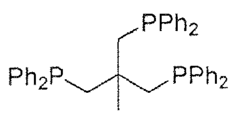
triphos

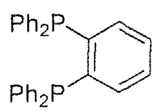
dppb

**Figure 11**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2015036309 A

### Littérature non-brevet citée dans la description


- **L. RÖSCH ; P. JOHN ; R. REITMEIER.** Ullmann's Encyclopedia of Industrial Chemistry. Wiley-VCH Verlag GmbH & Co. KGaA, 2000
- **A. BOUDIN ; G. CERVEAU ; C. CHUIT ; R. J. P. CORRIU ; C. REYE.** *Organometallics,* 1988, vol. 7, 1165-1171
- **R. M. LAINE ; K. Y. BLOHOWIAK ; T. R. ROBINSON ; M. L. HOPPE ; P. NARDI ; J. KAMPF ; J. UHM.** *Nature,* 1991, vol. 353, 642-644
- **L. N. LEWIS ; F. J. SCHATTENMANN ; T. M. JORDAN ; J. C. CARNAHAN ; W. P. FLANAGAN ; R. J. WROCZYNSKI ; J. P. LEMMON ; J. M. ANOSTARIO ; M. A. OTHON.** *Inorganic Chemistry,* 2002, vol. 41, 2608-2615
- **J. M. ROBERTS ; D. V. ELDRED ; D. E. KATSOULIS.** *Industrial & Engineering Chemistry Research,* 2016, vol. 55, 1813-1818
- **H. GILMAN ; R. K. INGHAM ; A. G. SMITH.** *The Journal of Organic Chemistry,* 1953, vol. 18, 1743-1749
- **M. OESTREICH.** *Angewandte Chemie International Edition,* 2015, vol. 55 (2), 494-499
- **S. AMREIN ; A. TIMMERMANN ; A. STUDER.** *Organic Letters,* 2001, vol. 3, 2357-2360
- **S. AMREIN ; A. STUDER.** *Helvetica Chimica Acta,* 2002, vol. 85, 3559-3574
- **A. SIMONNEAU ; M. OESTREICH.** *Angewandte Chemie Int. Ed.,* 2013, vol. 52, 11905-11907
- **A. SIMONNEAU ; M. OESTREICH.** *Nature chemistry,* 2015, vol. 7, 816-822
- **OESTREICH.** *Angewandte Chemie Int. Ed.,* 2013, vol. 52, 11905-11907
- **S. KEESS ; A. SIMONNEAU ; M. OESTREICH.** *Organometallics,* 2015, vol. 34, 790-799
- **A. SIMONNEAU ; J. FRIEBEL ; M. OESTREICH.** *European Journal of Organic Chemistry,* 2014, vol. 2014, 2077-2083
- **A. S. AGARWAL ; Y. ZHAI ; D. HILL ; N. SRIDHAR.** *ChemSusChem,* 2011, vol. 4, 1301-1310
- **M. OESTREICH.** *Angewandte Chemie Int. Ed.,* 2013, vol. 52, 11905-11907
- **M. OESTREICH.** *European Journal of Organic Chemistry,* 2014, vol. 2014, 2077-2083
- **F. A. LEBLANC ; W. E. PIERS ; M. PARVEZ.** *Angew. Chem. Int. Ed.,* 2014, vol. 53, 789-792
- **Y. ETIENNE ; C. R. HEBD.** *Seances Acad. Sci.,* 1952, vol. 235, 966-968